(19) Europäisches Patentamt
European Patent Office
Office européen des brevets

(11) **EP 2 723 700 B1**

(12) **EUROPÄISCHE PATENTSCHRIFT**

(45) Veröffentlichungstag und Bekanntmachung des Hinweises auf die Patenterteilung:
**16.12.2020 Patentblatt 2020/51**

(21) Anmeldenummer: **12712887.4**

(22) Anmeldetag: **28.03.2012**

(51) Int Cl.:
***C06B 21/00*** *(2006.01)*    ***C06B 45/00*** *(2006.01)*
***C06B 45/22*** *(2006.01)*

(86) Internationale Anmeldenummer:
**PCT/CH2012/000069**

(87) Internationale Veröffentlichungsnummer:
**WO 2012/174669 (27.12.2012 Gazette 2012/52)**

(54) **VERWENDUNG EINES FESTSTOFFS ZUR HERSTELLUNG EINES TREIBLADUNGSPULVERS, VERFAHREN ZUR HERSTELLUNG EINES TREIBLADUNGSPULVERS UND TREIBLADUNGSPULVER**

USE OF A SOLID FOR THE PRODUCTION OF A PROPELLANT POWDER, PROCESS FOR MAKING A PROPELLANT POWDER AND PROPELLANT POWDER

UTILISATION D'UNE MATIÈRE SOLIDE POUR LA FABRICATION D'UNE POUDRE DE CHARGE PROPULSIVE, PROCÉDÉ POUR LA FABRICATION D'UNE POUDRE DE CHARGE PROPULSIVE ET POUDRE DE CHARGE PROPULSIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2011 CH 10472011**

(43) Veröffentlichungstag der Anmeldung:
**30.04.2014 Patentblatt 2014/18**

(73) Patentinhaber: **Nitrochemie Aschau GmbH**
**84544 Aschau am Inn (DE)**

(72) Erfinder:
• **VOGELSANGER, Beat**
**CH-3604 Thun (CH)**

• **OSSOLA, Bruno**
**CH-3705 Faulensee (CH)**
• **HUBER, Alexander**
**83109 Grosskarolinenfeld (DE)**
• **WAGNER, Christian**
**81243 München (DE)**
• **HAMPEL, Oliver**
**84478 Waldkraiburg (DE)**

(74) Vertreter: **Keller Schneider**
**Patent- und Markenanwälte AG (Bern)**
**Eigerstrasse 2**
**Postfach**
**3000 Bern 14 (CH)**

(56) Entgegenhaltungen:
**EP-A1- 1 241 151    EP-B1- 1 241 152**

**Beschreibung**

**Technisches Gebiet**

Die Erfindung betrifft die Verwendung eines Feststoffs zur Herstellung eines Treibladungspulvers, insbesondere für Mittel- und Grosskaliber, in einem Verfahren, bei welchem der Feststoff zusammen mit einer Flüssigkeit in einem Mischungs- und Trocknungsverfahren in die Kanäle eines Grünkorns eingearbeitet und dort zu einem Zapfen verfestigt wird, wobei der Feststoff eine Substanz ist, deren Schmelzpunkt mindestens 10 °C, insbesondere 20 °C oberhalb einer maximalen Einsatztemperatur des Treibladungspulvers liegt und die dem Grünkorn gegenüber inert ist. Weiter betrifft die Erfindung ein Verfahren zur Herstellung eines Treibladungspulvers und ein nach diesem Verfahren erhältliches Treibladungspulver.

**Stand der Technik**

Es ist ein bekanntes Problem, dass Treibladungspulver je nach Anwendungstemperatur ein unterschiedliches Abbrandverhalten zeigen. Eine ausgeprägte Temperaturabhängigkeit hat zur Folge, dass mit einem vorhandenen Waffensystem die Leistung nicht optimal ausgeschöpft werden kann. Es besteht daher das Bedürfnis, die Temperaturabhängigkeit eines Treibladungspulvers gezielt zu reduzieren, um mit bestehenden Waffensystemen bessere Leistungen zu erzielen (innenballistische Leistungssteigerung).

In der EP 0 290 718 A1 (Rheinmetall) ist erwähnt, dass es beim Graphitieren des Grünkorns zu unerklärlichen und nicht reproduzierbaren Veränderungen bzw. Verbesserungen des Temperaturverhaltens kommen kann. Dies wurde dem Eindringen von Graphit in die Löcher des Mehrlochpulvers und der Bildung von Verschlüssen zugeschrieben. Da zufällig auftretende Verbesserungen aber praktisch nicht nutzbar sind, wurde in der EP 0 290 718 A1 vorgeschlagen, die Öffnungen der Kanäle durch Quetschen des Querschnitts zu verschliessen, damit kein Graphit eindringen kann.

Eine Möglichkeit zur Steuerung des Temperaturverhaltens durch die Wahl der Korngeometrie ist aus der DE 25 20 882 C1 (Dynamit Nobel) bekannt. Es wird vorgeschlagen, bei einem 19x0.13 mm Mehrlochpulver mit einem Aussendurchmesser von 3.5 mm die Löcher unterschiedlich gross auszubilden, wobei ein Teil der Löcher unterhalb eines für die Flammenausbreitung kritischen Werts liegt. Dieses Grünkorn wird dann einer Oberflächenbehandlung unterzogen, indem es in einer Trommel zunächst mit 1 Gew.-% Alkohol besprüht und dann mit 1% eines Phthalates in 10%er alkoholischer Lösung behandelt wird. Am Ende wird 0.1 Gew.-% Graphit zum Polieren zugegeben. Bei einem anderen Ausführungsbeispiel wird das extrudierte Grünkorn mit 0.03 Gew.-% Graphit behandelt, um die Leitfähigkeit des frisch extrudierten Grünkorns zu erhöhen, und das Zusammenkleben der einzelnen Körner während der Trocknung zu vermeiden.

In der DE 25 20 882 C1 wird auf ein weiteres Konzept zur Steuerung des Temperaturverhaltens hingewiesen, nämlich auf die Verkapselung der Oberfläche des Pulverkorns durch Phlegmatisatoren. Aus der FR 1.300.941 (Etat Français) ist z. B. bekannt, die Oberfläche mit einem Phlegmatisator (Centralit I) zu beschichten und gleichzeitig die Kanäle frei zu halten durch geeignete Wahl von Innendurchmesser der Kanäle, Temperatur während der Behandlung, und Viskosität der verwendeten Substanzen. Dieser Ansatz ist wegen der hohen Menge an phlegmatisierendem Behandlungsmittel (2-5%) und der Anzündverzögerung nachteilig und hat unzureichende Sicherheit und Reproduzierbarkeit.

Das Verfahren gemäss US 3,506,505 (Dynamit Nobel) geht von einer Oberflächenbeschichtung mit einem Weichmacher (Centralit I) aus zur Stabilisierung des Pulvers und zur Beeinflussung des progressiven Abbrandes. Um die Zündempfindlichkeit des NCbasierten Treibladungspulvers besser steuern zu können und die Klumpenbildung von Graphit zu verhindern, werden spezielle Metalloxide und Metallsulfide als Additive eingesetzt. Gemäss einem bevorzugten Ausführungsbeispiel wird bei der Oberflächenbehandlung eines Mehrlochpulvers 4% Kampfer, 0,1% Graphit und 1,0% Titanweiss eingesetzt, um die Zündverzögerung um etwa 30 Prozent zu reduzieren. Ein Einfluss der verwendeten Feststoffe auf das Temperaturverhalten bestand nicht.

Ein weiteres Beispiel zur Reduktion der Temperaturabhängigkeit ergibt sich aus der FR 1 205 433 (Recherche Chimiques). Ein extrudiertes Mehrlochpulver auf der Basis von Nitrocellulose (NC) wird einer Oberflächenbehandlung mit einem Moderator und einem Salpetersäure-Ester in Lösung unterworfen. Als Moderator werden z. B. 2 Gew.-% Centralit I oder 3 Gew.-% Kampfer verwendet. In den beiden Ausführungsbeispielen wird Centralit I bzw. Kampfer in Alkohol aufgelöst und mit hinzugefügtem Graphit aufgebracht. Danach wird das behandelte Pulver in bekannter Weise zum Entfernen des Lösungsmittels gewaschen und getrocknet. Es wird damit ein niedrigerer Temperaturkoeffizient erreicht. Die Temperaturcharakteristik wird also mit einer bestimmten Menge an Moderator eingestellt.

Ein weiteres Verfahren zur Reduktion der Temperaturabhängigkeit durch Einsatz von geeigneten Moderatoren bzw. Phlegmatisatoren ist in der EP 1 031 548 A1 (Nitrochemie Aschau) beschrieben. Es werden Phlegmatisatoren verwendet, die im Wesentlichen keine Migration aufweisen. Die Oberflächenbehandlung erfolgt durch Aufsprühen einer Lösung oder Emulsion des Phlegmatisators. Es sollen Substanzen wie z. B. nicht-energetische Polyester, energetische Polymere, Alkylnitratoethylnitramine, Dinitrodiazaalkane, Salpeter-Salpeter¬säure-Ester etc. zur Anwendung kommen. Gemäss Beispiel 3 wird ein einbasiges 7-Loch Treibladungspulver mit NC als Energieträger und Centralit I als Stabilisator in einer Emulsion von Nitroglycerin in Wasser in einer rotierenden Trommel bei 30 °C inkubiert. Die mikroskopischen Untersuchungen zeigten, dass auch die Innenlöcher durch den Phlegmatisator teilweise oder ganz gefüllt sind. Diese Behandlung wurde für 120 mm und 35 mm Munition getestet. Das Abbrandverhalten wird also durch den Moderator gesteuert. Aus der US 7,051,658 (Nitrochemie Wimmis, Nitrochemie Aschau) ist ein Mehrloch-Treibladungspulver (kurz Treibladungspulver) bekannt, welches ein temperaturunabhängiges Abbrandverhalten aufweist aufgrund von Zapfen mit einer temperaturabhängigen Mobilität. Die Zapfen sind hergestellt durch eine Oberflächenbehandlung mit einem Fest¬stoff (in einer Menge von 0.085 - 0.4 Gew.-% bezogen auf das noch unbehandelte Grünkorn) und einem Moderator in einer Menge von 0.05 - 0.5 Gew.-%. Das Treibladungs¬pulver ist für Mittel- und Grosskaliber bestimmt und besteht aus Körnern mit einem Durchmesser von mindestens 3 mm und mit durchgängigen Kanälen bzw. Löchern mit einem inneren Durchmesser von 0.02 - 0.5 mm.

Treibladungspulver dieser Art haben in der Praxis diverse Vorteile. Allerdings ist das Herstellungsverfahren relativ diffizil, und die Optimierung der Temperaturcharakteristik des Treibladungspulvers ist mit einigem Aufwand verbunden.

## Darstellung der Erfindung

Aufgabe der Erfindung ist es, ein dem eingangs genannten technischen Gebiet zugehörendes Verfahren zu schaffen, welches eine einfachere Einstellung der Temperaturcharakteristik erlaubt.

Die Lösung der Aufgabe ist durch die Merkmale der unabhängigen Ansprüche 1, 4 und 24 definiert.

Es wurde erkannt, dass die Temperaturabhängigkeit eines Treibladungspulvers mit der Wahl der zugegebenen Menge an Feststoff eingestellt werden kann. Der verwendete Feststoff ist eine Substanz, deren Schmelzpunkt mindestens 10 °C, insbesondere 20 °C oberhalb einer maximalen Einsatztemperatur des Treibladungspulvers liegt und die dem Grünkorn gegenüber inert ist. Im Gegensatz zu den bekannten Verfahren, in welchen mit Moderatoren gearbeitet wird, kann mit der erfindungsgemässen Einstellung des Temperaturverhaltens über die Menge an Feststoff eine Langzeitstabilität und Reproduzierbarkeit des Effekts erreicht werden, wie es bis jetzt in der Praxis nicht möglich war. Dies liegt unter anderem daran, dass der Feststoff inert ist, das heisst, dass er sich nicht verändert und nicht verlagert, da er nicht in die Matrix des Treibladungskorns diffundieren kann und auch kaum Reaktionen mit den Substanzen der Matrix eingeht.

Der Feststoff wird im Rahmen eines Mischverfahrens zusammen mit einer Flüssigkeit in die Kanäle eines Grünkorns eingearbeitet und dort zu einem Zapfen verfestigt. Die Pulverkörner des Grünkorns werden typischerweise durch Extrusion einer teigartigen Masse erzeugt. Bei der Extrusion werden die Pulverkörner mit einem oder mehreren Kanälen versehen. Die Korngrösse liegt typischerweise im Bereich von 3 - 15 mm (für Mittel- und Grosskaliber-Munition). Es können aber auch grössere Pulverkörner von z. B. bis 20 mm Durchmesser hergestellt werden. Bei nicht-kreisförmigen Querschnittsformen (z. B. bei rechteckigen Formen) tritt an die Stelle des Durchmessers eine minimale Querschnittsabmessung.

Der Feststoff wird bei sonst gleich bleibenden Verfahrensbedingungen innerhalb eines Einstellbereichs von >0 - 0.5 Gew.-% eingestellt, wobei eine grössere Feststoffmenge zu einer stärkeren Absenkung des Maximaldrucks im oberen Temperaturbereich und zu einer stärkeren Anhebung des Maximaldrucks in einem unteren Temperaturbereich des Anwendungstemperaturbereichs eingesetzt wird. ">0 Gew.-%" bedeutet im Prinzip jede messbare Menge. In der Praxis wird die untere Grenze mindestens 0.01 Gew.-% betragen.

An dieser Stelle sei darauf hingewiesen, dass in der Erfindungsbeschreibung die Gewichtsangaben in Prozent (Gew.-%) stets auf die Menge des Grünkorns bezogen sind, wenn nicht ausdrücklich etwas anderes gesagt ist, oder wenn der Bezug nicht auf andere Weise klar ersichtlich ist.

Der Erfindung liegt unter anderem die Erkenntnis zu Grunde, dass es für die Modifikation des Grünkorns einen kritischen Mengenbereich an Feststoff gibt. Wird die Feststoffmenge innerhalb dieses kritischen Bereichs (der im Rahmen der Erfindung als "Einstellbereich" bezeichnet wird) variiert, hat das eine starke Veränderung des Temperaturgradienten in der Anwendung zur Folge. Ausserhalb dieses Einstellbereichs besteht praktisch keine Abhängigkeit zwischen verwendeter Feststoffmenge und Temperaturgradient.

Hauptsächlich hängt der Einstellbereich von der Anzahl der Kanäle im Treibladungspulver ab. Bei Pulvern mit 19-Loch-Geometrie ist der Einstellbereich breiter als bei denjenigen mit 7-Loch-Geometrie. da mehr Feststoff benötigt wird, bis alle Lochkanäle gefüllt sind.

Der Einstellbereich hängt in einem gewissen Ausmass von der spezifischen Oberfläche des Treibladungspulvers ab. Bei Mittelkalibern mit 19-Loch-Geometrie (Korndurchmesser 3.5 - 7 mm, spezifische Oberfläche ab 500 $mm^2$/g) hat der Einstellbereich eine Breite im Bereich von 0.25 - 0.5 Gew.-% Feststoff. Bei Grosskalibern mit 19-Loch-Geometrie (Korndurchmesser ab 7 mm, spezifische Oberfläche bis 500 $mm^2$/g) liegt die Obergrenze des Einstellbereichs bei maximal 0.25 Gew.-%.

Bei Treibladungspulvern mit hoher spezifischer Oberfläche ist der Einstellbereich von der Absättigung der Oberfläche des Treibladungspulvers nicht sauber zu trennen. Es stellt sich ein breiter Übergangsbereich ein, in welchem die Oberfläche noch nicht gesättigt ist, aber bereits etwas Feststoff in die Kanäle geht.

Der Einstellbereich ist nicht gleich zu setzen mit der in einem konkreten Verfahren verwendeten Menge an Feststoff. Wenn die erfindungsgemässe Zapfenherstellung kombiniert mit der konventionellen Graphitierung der Oberfläche erfolgt, ist die erforderliche Graphitmenge betragsmässig "oberhalb" des Einstellbereichs. Wird die Zapfenherstellung in einem von der konventionellen Oberflächenbehandlung getrennten Verfahren (bzw. Verfahrensschritt) durchgeführt, dann ist die Oberfläche z. B. bereits mit Feststoff gesättigt, und es muss nur noch derjenige Teil an Feststoff zur Verfügung gestellt werden, der für die Zapfenbildung selbst erforderlich ist. In diesem Fall ist die im separaten Zapfenbildungsverfahren verwendete Menge innerhalb des erfindungsgemässen Einstellbereichs, da keine "Sockelmenge" an Feststoff für die übliche Oberflächenbeschichtung bereit gestellt werden muss.

Ein Aspekt der Erfindung besteht somit in einer neuartigen Verwendung eines Feststoffs zur Herstellung eines Treibladungspulvers, insbesondere für Mittel- und Grosskaliber, in einem Verfahren, bei welchem der Feststoff zusammen mit einer Flüssigkeit in einem Mischungs- und Trocknungsverfahren in die Kanäle eines Grünkorns eingearbeitet und dort zu einem Zapfen verfestigt wird. Der Feststoff ist eine Substanz, deren Schmelzpunkt mindestens 10 °C, insbesondere 20 °C oberhalb einer maximalen Einsatztemperatur bzw. Anwendungstemperatur des Treibladungspulvers liegt und dem Grünkorn gegenüber inert ist. Der Feststoff wird bei sonst gleich bleibenden Bedingungen des Verfahrens innerhalb eines Einstellbereichs von >0 - 0.5 Gew.-% bezogen auf das Gewicht des Grünkorns eingestellt. Das Einstellen im Rahmen der erfindungsgemässen Verwendung erfolgt dadurch, dass für eine stärkere Absenkung des Maximaldrucks in einem oberen Temperaturbereich und für eine stärkere Anhebung des Maximaldrucks in einem unteren Temperaturbereich des Anwendungstemperaturbereichs eine grössere Feststoffmenge eingesetzt wird. Mit anderen Worten: Um den Maximaldruck im oberen Temperaturbereich (z. B. zwischen 21 °C und der maximalen Anwendungstemperatur) abzusenken, wird im Verfahren zur Herstellung der erfindungsgemässen Zapfen bzw. Lochkanalverschlüsse mehr Feststoff zugegeben. Auch um den Maximaldruck im unteren Temperaturbereich anzustreben wird mehr Feststoff zugegeben.

Gemäss der Erfindung weist das Verfahren zur Herstellung eines Treibladungspulvers mit reduzierter Temperaturabhängigkeit innerhalb eines vorgegebenen Anwendungstemperaturbereichs folgende Verfahrensschritte a) bis h) auf:

a) Es wird ein quellfähiges Grünkorn mit einer vorgegebenen geometrischen Ausgestaltungsdimension und mindestens einem durchgehenden Kanal, der eine charakteristische Querabmessung von maximal 0.3 mm hat, und der an einer Aussenoberfläche des Grünkorns mündet, bereitgestellt.

Das Grünkorn kann z. B. aus Nitrocellulose (NC), Celluloseacetatbutyrat (CAB), Polyglycidylaciddiol (GAP) oder anderen Gel-bildenden Polymeren oder Kombinationen derartiger Substanzen bestehen. Es ist ganz allgemein ein-, zwei- und dreibasiges Grünkorn möglich, wobei im Rahmen der vorliegenden Erfindung die Anzahl energetischer Basissubstanzen nicht entscheidend ist. Wichtig ist, dass Kanäle vorhanden sind, welche eine durch Feststoffe verschliessbare Öffnung bzw. Mündung haben. Die Zahl der Kanäle hat einen Einfluss auf die Steuerbarkeit des Abbrandes des Grünkorns und soll in der Regel mindestens zwei, vorzugsweise mindestens 7 betragen. Je kleiner die geometrischen Dimensionen des Grünkorns sind, desto geringer wird in der Praxis die Anzahl der Kanäle sein, und umgekehrt. Ist die Anzahl der Kanäle zu gering, kann zu wenig Einfluss auf die Formfunktion genommen werden, d. h. der Abbrand kann nur unbedeutend beeinflusst werden. Das Grünkorn wird typischerweise durch Extrusion einer formbaren, gekneteten Masse hergestellt, wobei die Löcher (und deren Anzahl) durch die Ausgestaltung der Extrudermatrize erzeugt und definiert werden. Die Kanäle sollen nicht zu gross sein, sonst können sie durch die erfindungsgemässe Behandlung nicht verstopft werden. Es hat sich in Versuchen gezeigt, dass bei kreisrunden Querschnittsformen der Kanaldurchmesser nicht grösser als 0.3 mm sein soll, weil sonst der Vorgang des Verstopfens nicht mehr zuverlässig abläuft. Bei nicht runden sondern ovalen oder elliptischen Querschnitten kommt es auf die kleine Durchmesserachse an. Ebenso kommt es bei einem schlitzförmigen Kanal auf die kurze und nicht auf die lange Achse an. In diesem Sinn ist jeder Querschnittsform eine charakteristische Querabmessung zugeordnet.

b) Es wird weiter ein Feststoff bereitgestellt, der im Anwendungstemperaturbereich stabil und gegenüber dem Grünkorn inert ist, der eine Partikelgrösse aufweist, die das Einführen des Feststoffs in die durchgehenden Kanäle erlaubt, und der sich im Rahmen eines Mischungs- und Trocknungsverfahrens verdichten lässt.

Im Rahmen der Erfindung kann jede körnige Substanz als Feststoff verwendet werden, solange sie nicht im Lauf der Zeit in die durch das Grünkorn definierte Kornmatrix eindiffundiert oder mit ihr reagiert. Mit anderen Worten: Der Feststoff muss inert sein bezüglich der Rezeptur des Grünkorns. Der Anwendungstemperaturbereich ist ein durch die Anwendung des Treibladungspulvers vorgegebener Bereich. Dieser erstreckt sich typischerweise von -40 °C bis 80 °C. Selbstverständlich ist die Erfindung nicht auf diesen Temperaturbereich beschränkt. Auch heute gibt es schon MIL-Standards, die einen Anwendungstemperaturbereich bis 90 °C vorsehen. Im Einzelfall kann der Anwendungstemperaturbereich auch geringer sein (z. B. nur bis 70 °C oder 60 °C reichen bzw. erst oberhalb von -40 °C beginnen). Bevorzugt werden Substanzen gewählt, deren Schmelzpunkt mindestens 10 °C, insbesondere 20 °C oberhalb der maximalen Einsatztemperatur liegt.

Die Partikelgrösse des Feststoffs ist geringer als die charakteristische Querabmessung der Kanäle, so dass der Feststoff im Verlauf der erfindungsgemässen Behandlung in die Kanäle eindringen kann. Damit aus dem Feststoff Zapfen in den Kanalmündungen gebildet werden können, muss sich der pulverförmige Feststoff verdichten lassen. Das heisst, dass unter bestimmtem Druck das lose Material in eine gewünschte Form gebracht werden kann und in dieser Form verbleibt, auch wenn der äussere Druck weggenommen wird. Unter einem "bestimmten Druck" wird der Druck verstanden, der während der erfindungsgemässen Behandlung in der Mischapparatur auftritt. Er ist durch die Masse in der Mischapparatur definiert. Werden grosse Massen bzw. grosse Mengen verwendet, ist der (z. B. zuunterst in der Mischmasse) auftretende Druck, bzw. der Druck, der durch fallende Mengen erzeugt wird, höher als bei kleinen Massen. Bei Bedarf lässt sich in einem einfachen Pressversuch ermitteln, welcher Druck nötig ist, um eine Verdichtung des inerten pulverförmigen Feststoffs zu einem Formkörper zu erreichen, und ob somit der geprüfte Feststoff geeignet ist.

Der verwendete Feststoff sublimiert nicht und ist in seiner Wirkung nicht mit einem Moderator zu verwechseln (auch wenn sich mit Moderatoren Zapfen bilden lassen).

c) Es wird eine Flüssigkeit bereitgestellt, welche das Grünkorn quellen kann und welche am Ende der Herstellung des Treibladungspulvers entweder vollständig entfernt werden kann oder in homogener Verteilung im Treibladungspulver enthalten ist.

Die Flüssigkeit führt dazu, dass der ausreichend feinkörnige Feststoff (wie er unter b beschrieben ist) bei der erfindungsgemässen Behandlung in die Kanäle transportiert wird und dort unter dem angewendeten Druck der Pulvermasse verfestig werden kann. Während der Behandlung, wenn der Feststoff durch die Flüssigkeit benetzt ist, wird ein lokales Verkleben der Feststoffpartikel im Kanal unterstützt. Die Flüssigkeit kann ein Lösungsmittel (bzw. ein Gemisch aus mehreren Lösungsmitteln) sein aber auch ein Gemisch aus Moderator und Lösungsmittel. Das Lösungsmittel wird nach der erfindungsgemässen Mischungsbehandlung (oder am Ende der Mischungsbehandlung, siehe auch Verfahrensschritt d) vollständig entfernt (durch Abdampfen und/oder Trocknen). Wenn ein Teil der Flüssigkeit am Ende der Behandlung (bewusst) nicht entfernt wird (oder aufgrund ihrer Eigenschaften nicht entfernt werden kann), dann soll die verbleibende Flüssigkeit zumindest weitgehend homogen im Grünkorn (bzw. in der Matrix des Treibladungspulvers) verteilt sein, damit während der (typischerweise jahrelangen) Lagerung des Treibladungspulvers keine Änderung der Eigenschaften (wegen unerwünschter Diffusionsprozesse) stattfinden kann.

Der Moderator kann eine niedermolekulare, entweder flüssige oder, wenn er in einer niederviskosen Flüssigkeit löslich ist, eine feste Substanz sein.

Das Quellen des Grünkorns während der Behandlung und das anschliessende Entfernen bzw. Stabilisieren der Flüssigkeit führt dazu, dass der Feststoff in den Kanälen Zapfen mit definiertem und (statistisch) vorhersagbarem Temperaturverhalten bildet. Beim gequellten Grünkorn sind die Kanäle im Querschnitt leicht grösser als nach der Behandlung, wenn der Quelleffekt wieder vorbei ist. Unter "vollständig entfernt" wird im Rahmen der Erfindung ein Mass verstanden, das ausreicht, um über eine geforderte Lebensdauer von mehreren Jahren die durch die Behandlung eingestellte Temperaturcharakteristik des Treibladungspulvers beizubehalten.

Gut geeignet als Lösungsmittel sind niederviskose Flüssigkeiten mit hoher oder mit geringer Polarität. Der Siedepunkt der Flüssigkeit muss höher liegen als die Oberflächenbehandlungstemperatur. Trotzdem soll die Flüssigkeit eine genügend hohe Flüchtigkeit aufweisen, dass ein Verdunsten bei der Behandlungstemperatur in kurzer Zeit stattfinden kann (zwischen 5 und 60 Minuten). Die Flüssigkeit kann auch mit Hilfe von Druckreduktion oder mittels eines warmen Gasstroms entfernt werden. Für die Oberflächenbehandlung werden Mengen von 0.1% bis 5% Flüssigkeit (bezogen auf die Menge des Grünkorns) verwendet. Bevorzugt wird zwischen 0.5% und 2% Flüssigkeit eingesetzt. Enthält die Flüssigkeit einen Moderator, so soll der Moderator in dem Lösungsmittel (welches den anderen Teil der Flüssigkeit ausmacht) gelöst oder fein emulgiert sein. Die Menge an Flüssigkeit sollte in der Regel möglichst gering sein, das heisst, das Grünkorn soll nicht in der Flüssigkeit schwimmen.

Das verwendete Lösungsmittel wird so auf die Rezeptur des Grünkorns abgestimmt, dass es gut in das Grünkorn eindiffundieren kann. Es soll das Grünkorn aber nicht gelatinieren.

d) Die Flüssigkeit enthält nicht mehr als 0.5 Gew.-% (bezogen auf das Grünkorn) einer als Moderator dienenden, oligomeren oder polymeren Substanz. Ein sonstiger Teil der Flüssigkeit ist im Wesentlichen ein niederviskoses Lösungsmittel.

Der Moderator unterstützt das Verfestigen und Verkleben des Feststoffs während der Behandlung. Er wird während der Behandlung in der Mischapparatur zusammen mit dem Feststoff in die Kanäle des Grünkorns eingearbeitet und diffundiert letztendlich in die Matrix des Grünkorns hinein. Der grösste Teil des Moderators wird nach dem Trocknen nicht mehr in den Feststoffzapfen in den Kanälen sein, sondern mehr oder weniger gleichmässig in der Matrix des Grünkorns verteilt sein. Für die Abbrandcharakteristik spielt der Moderator keine entscheidende Rolle, da er nur in geringer Menge vorhanden ist. Anders als beim Stand der Technik ist der Moderator nach der Behandlung und Trocknung nicht in einer oberflächennahen Schicht oder direkt an der Oberfläche angereichert. Die Anreicherung an der Oberfläche und der damit verzögerte Abbrand wird durch Einsatz geringer Mengen Moderator und lange Trocknungszeiten verhindert. Zudem wird die obere Grenze von 0.5 Gew.-% deshalb gewählt, weil zu grosse Moderatormengen im Rahmen der Erfindung ein Nachteil sind, da sie zur Verschlechterung der Energiedichte führen. Auf die Verwendung eines Moderators kann auch verzichtet werden. Die Flüssigkeit wird dann nur durch das niederviskose Lösungsmittel gebildet.

e) Das Grünkorn wird mit der Flüssigkeit und dem Feststoff in einer Mischapparatur während einer vorgegebenen Zeitdauer behandelt.

In der Mischapparatur findet ein Umrühren bzw. Umwälzen der Verarbeitungsmasse statt. Die Teilmasse, welche jeweils von oben auf die übrige Masse fällt, führt zu einem Druck der Pulvermasse in der unten liegenden Masse und bewirkt so ein Eindringen des Feststoff-Flüssigkeitsgemisches in die Kanäle des Grünkorns und ein Verdichten und Verfestigen des in den Kanälen befindlichen Feststoffs. Die Behandlungsdauer hängt im Einzelfall von der Geometrie des Grünkorns und von der Konsistenz des Feststoff-Flüssigkeitsgemisches ab. Sie soll aber vorgegeben werden bzw. definiert sein, um sicherzustellen, dass die Steuerung der Temperaturabhängigkeit zuverlässig und vorhersehbar funktioniert. Die Mischapparatur kann z. B. eine rotierende Behandlungstrommel mit geeigneten Einbauten (Schikanen) zur Unterstützung des Mischprozesses sein.

f) Das behandelte Grünkorn wird getrocknet.

Der Trocknungsschritt hat zum Ziel, die Flüssigkeit, soweit sie flüchtig ist, zu entfernen und den Feststoff in den Kanälen zu einem festkörperartigen Zapfen zu verfestigen. Das Trocknen schliesst typischerweise eine längere (z. B. mindestens dreitägige) Lagerung unter kontrollierten Trocknungsbedingungen (z. B. erhöhte Temperatur) ein.

g) Zur Einstellung der Temperaturabhängigkeit des Treibladungspulvers wird die Menge an Feststoff innerhalb eines Einstellbereichs von >0 bis 0.5 Gew.-% eingestellt, wobei bei sonst gleich bleibenden Mengen eine grössere Feststoffmenge zu einer stärkeren Absenkung des Maximaldrucks im oberen Temperaturbereich und zu einer stärkeren Anhebung des Maximaldrucks in einem unteren Temperaturbereich des Anwendungstemperaturbereichs eingesetzt wird.

Es wurde gefunden, dass es einen sensiblen Bereich gibt, in welchem die Temperaturabhängigkeit des Maximaldrucks durch die verwendete Feststoffmenge eingestellt werden kann. Im Einstellbereich kann die Mobilität der beim Mischungs- und Trocknungsverfahren hergestellten verdichteten Zapfen in Abhängigkeit von der Anwendungstemperatur eingestellt werden. Dieser sensible Bereich wird im Rahmen der Erfindung als Einstellbereich bezeichnet. Graphitieren bedeutet in diesem Fall Absättigen der Oberfläche mit Graphit. Prinzipiell kann die Oberfläche auch mit einem anderen Feststoff abgesättigt werden. Allerdings verhindert Graphit eine elektrostatische Aufladung der Körner und ist deshalb bevorzugt. Das Graphitieren ist ein in der Praxis erforderlicher Vorgang, um die Oberfläche des Grünkorns zu glätten und elektrisch leitend zu machen. Die Menge an Graphit hängt von der spezifischen Oberfläche des Grünkorns ab. Die spezifische Oberfläche ist das Verhältnis zwischen der gesamten Oberfläche (inklusive der Kanäle) einer Anzahl (z. B. 100) einzelner Körner und dem Gewicht, das diese Körner einnehmen. Je kleiner die geometrischen Dimensionen des Grünkorns sind, desto grösser ist die spezifische Oberfläche. Je grösser die Anzahl der Kanäle ist (bei sonst gleicher Aussenabmessung des Korns), desto grösser ist die spezifische Oberfläche.

Der erfindungsgemässe Einstellbereich ist nicht mit dem Mengenbereich zu verwechseln, der für das konventionelle Graphitieren bekannt ist. Das Graphitieren als solches ist ein Oberflächenbehandlungsprozess, der nicht zur Zapfenbildung führt. Bei einer kombinierten Behandlung (Zapfenbildung + Graphitierung) wird gemäss der Erfindung in einem Mengenbereich gearbeitet, der sich aus der Graphitierungsmenge (z. B. maximal 0.05 Gew.-%) und aus der Zapfenbildungsmenge (z. B. zwischen 0.01 und 0.5 Gew.-%) ergibt. Das erfindungsgemässe Verfahren kann auf ein Grünkorn angewendet werden, das bereits graphitiert ist. In diesem Fall gibt der Einstellbereich die Menge an Feststoff vor, die im Rahmen der erfindungsgemässen Behandlung eingesetzt wird. Das Graphitieren kann aber auch gleichzeitig (kombiniert) mit der erfindungsgemässen Behandlung stattfinden. Dann ergibt sich die Menge an Feststoff aus der Summe der für das Graphitieren benötigten Menge Feststoff und der gewünschten Menge Feststoff zum Steuern der Temperaturabhängigkeit, wobei die gewünschte Menge innerhalb des Einstellbereichs >0 bis 0.5 Gew.-% zu liegen hat. Bei der kombinierten Behandlung ist festzuhalten, dass der verwendete Feststoff nicht zwingend aus Graphit bestehen muss. Es genügt, wenn die Oberflächenleitfähigkeit durch den verwendeten Feststoff (welcher nicht unbedingt Graphit sein muss) erhöht werden kann. Wenn zur Erhöhung der Oberflächenleitfähigkeit im Rahmen der kombinierten Behandlung auch Graphit verwendet wird, dann muss diese Menge an Graphit nicht zwingend der Menge entsprechen, die man in der Vergangenheit beim konventionellen Graphitieren verwendet hatte; sie kann auch niedriger sein und mit einer Menge eines anderen Feststoffs ergänzt werden. Der Feststoff kann im Rahmen der Erfindung auch ein Gemisch aus verschiedenen Substanzen sein (z. B. aus Graphit und Talkum).

Das erfindungsgemässe Verfahren hat zur Hauptsache den Vorteil, dass der Temperaturgradient des Treibladungspulvers einfach und zuverlässig eingestellt werden kann. Es gibt zwar eine Menge von Parametern, mit welchen man auf den Temperaturgradienten Einfluss nehmen kann. Keiner ist aber derart einfach und zuverlässig zu handhaben, wie die Variation der Feststoffmenge. Weil der Feststoff nicht in das Grünkorn eindiffundieren kann und kaum chemisch reagiert, wird durch eine Variation der Feststoffmenge das chemische System des Treibladungspulvers nicht verändert, sondern es wird nur die Zapfenmobilität variiert.

Unter der temperaturabhängigen Zapfenmobilität wird Folgendes verstanden: Beim Anzündvorgang des Treibladungspulvers verbleiben die Zapfen bei hoher Pulvertemperatur (und somit bei schneller Abbrandgeschwindigkeit) in den Lochkanälen. Es steht somit eine minimale Oberfläche für den Abbrand zur Verfügung. Bei tiefer Temperatur (mit langsamer Abbrandgeschwindigkeit) werden die Zapfen allesamt durch die Anzündschockwelle entfernt, und es steht eine maximale Oberfläche für den Abbrand zur Verfügung. Idealerweise ist das Produkt aus Abbrandgeschwindigkeit mal Oberfläche bei allen Beschusstemperaturen konstant, was einem temperaturunabhängigen Abbrandverhalten gleichkommt. Das erfindungsgemässe Treibladungspulver stellt also mit zunehmender Temperatur weniger Kanäle zur Verfügung.

Optional kann das erfindungsgemässe Verfahren zweistufig durchgeführt werden. In einer ersten Stufe wird das Grünkorn im Sinne einer Graphitierung, welche zur Erhöhung der Leitfähigkeit und zur Vermeidung des Zusammenklebens des Grünkorns dient, vorgängig mit Graphit beschichtet. Nach dieser Graphitierung wird das Grünkorn bereitgestellt für die zweite Verfahrensstufe, welche durch den oben beschriebenen Schritt e) gebildet ist. Diese Vorgehensweise erlaubt eine Trennung der Graphitierung von der erfindungsgemässen Oberflächenbehandlung zum Einstellen der Temperaturkurve bzw. der temperaturabhängigen Zapfenmobilität.

Es ist auch denkbar, dass eine Behandlung mit Graphit nach dem erfindungsgemässen Verfahrensschritt e) erfolgt. Das heisst, es wird zuerst die Temperaturabhängigkeit eingestellt und danach die Oberflächenleitfähigkeit erhöht.

Optional kann der Feststoff Graphit umfassen. Dabei entspricht die Menge an Feststoff der Summe aus der im Rahmen einer Graphitierung, welche zur Erhöhung der Leitfähigkeit und zur Vermeidung des Zusammenklebens des Grünkorns dient, erforderlichen Menge an Graphit plus der innerhalb des Einstellbereichs gewählten Menge an Feststoff. Dieser kombinierte Ablauf ist sehr effizient und wird in der Regel bevorzugt. Optional wird die Menge an Feststoff innerhalb eines Bereichs von plus/minus 20% bezogen auf die Optimal-Formel

$$M(\text{Feststoff}) = K\_opt \times F(\text{spezifische Oberfläche}) + \text{Offset}$$

gewählt. Dabei gilt Folgendes:

M(Feststoff) ist die Menge an Feststoff in Gew.-% bezogen auf das Gewicht des Grünkorns

F(spezifische Oberfläche) ist die spezifische Oberfläche des Grünkorns in Fläche pro Gewicht und

K\_opt = 0.0012 [g/mm$^2$]] ist der Faktor in Gewicht pro Fläche

und der Offset beträgt -0.14.

Der nach der obigen Formel berechnete Optimalwert für die Mindestmenge an Feststoff gibt im Prinzip an, welcher Anteil an Feststoff sich im kombinierten Verfahren primär auf der Oberfläche anlagert und nicht zur Steuerung des Temperaturkoeffizienten beiträgt. Dieser Optimalwert ist in der Praxis mit einer gewissen Ungenauigkeit behaftet. Abweichungen im Bereich von plus oder minus 20% sind immer noch als optimal zu betrachten.

Es kann auch ohne diesen Optimalwert gearbeitet werden, wobei sich die Leistung des Treibladungspulvers graduell verschlechtern kann. Entscheidend ist, dass im Einstellbereich gearbeitet wird, wo der Temperaturgradient auf eine Veränderung der Feststoff¬menge reagiert.

h) die Feststoffmenge wird in einem Schnittbereich der den unteren und oberen Temperaturkoeffizienten definierenden Temperaturgradientenkurven gewählt.

Der untere Temperaturkoeffizient ist durch das Verhältnis des Maximaldrucks p\_max(21 °C) bei 21 °C Anwendungstemperatur zu Maximaldruck p\_max(-40 °C) bei -40 °C definiert. In analoger Weise ist der obere Temperaturkoeffizient durch das Verhältnis des Maximaldrucks p\_max(63 °C) bei 63 °C Anwendungstemperatur zu Maximaldruck p\_max(21 °C) bei 21 °C gegeben. (Die angegebenen Temperaturwerte von -40 °C, 21 °C und 63 °C können auch anders gewählt werden. Wichtig ist in diesem Zusammenhang nur, dass die Maximaldruckwerte an oder nahe der unteren Grenze des Anwendungstemperaturbereichs und an oder nahe der oberen Grenze des Anwendungstemperaturbereichs ins Verhältnis gesetzt werden zu einem Maximaldruckwert in einem mittleren Bereich des Anwendungstemperaturbereichs.)

Der Schnittbereich der unteren und oberen Temperaturgradientenkurve ergibt einen sehr flachen Temperaturverlauf (also eine geringe Temperaturabhängigkeit des Abbrandes). Die Feststoffmenge muss nicht exakt im Schnittpunkt der beiden Temperaturgradientenkurven liegen. Es genügt, wenn der Feststoff innerhalb eines Mengenbereiches gewählt wird, der nicht mehr als 10% vom Schnittpunkt abweicht.

Der Moderator hilft bei der Anfangsverfestigung des Feststoffs in den Kanälen des Grünkorns. Dabei gibt es lösliche (und daher migrierende) und unlösliche (weil in geeigneter Weise fixierte) Moderatoren. Der Moderator soll in möglichst geringer Menge verwendet werden. Im Zapfen ist nach Abschluss des Herstellungsverfahrens praktisch kein Moderator mehr enthalten. Man verwendet z. B. nur 0.1 Gew.-% Moderator (bezogen auf das Grünkorn). Weil sich der nicht fixierte Moderator im Grünkorn verteilt, bleibt im Zapfen nur sehr wenig davon zurück. Der Zapfen besteht praktisch ausschliesslich aus Feststoff (mindestens 90 Gew.-%, insbesondere mindestens 95 Gew.-%) Im Rahmen der vorliegenden Ausführungsform sind zwei Typen von Moderatoren denkbar, nämlich ein löslicher Moderator ("Typ A") und ein fixierter Moderator ("Typ B"):

Als "Typ A"-Moderatoren werden niedermolekulare oligomere Substanzen verwendet, die sich im Lösungsmittel und im Treibladungspulver gut lösen. Solche Moderatoren lagern sich zwischen den Molekülen des Grünkorns (z. B. den NC-Molekülen) ein und helfen dadurch beim Quellen. Sie bringen in Verbindung mit dem Lösungsmittel (z. B. Alkohol) das Grünkorn zum Quellen. Zusätzlich bewirkt der Moderator ein gewisses Verkleben des pulverförmigen Feststoffs vor dem späteren Trocknen. Allerdings kann eine zu hohe Menge an Moderator auch zu einem Verkleben des Grünkorns führen. In der Regel soll die Menge an Moderator gering gewählt werden, um die ballistische Stabilität nicht zu verschlechtern. Bevorzugt ist die Moderatormenge in der Grössenordnung von 0.1 - 0.2 Gew.-% bezogen auf das Grünkorn. Die Moderatormenge sollte kleiner als 0.5 Gew.-% (bezogen auf das Grünkorn) sein.

Als "Typ B"-Moderatoren werden oligomere oder polymere Substanzen gewählt, die nicht löslich im Grünkorn sind, so dass keine Migration stattfindet. Ebenfalls kommen Substanzen in Frage, die vernetzt werden können.

Als Moderatoren können Substanzen verwendet werden, welche in der Treibladungspulver-Matrix nach der erfindungsgemässen Behandlung nicht merklich diffundieren können. Dies kann auf zwei Arten erreicht werden:
So kann man einerseits z. B. Moderatoren verwenden, die in der Grünkornmatrix gut löslich sind und die zwei oder mehr radikalisch polymerisierbare Gruppen tragen. Nach der Eindiffusion der Moderatoren werden diese polymerisiert. Das entstehende Netzwerk ist hochmolekular, unlöslich und mit der Pulvermatrix verhakt und somit diffusionsstabil.

Niedermolekulare, lösliche Moderatoren, die sich zur Behandlung von zwei- und mehrbasigen Treibladungspulvern eignen, weisen einen möglichst geringen Dampfdruck bei 21 °C auf und sind flüssig. Wenn sie in der niederviskosen Flüssigkeit gemäss Merkmal c) löslich sind, können sie auch Feststoffe sein. Geeignete Stoffklassen umfassen Ether, Ester, Urethane, Harnstoffe und Ketone. Beispiele sind Kampfer, Dibutylphthalat, Diamylphthalat, Centralit, Dipropyladipat, Di(2-ethylhexyl)adipat, Diphenylurethan, Methylphenylurethan, Hexandiol-diacrylat, Ethylenglykol-dimethacrylat etc.

Ebenfalls geeignet sind oligomere, lösliche Moderatoren wie Polyether und Polyester mit Molekulargewichten von 500 bis 3000 Dalton. Beispiele sind Poly(tetrahydrofuran), Polymethylvinylether, Poly(oxyethylen), Polyethylenglykol, Poly(butandiol)divinylether, Polyester wie SANTICIZER 431, PARAPLEX G-54, oder Poly[di(ethylenglykol)adipat, Polyethylenglykolacrylat, Polyethylenglykolmethacrylat, Polyethylenglykoldiacrylat, Polyethylenglykoldimethacrylat, Polyethylenglykoldimethylether, Poly(propylenglykol), Poly(propylenglykol)acrylat, Poly(propylenglykol)diacrylat, Poly(propylenglykol)ether, Polycaprolactondiol, Polycaprolactontriol und die davon abgeleiteten Co-Oligomere. Dabei werden bei den Acrylaten/Methacrylaten keine Polymerisationsreaktionen durchgeführt.

Die radikalisch vernetzbaren Moderatoren umfassen niedermolekulare Verbindungen bzw. Oligomere oder Polymere, welche pro Molekül mindestens zwei radikalisch polymerisierbare Gruppen tragen.

Die radikalisch vernetzbaren Moderatoren umfassen auch Mischungen aus

- niedermolekularen Verbindungen bzw. Oligomeren oder Polymeren, welche pro Molekül mindestens eine polymerisierbare Gruppe besitzen und

- Verbindungen, die mindestens zwei polymerisierbare Gruppen tragen.

Diese Verbindungen sind in der Treibladungspulver-Matrix entweder unlöslich und bleiben somit an der Treibladungspulver-Oberfläche, oder sie sind löslich und diffundieren daher im Laufe der erfindungsgemässen Behandlung in die oberste Schicht des Treibladungspulvers. Zudem muss dem vernetzbaren Moderator ein geeigneter thermisch aktivierbarer Radikalstarter (Initiator) beigegeben werden. Der Initiator soll dermassen gut im Moderator löslich sein, dass dieser im Moderator homogen verteilt vorliegt. Die Behandlungsbedingungen und der Initiator müssen so gewählt werden, dass der Initiator während des Oberflächenbehandlungsprozesses in der Poliertrommel möglichst nicht in Radikale zerfallen kann. Sind Initiator und polymerisierbarer Moderator entweder als Schicht auf der Treibladungspulver-Oberfläche vorhanden oder in die äusserste Treibladungspulver-Schicht eindiffundiert, so wird der Luftsauerstoff und z. T. der in der äussersten Treibladungspulver-Schicht vorhandene Sauerstoff im Vakuum bei Raumtemperatur entfernt und durch Inertgas ersetzt. Dies ist notwendig, damit die Radikalreaktionen (Polymerisation, Vernetzung) ohne störende Nebenreaktionen und mit hoher Ausbeute ablaufen. Unter Inertgas erhöht man die Temperatur des Treibladungspulvers dermassen, dass der Initiator möglichst schnell und vollständig in Radikale zerfällt. Diese Radikale starten dann die Polymerisation bzw. die Vernetzung des Moderators.

Als Radikalstarter werden bevorzugt Substanzen eingesetzt, die bei einer Oberflächenbehandlungstemperatur, z. B. Raumtemperatur eine hohe Zerfallsstabilität aufweisen. Insbesondere ist eine Zerfallszeit für die Hälfte des Radikalbildners grösser als 10 Stunden. Bei der Polymerisationstemperatur dagegen, z.B. bei Temperaturen um 60 °C bis 90 °C zerfällt der Radikalstarter schnell in die entsprechenden Radikale, insbesondere ist eine Zerfallszeit für die Hälfte des Radikalbildners kleiner als 1 Stunde. Dies garantiert eine schnelle, schonende und vollständige Umsetzung der polymerisierbaren Moderatoren.

Optional erfolgt die Vernetzung des Moderators unter Inertgas bei Normaldruck, bei einer Temperatur von weniger als 90 °C und während einer Dauer von weniger als der sechsfachen Zerfallhalbwertszeit des Radikalbildners bei dieser Temperatur.

Die Menge des eingesetzten Polymerisationsinitiators richtet sich nach der Menge des eingesetzten, vernetzbaren Moderators. So werden zwischen 0.1 und 5 Mol% Initiator bezogen auf 1 Mol des vernetzbaren Moderators verwendet. Bevorzugt sind Initiatormengen zwischen 1 und 4 Mol%.

Beispiele für geeignete Initiatoren sind tert.-Butyl-peroxyneodecanoat, Di(4-*tert.*-butylcyclohexyl)-peroxydicarbonat, *tert.*-Butylperoxypivalat, Dilauroylperoxid, Azo-bis-(isobutyronitril) etc.

Als vernetzbare, im Treibladungspulver lösliche Moderatoren sind Derivate von Diacrylaten, Triacrylaten, Tetraacrylaten, Dimethacrylaten, Trimethacrylaten, Tetramethacrylaten, Diacrylamiden, Triacrylamiden, Dimethacrylamiden, Trimethacrylamiden, Divinylestern, Trivinylestern, Divinylethern, Trivinylethern, Divinylaromaten, Trivinylaromaten etc. geeignet.

Beispiele für niedermolekulare, radikalisch vernetzbare Moderatoren sind Hexandiol-diacrylat, Hexandiol-dimethacrylat, Ethylenglykol-dimethacrylat, Triethylenglykol-diacrylat, Tetraethylenglykol-diacrylat, Dipropylenglykol-diacrylat, Trimethylolpropan-triacrylat, Pentaerythritol-tetraacrylat etc.

Beispiele für oligomere, radikalisch vernetzbare Moderatoren sind niedermolekulares Polyethylenglykol-diacrylat, niedermolekulares Polyethylenglykol-dimethacrylat, ethoxyliertes Bisphenol-A-diacrylat, propoxyliertes Neopentylglykol-diacrylat, ethoxyliertes Neopentylglykol-diacrylat, propoxyliertes Glycerin-triacrylat, ethoxyliertes Pentaerythritol-tetraacrylat etc.

Beispiele für polymere, radikalisch vernetzbare Moderatoren sind Polybutadiendiol-diacrylat, hochmolekulares Polyethylenglykol-diacrylat, hochmolekulares Polyethylenglykol-dimethacrylat, hochmolekulares Polypropylenoxid-diacrylat etc.

Andererseits können Moderatoren verwendet werden, die im Treibladungspulver wenig löslich oder ganz unlöslich sind. Dabei handelt es sich um feste oder flüssige Verbindungen, die in der niederviskosen Flüssigkeit löslich oder zumindest fein emulgierbar sind. Bei den in Frage kommenden Verbindungen kann es sich um inerte oder energetische Substanzen handeln. Vorausgesetzt werden muss, dass sich die Moderatorkonzentration auf der Treibladungspulver-Oberfläche nicht durch Sublimation oder Diffusion verändern kann. Dies kann durch Verwendung von entweder hochschmelzenden, niedermolekularen oder oligomeren bzw. polymeren Verbindungen erreicht werden. Zudem kann die Flüchtigkeit bei unlöslichen Verbindungen, die polymerisierbare Gruppen aufweisen, nach dem Aufbringen auf das Treibladungspulver-Korn zusätzlich durch eine Polymerisations-Reaktion (wie sie oben beschrieben wird) herabgesetzt werden.

Als unlösliche Moderatoren eignen sich apolare Polymere und Oligomere oder stark polare Polymere und Oligomere mit oder ohne polymerisierbare Gruppen.

Beispiele dazu sind vollständig oder teilweise hydrolysiertes Polyvinylacetat, Polyvinylalkohol, Poly(vinylalkohol-co-ethylen), Polybutadien, Polybutadiendiol, Polybuta¬diendiol-dimethacrylat, Polybutadiendiol-diacrylat, Polystyrol, Polyvinylpyrrolidon, Poly(acrylonitril-co-butadien), Poly($\alpha$-Methylstyrol) Poly(vinylalkohol-co-vinylacetat), Poly¬(vinyltoluol-co-$\alpha$-Methylstyrol) etc.

Optional wird die Menge an Moderator in einem Bereich gewählt, in welchem eine Temperaturgradientenkurve, welche eine Darstellung des oberen Temperaturgradienten für Treibpulver mit unterschiedlichem Moderatorgehalt und konstantem Feststoffgehalt darstellt, ein Minimum aufweist. Dies hat den Vorteil, dass der verfestigende bzw. verklebende Effekt des Moderators bei der initialen Zapfenbildung bestmöglich genutzt wird, aber die Stabilität des Treibladungspulvers (wegen meist nicht zu verhindernden Diffusionsprozessen) nicht verschlechtert wird.

Das Minimum der Temperaturgradientenkurve ist im Rahmen der Erfindung nicht als einzelner Datenpunkt zu verstehen, sondern als Bereich einer gewissen Ausdehnung, in welchem die Abhängigkeit des Maximaldrucks von der verwendeten Menge an Moderator relativ gering ist. Die Ausdehnung beträgt ca. 0.1 Gew.-% Moderator. Untersuchungen haben gezeigt, dass das Minimum im Bereich von 0.05 - 0.2 Gew.-% Moderator (bezogen auf das Gewicht des Grünkorns) ist.

Besonders vorteilhaft ist es, wenn die Menge an Moderator an der unteren Grenze des Minimal-Bereichs gewählt wird. Untersuchungen haben gezeigt, dass die untere Grenze zwischen 0.05 und 0.1 Gew.-% Moderator liegt.

Die Moderatormenge kann aber auch geringer gewählt werden. Insbesondere ist es möglich, vollständig auf den Moderator zu verzichten und als Flüssigkeit ausschliesslich ein niederviskoses flüchtiges Lösungsmittel zu verwenden.

Optional kann das Lösungsmittel in einer Menge bereitgestellt werden, welche innerhalb der vorgegebenen Zeitdauer, in welcher das Grünkorn mit der Flüssigkeit und dem Feststoff in einer Mischapparatur behandelt wird, vollständig aufgenommen werden kann. Das Grünkorn wird dann nicht schwimmend behandelt. Vielmehr wird das Grünkorn nur ausreichend benetzt und in diesem benetzten Zustand in der Mischapparatur gewälzt.

Die Menge der Flüssigkeit liegt im Bereich von 0.1 bis 5 Gew.-% (bezogen auf die Menge des Grünkorns). Bevorzugt ist eine Menge im Bereich von 0.5 bis 1 Gew.-%. Im Einzelfall kann die Menge auch höher sein, wenn sich der Feststoff trotzdem in die Kanäle einarbeiten lässt.

Optional können zur Ermittlung der Feststoffmenge drei Chargen des Grünkorns mit unterschiedlichen Feststoffmengen behandelt werden, wobei sich die Feststoffmengen um maximal 0.2 Gew.-% bezogen auf das Grünkorn unterscheiden. In diesem Sinne kann für eine erste Charge eine Menge X Gew.-%, die zweite Charge eine Menge X + 0.1 Gew.-% und die dritte Charge eine Menge X + 0.2 Gew.-% verwendet werden. Mit X ist z. B. eine Feststoffmenge bezeichnet, welche für eine Graphitierung erforderlich ist. Ist das bereitgestellte Grünkorn bereits graphitiert, kann X = 0 Gew.-% oder sehr klein (z. B. X = 0.015 Gew.-%) gewählt werden. (Die Gew.-% sind immer auf die verwendete Gewichtsmenge des Grünkorns bezogen.)

Anhand der Temperaturgradientenkurven der drei Chargen kann festgestellt werden, welcher der Schnittbereich der Temperaturgradientenkurven ist. Auf dieser Basis kann im konkreten Fall (d. h. für die konkrete Anwendungstemperatur) die optimale Feststoffmenge für die Produktion ermittelt werden. Optimal wird in der Regel eine Menge sein, die zu einem weitgehend temperaturunabhängigen Verhalten des Treibladungspulvers führt. Der Temperaturkoeffizient zwischen beispielsweise 21° und 63 °C liegt dann bei 100% plus/minus 2%.

Dieses Vorgehen basiert auf der Erkenntnis, dass die Temperaturabhängigkeit des Treibladungspulvers innerhalb eines Bereichs mit einer Breite von typischerweise 0.25 Gew.-% durch die Variation der Feststoffmenge gezielt gesteuert werden kann. Der genannte Einstellbereich kann bei kleinen Grünkorngeometrien (Mittelkaliber) durchaus grösser als 0.25 Gew.-% sein, z.B. 0.25 - 0.5 Gew.-%. Bei sehr grossen Körnern (Grosskaliber) kann der Einstellbereich auch enger sein, z. B. 0.1 Gew.-% Feststoff.

Optional unterscheiden sich die Feststoffmengen der Chargen um ungefähr 0.1 Gew.-%. Dies ist ein gutes Raster, um auch bei den verschiedensten Grünkorn-Ausführungen schnell und zuverlässig zum Schnittbereich zu kommen. Die Zahl der Chargen kann auch vergrössert und/oder die Differenzmenge verkleinert werden, um den Schnittbereich exakter zu identifizieren.

Alternativ ist es auch möglich, eine gröbere oder feinere Unterteilung des Feststoffbereichs vorzunehmen, um die verschiedenen Chargen zu definieren. Weiter ist es denkbar, die Feststoffmenge aufgrund von andersartigen Berechnungen zu wählen, wenn es nicht auf eine optimale Einstellung der Temperaturgradienten ankommt.

Optional kann die Menge an Feststoff im Einstellbereich so gewählt werden, dass der Temperaturkoeffizient im unteren und im oberen Temperaturbereich zwischen 95% und 105%, insbesondere zwischen 97% und 103% liegt. Dies entspricht einer ausgeglichenen Lebhaftigkeit des Treibladungspulvers. Da ohne Zapfenbildung das Verhältnis $p\_max/p\_max(21\ °C)$ im oberen Temperaturbereich (z. B. 21 °C - 63 °C) in der Grössenordnung von 110% liegt, wird dadurch eine Feststoffmenge gewählt, die zu einer wesentlichen Verbesserung des Temperaturverhaltens führt.

Optional kann die Feststoffmenge bei einer spezifischen Oberfläche (im Rahmen einer Mittelung) proportional von >0 auf 0.2 Gew.-% erhöht werden, um den relativen Maximaldruck (im Rahmen einer Mittelung) proportional im oberen Temperaturbereich von 105 % bis 95% zu senken. Diese vereinfachte Bemessungsregel führt mit einfachen Mitteln bzw. geringem Aufwand zu verhältnismässig guten Ergebnissen. Zwar ist die Abhängigkeit der Temperaturgradientenkurve von der gewählten Feststoffmenge nicht wirklich linear (sondern S-förmig). Die Abweichungen von der Linearität im entscheidenden Bereich sind jedoch so gering, dass die vereinfachte Bemessensregel zu guten Ergebnissen führt.

Alternativ können auch andere (z. B. nicht-lineare, S-förmige) Bemessungsregeln angewendet werden, um für das gewünschte Temperaturverhalten die erforderliche Menge an Feststoff zu bestimmen.

Optional weisen die Kanäle eine charakteristische Querabmessung von 0.1 - 0.2 mm auf. In diesem Bereich lassen sich ohne Schwierigkeiten verfestigte und verankerte Zapfen herstellen, zudem sind derartige Querabmessungen im Extrusionsverfahren gut herstellbar. Der pulverförmige Feststoff, dessen Partikelgrösse so gewählt ist, dass er sich gut in die Kanäle einarbeiten lässt, kann sich bei zu grossen Kanalquerschnitten dort nur erschwert festsetzen. Bei zu kleinen Kanalquerschnitten kann der Feststoff ebenfalls nicht mehr zügig in die Öffnungen eingebracht werden. Die (durchschnittliche) Partikelgrösse des Feststoffs wird typischerweise deutlich kleiner als 0.2 mm sein. Das heisst, dass die Partikelgrösse in der Regel höchstens halb so gross wie die charakteristische Querabmessung der Kanäle ist, insbesondere höchstens 1/5 so gross.

Typischerweise sind die Kanäle ungefähr kreisrund, so dass die Querabmessung dem Durchmesser entspricht. Sie können aber auch oval oder sternförmig sein.

Optional ist vorgesehen, dass der Feststoff je nach Querabmessung der Kanäle eine Partikelgrösse im Bereich von 0,01 bis 100 Mikrometer, besonders bevorzugt im Bereich von 0,1 bis 50 Mikrometer hat, wobei die Partikelgrösse mit Vorteil nicht grösser als 1/10 der Querabmessung des Kanals ist. Diese Dimensionierung ist jedoch nicht zwingend, wie die folgenden Erläuterungen zeigen.

Da sich Graphitteilchen als sehr "beweglich" bzw. "gleitend" erweisen, können diese z. B. auch nur wenig kleiner als die Querabmessung der Kanäle sein und trotzdem zu einem Zapfen führen. Graphitteilchen lassen sich auch gut verdichten, so dass überraschenderweise auch mit relativ grossen Graphitteilchen feste Zapfen gebildet werden können.

Optional kann die Feststoffmenge (im Rahmen einer Mittelung) proportional von >0 auf 0.2 Gew.-%. erhöht werden, um den relativen Maximaldruck im unteren Temperaturbereich (im Rahmen einer Mittelung) proportional von 86% bis 105% zu erhöhen. Die oben erläuterten Überlegungen zum oberen Temperaturbereich gelten sinngemäss für den unteren Temperaturbereich.

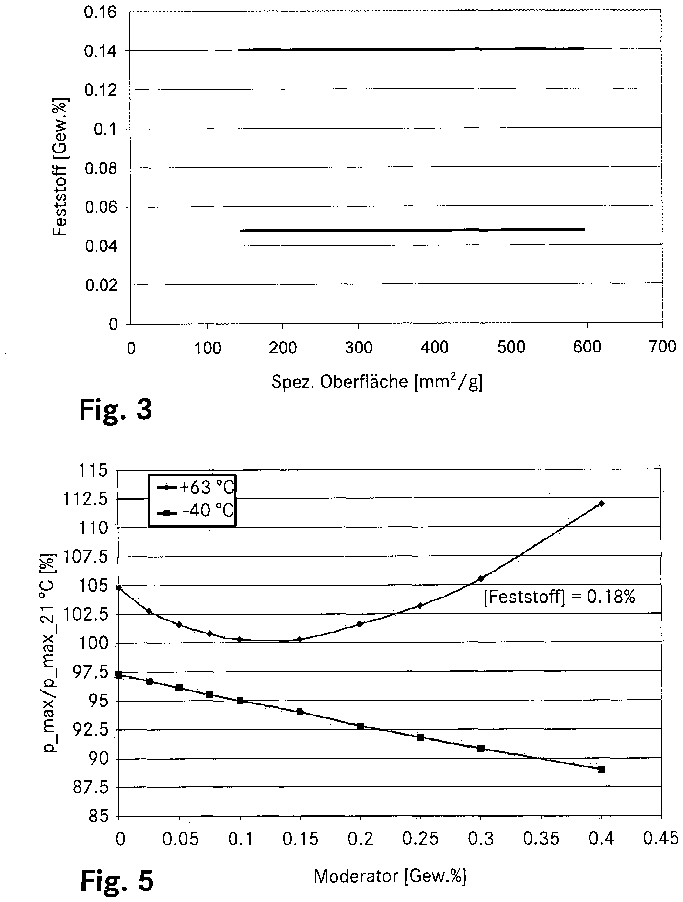

Optional ist bei einer Kornmatrize mit einem Durchmesser im Bereich von 11 - 14 mm, einer Anzahl Kanäle im Bereich von 16 - 24 und einer Querabmessung der Kanäle im Bereich von 0.14 - 0.18 mm die Feststoffmenge in Abhängigkeit vom zu erzielenden relativen Maximaldruck entsprechend der in Figur 5 gezeigten Kurve gewählt. Üblich sind 7 oder 19 Kanäle, darüber hinaus auch 38 oder 64 Kanäle.

Für eine andere Korngeometrie mit einer anderen spezifischen Oberfläche wird die Graphitmenge entsprechend so geändert, dass ein durch das Graphitieren bedingter zusätzlicher oder reduzierter Bedarf kompensiert ist. Nach dieser Bemessungsregel ist es möglich, ohne umständliche Versuche gezielt die Temperaturabhängigkeit einzustellen.

Optional kann bei einem Grünkorn mit einer spezifischen Oberfläche im Bereich von 600 mm$^2$/g plus/minus 20% der Feststoff in einem Bereich zwischen 0.12 und 0.21 Gew.-% bezogen auf das Grünkorn gewählt werden. Mit diesen Mengen kann gleichzeitig die Graphitierung und eine optimale Temperaturunabhängigkeit erzielt werden.

Es ist auch möglich, ausserhalb des genannten bevorzugten Bereichs zu arbeiten, wenn geringere Temperatureffekte gewünscht sind.

Optional kann zur Bemessung der Menge Moderator von der Regel ausgegangen werden, dass eine Erhöhung von 0 auf 0.4 Gew.-% (bezogen auf das Grünkorn) im unteren Temperaturbereich den relativen Maximaldruck proportional von 97% auf 88% erniedrigt.

Eine weitere optionale Bemessungsregel besteht darin, dass die Moderatormenge von 0 auf 0.15 Gew.-% erhöht wird, um im oberen Temperaturbereich den relativen Maximaldruck von 105% auf 100% zu erniedrigen. Auf diese Weise kann ohne grossen Testaufwand aber mit guter Zuverlässigkeit die dem gewünschten Temperatureffekt zugeordnete Moderatormenge bestimmt werden. Dies ist insbesondere dann hilfreich, wenn die Moderatormenge möglichst gering gehalten werden soll.

Die Moderatorsubstanz kann in gewissen Anwendungsfällen so gewählt werden, dass sie gleichzeitig als Phlegmatisator wirkt. In solchen Fällen sind für die Bemessung der Menge Moderators zusätzliche Kriterien zu beachten. Es ist dann eventuell besser, die obige Bemessungsregel nicht oder nur bedingt anzuwenden.

Optional kann der Moderator in einer Menge von 0.05 - 0.2 Gew.-%, insbesondere von 0.1 - 0.15 Gew.-% eingesetzt werden. Diese Moderatormengen sind relativ gering und deshalb bevorzugt. Bei derartiger Bemessung können auch dann gute Resultate bezüglich der Temperaturgradienten erreicht werden, wenn die Rezeptur des Grünkorns nicht durch Versuchsreihen auf die optimale Moderatormenge abgestimmt wird.

Zur Ermittlung der optimalen Menge an Feststoff kann wie folgt vorgegangen werden:
Ausgegangen wird vom Grünkorn, welches von einer bestimmten Charge hergestellt worden ist. Indem das gesamte Grünkorn von derselben Charge (die möglichst homogen sein soll) extrudiert ist, unterscheiden sich die einzelnen Körner in Bezug auf Zusammensetzung und Eigenschaften nicht wesentlich voneinander. Es wird mindestens eine erste und eine zweite Teilmenge in einem bestimmten Mischungs- und Trocknungsverfahren mit einer bestimmten Testmenge an Feststoff und zwei verschiedenen Testmengen an Moderator verarbeitet. Daraus wird ein Minimalbereich für einen Temperaturgradienten im oberen Temperaturbereich ermittelt. Mit anderen Worten: Das Abbrandverhalten ändert sich im oberen Temperaturbereich praktisch nicht, wenn die Moderatormenge innerhalb des Minimalbereichs geändert wird. Ausserhalb des Minimalbereichs hängt der Temperaturgradient jedoch von der verwendeten Menge an Moderator ab. Es wird eine geeignete Moderatormenge gewählt.

In einer weiteren Stufe werden aus der genannten Charge des Grünkorns mindestens zwei weitere Teilmengen entnommen und in dem bestimmten Mischungs- und Trocknungsverfahren mit der gewählten Menge an Moderator (innerhalb des Minimalbereichs) und zwei verschiedenen Testmengen an Feststoff verarbeitet. Die Moderatormenge ist also innerhalb des in der vorherigen Verfahrensstufe ermittelten Minimalbereichs gewählt. Aus den mindestens zwei Behandlungen mit unterschiedlichen Feststoffmengen wird ein Schnittbereich der oberen und unteren Temperaturgradientenkurve ermittelt.

Danach kann aus der genannten Charge eine Produktionsmenge entnommen werden und in dem bestimmten Mischungs- und Trocknungsverfahren mit der gewählten Menge an Moderator und der Optimalmenge an Feststoff verarbeitet werden.

Im Rahmen einer umfangreichen Produktion können auch mehrere Chargen des Grünkorns hergestellt und verarbeitet werden. Es ist dann nicht unbedingt nötig, dass bei jeder Charge des Grünkorns nach dem obigen Verfahren vorgegangen wird. Wenn die Abweichungen von den vorhergehenden Chargen zwar nicht vernachlässigbar aber auch nicht zu gross sind, kann mit einem einfachen Testverfahren überprüft werden, ob die Menge an Feststoff (und gegebenenfalls an Moderator) noch richtig ist.

Optional umfasst das Mischungs- und Trocknungsverfahren folgende Schritte:

a) Grünkorn, Feststoff und eine niederviskose Flüssigkeit werden in eine Mischapparatur gegeben;

b) der Feststoff ist eine Substanz, deren Schmelzpunkt mindestens 10 °C, insbesondere 20 °C oberhalb einer maximalen Einsatztemperatur des Treibladungspulvers liegt, dem Grünkorn gegenüber inert ist und in einer Menge innerhalb des durch K_min und K_max definierten Bereichs nach folgender Formel eingesetzt wird:

$$M(Feststoff) = K\_min \times F(spezifische\ Oberfläche) + Offset$$

$$M(Feststoff) = K\_max \times F(spezifische\ Oberfläche) + Offset$$

gewählt wird, wobei

M(Feststoff) die Menge an Feststoff in Gew.-% bezogen auf das Gewicht des Grünkorns
F(spezifische Oberfläche) die spezifische Oberfläche des Grünkorns in Fläche pro Gewicht und
K_min = 0.000'9 [$g/mm^2$]
K_max = 0.0014 [$g/mm^2$]
mit Offset = - 0.14.

Die optimale Menge an Feststoff liegt bei:

$$M(Feststoff) = K\_opt \times F(spezifische\ Oberfläche) + Offset$$

wobei:

K_opt = 0.0012 [$g/mm^2$]

und Offset = - 0.14.

c) der Moderator ist eine Substanz, die eine gute chemische Verträglichkeit mit der Grundrezeptur des Grünkorns und eine geringe Flüchtigkeit d. h. Dampfdruck bei 21 °C von < $10^{-2}$ bar hat, und in einer Menge von weniger als 0.5 Gew.-% bezogen auf das Gewicht des Grünkorns eingesetzt wird; vorzugsweise beträgt die Moderatormenge nicht mehr als 0.2%;

d) die niederviskose Flüssigkeit ist ein Lösungsmittel oder Lösungsmittelgemisch, das den zapfenstabilisierenden Moderator sehr gut lösen oder fein emulgieren kann und das Grünkorn zu quellen vermag, und in einer Menge von 0.1 Gew.-% bis 5 Gew.-% bezogen auf ein Gewicht des Grünkorns eingesetzt wird;

e) der Feststoff wird durch Rotation der Mischapparatur unter Wirkung eines von der Pulvermasse ausgeübten Drucks sukzessive in die Kanäle des Korns eingearbeitet;

f) danach wird die Flüssigkeit unter fortgesetztem Verarbeiten durch die Mischapparatur aus dem Korn entfernt, z. B. durch Abdampfen;

g) das derart behandelte Grünkorn wird bei erhöhter Temperatur getrocknet;

h) derart, dass aus dem im Kanal vorhandenen nichtflüchtigen Feststoff durch Verdichten ein Zapfen entsteht, welcher zu 90%, insbesondere zu 95% aus dem verwendeten Feststoff besteht und eine temperaturabhängige Mobilität aufweist, indem er einer Anzünddruckwelle in kontrollierter Weise standhalten kann;

i) derart, dass bei niedrigerer Anwendungstemperatur eine höhere Mobilität gegeben ist, als bei höherer Anwendungstemperatur, so dass der Zapfen bei niedrigerer Anwendungstemperatur einen stärkeren Lochabbrand zulässt als bei höherer Anwendungstemperatur, so dass eine reduzierte Temperaturabhängigkeit eines Treibladungspulver-Abbrandes resultiert.

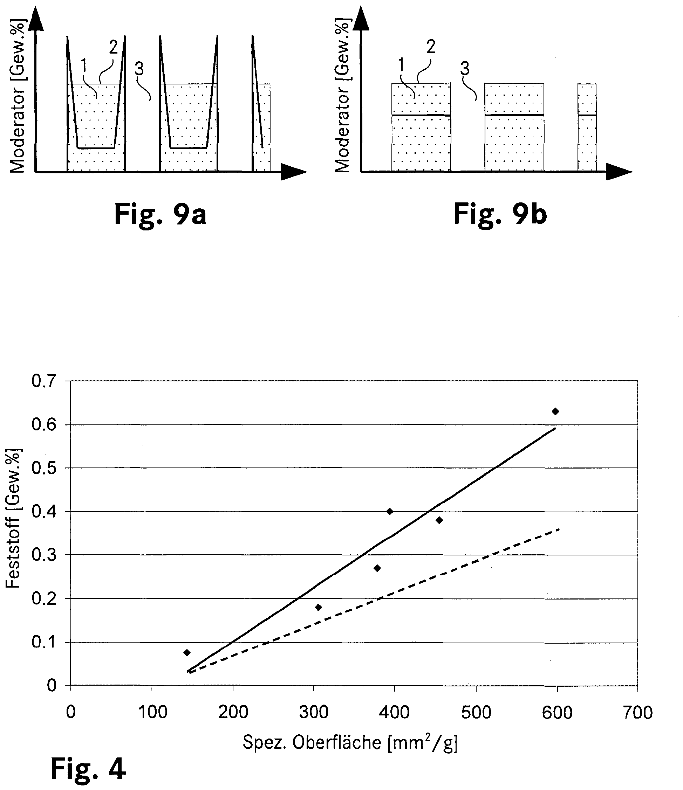

Optional kann die Moderatormenge in Abhängigkeit vom zu erzielenden relativen Maximaldruck entsprechend der Kurve gemäss Fig. 4 gewählt werden. Dabei ist massgeblich, dass im unteren Bereich (-40 °C bis +21 °C) der Anwendungstemperatur ein Minimum des Temperaturgradienten besteht, welches eine Breite von typischerweise maximal 0.2 Gew.-% Moderator bezogen auf das Grünkorn, insbesondere von 0.1 Gew.-% an Moderator aufweist. Die Moderatormenge wird dabei vorzugsweise möglichst gering, d. h. am unteren Rand des Minimalbereichs gewählt.

Optional können eine oder mehrere der folgenden Substanzen oder auch ihre Gemische als Feststoff eingesetzt werden:
Graphit, Talkum, Titanoxid, Russ, Kaliumsulfat, Kaliumkryolith, Natriumkryolith, Calciumcarbonat, Wolframtrioxid, Molybdäntrioxid, Magnesiumoxid, Bornitrid, Akardit, Centralit, Calciumcarbonat, Oxalamid, Ammoniumcarbamat, Ammoniumoxalat, Celluloseacetatbutyrat, Kaliumperchlorat, Kaliumnitrat, Bariumnitrat, Nariumoxalat, Fullerene, oder Polymere und Copolymere mit oder ohne funktionelle Gruppen, linear, verzweigt oder vernetzt.

Optional kann die Behandlung des Grünkorns dadurch erfolgen, dass der Feststoff, der Moderator und die Flüssigkeit bei einer Temperatur im Bereich von 0 °C bis 90 °C während einer Behandlungsdauer zwischen 5 Minuten und 4 Stunden, insbesondere zwischen 10 Minuten und 120 Minuten, in der Mischapparatur gemischt werden. Die Rotationsgeschwindigkeit der Mischapparatur kann z. B. zwischen 2 und 30 Umdrehungen pro Minute betragen.

Optional kann die Behandlung so geführt werden, dass die Mischapparatur während einer Einwirkzeit gasdicht geschlossen bleibt, und dass sie nachfolgend zum Abdampfen der Flüssigkeit während einer bestimmten Zeitspanne im Bereich von 5 Minuten bis 4 Stunden, insbesondere zwischen 10 Minuten und 120 Minuten, offen ist. Die Flüssigkeit kann statt durch Abdampfen auch durch Unterdruck oder durch Gasspülung entfernt werden.

Optional kann zuerst der Feststoff aufgetragen und homogen auf der gesamten Oberfläche des Grünkorns verteilt werden und danach eine Lösung aus der niederviskosen Flüssigkeit und dem Moderator zugegeben werden.

Ein erfindungsgemässes Treibladungspulver weist ein Korn mit einer Grünkorn-Matrize mit mehreren durchgehenden Kanälen auf, die je eine charakteristische Querabmessung von maximal 0.3 mm haben und die an einer Aussenoberfläche des Grünkorns münden. In den Kanälen befinden sich Zapfen aus verdichteten Feststoffpartikeln. Der Feststoff ist so gewählt, dass er im Anwendungstemperaturbereich stabil und gegenüber dem Grünkorn inert ist. Die Partikelgrösse ist derart, dass die Feststoffpartikel in die durchgehenden Kanäle durch ein Mischverfahren im Sinne der Erfindung einführbar sind. Der Zapfen besteht im Wesentlichen (d. h. praktisch ausschliesslich) aus dem Feststoff. Da der Feststoff im gesamten Anwendungstemperaturbereich seine Festkörperstruktur beibehält und inert ist gegenüber dem Grünkorn, ist er langfristig stabil. Weder diffundieren spürbare Mengen in das Grünkorn, noch wird der Feststoff weich. Insbesondere sind im Zapfen (abgesehen von geringen Spuren) keine Moderatoren oder Phlegmatisatoren enthalten.

Die Kanäle sind jeweils durch einen Deckel mit einer Dicke im Bereich von 10 - 20 $\mu$m (Mikrometer) verschlossen, an welchem ein sich in den jeweiligen Kanal erstreckender Zapfen sitzt. Der Zapfen besteht aus verfestigten Feststoffpartikeln und erstreckt sich über eine Länge, die deutlich grösser als die Querabmessung ist, in den Kanal hinein. Der Zapfen füllt den Kanalquerschnitt im Wesentlichen aus. Es ist aber nicht davon auszugehen, dass der verfestigte Zapfenkörper entlang seiner ganzen Länge mit dem Kanal verbunden ist.

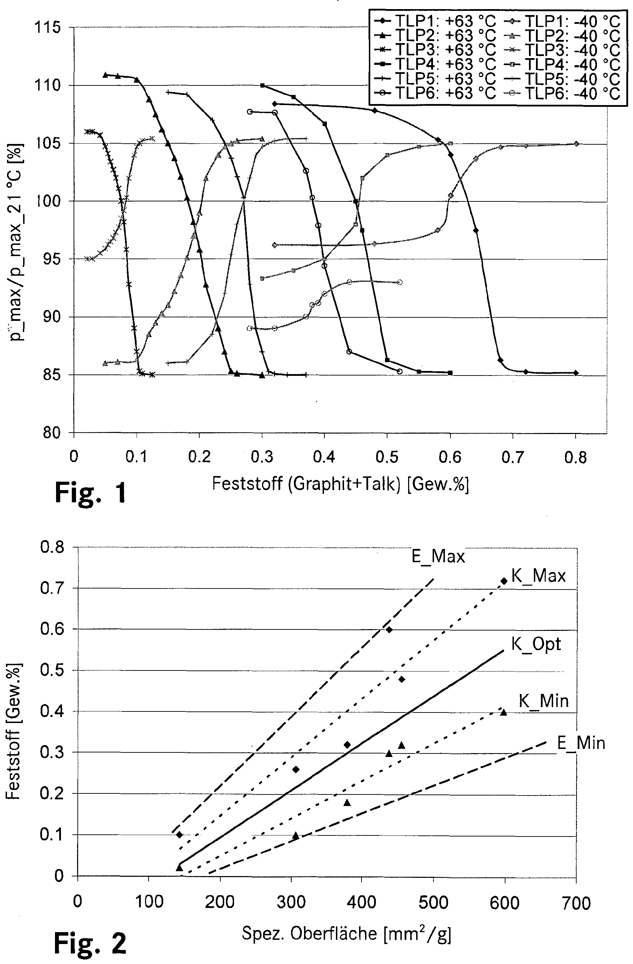

Die in den Deckeln und den Zapfen enthaltene Menge an Feststoff liegt im Einstellbereich von >0 bis 0.5 Gew.-% (bezogen auf das Grünkorn), wobei der Temperaturgradient des Treibladungspulvers durch die Menge an Feststoff gemäss Fig. 1 gegeben ist.

Der Zapfen kann, muss aber nicht Graphit enthalten. Das fertige Treibladungspulver hat auf seiner Oberfläche Graphit, um die elektrostatische Aufladung zu vermeiden und die Oberfläche zu glätten.

Optional enthält der Zapfen einen geringen Anteil an energetischem Feststoff, insbesondere Nitrocellulose, Hexogen Octogen, Nitroguanidin, Nitrotriazol, Ethylendinitramin, Ethyltetryl, Ammoniumpikrat, Trinitrotoluol, Trinitrobenzol, Tetranitroanilin etc. Es dürfen auch starke Oxidationsmittel dazu gerechnet werden, wie Ammoniumnitrat, Kaliumnitrat, Ammoniumperchlorat, Kaliumperchlorat etc. Insbesondere kann der energetische Feststoff dem im Mischungsverfahren erzeugten Abrieb des Grünkorns entsprechen.

Der Zapfen hat eine Schmelztemperatur, die oberhalb einer Herstellungs-, Lagerungs- und/oder Anwendungstemperatur, insbesondere oberhalb 90 °C liegt. Er enthält also keine Moderatoren, die im Anwendungstemperaturbereich flüssig sind.

Vorzugsweise hat das Grünkorn mindestens 7 (z. B. 19 oder auch mehr, insbesondere 38 oder 64) axial durchgehende Kanäle. Der durch die Zapfen abgeschlossene Hohlraum eines Kanals kann ein Hohlraumvolumen haben, das ein Mehrfaches eines Volumens eines Zapfens ist.

Mit der erfindungsgemässen Verwendung eines Feststoffs bzw. durch das erfindungsgemässe Verfahren lässt sich ein Treibladungspulver herstellen, bei dem die spezifische Oberfläche grösser als 420 mm$^2$/g und die Menge an Feststoff grösser als 0.15 Gew.-%, insbesondere grösser als 0.2 Gew.-% ist, und bei dem der Feststoff in einem Einstellbereich von bis zu 0.5 Gew.-% gewählt ist entsprechend einer zu erreichenden Temperaturabhängigkeit, so dass aus dem im Kanal vorhandenen nichtflüchtigen Feststoff durch Verdichten ein Zapfen entsteht, welcher hauptsächlich aus dem verwendeten Feststoff besteht und eine temperaturabhängige Mobilität aufweist, indem er einer Anzünddruckwelle in kontrollierter Weise standhalten kann.

Auch lässt sich mit der erfindungsgemässen Verwendung eines Feststoffs bzw. durch das erfindungsgemässe Verfahren ein Treibladungspulver herstellen, bei dem die spezifische Oberfläche kleiner als 310 mm$^2$/g und die Menge an Feststoff für einen vorteilhaften Effekt mindestens 0.05 Gew.-% und für einen optimalen Effekt grösser als 0.075 Gew.-%, häufig grösser als 0.2 Gew.-% ist. Der Feststoff ist dabei entsprechend einer zu erreichenden Temperaturabhängigkeit in einem Einstellbereich von bis zu 0.5 Gew.-% gewählt. Aus dem im Kanal vorhandenen nichtflüchtigen Feststoff entsteht durch Verdichten ein Zapfen, welcher hauptsächlich aus diesem verwendeten Feststoff besteht und insgesamt eine temperaturunabhängigere Anwendung des Treibladungspulvers bewirkt.

Die Erfindung umfasst auch ein Treibladungspulver, bei dem die Feststoffmenge in Abhängigkeit von der spezifischen Oberfläche des Treibladungspulvers so gewählt ist, dass in den Kanälen verdichtete und verankerte festkörperartige Zapfen aus Feststoff mit temperaturabhängiger Mobilität gebildet sind, und dass der Temperaturgradient im Schnittbereich der unteren und der oberen Temperaturgradientenkurve liegt.

Die Erfindung bezieht sich auch auf ein Treibladungspulver, welches gekennzeichnet ist durch folgende Merkmale:

a) Die physische Struktur ist durch ein quellfähiges Grünkorn mit einer vorgegebenen geometrischen Ausgestaltung mit mindestens einem durchgehenden Kanal gebildet. Der Kanal hat eine charakteristische Querabmessung von maximal 0.3 mm und mündet an einer Aussenoberfläche des Grünkorns.

b) Das Treibladungspulver hat vorzugsweise eine spezifische Oberfläche, die grösser als 420 mm$^2$/g ist. Sie kann auch kleiner als 310 mm$^2$/g sein. Andere Korngrössen sind aber nicht ausgeschlossen.

c) Auf der Oberfläche und in dem mindestens einen Kanal befindet sich ein Feststoff, der im Anwendungstemperaturbereich stabil und gegenüber dem Grünkorn inert ist und der eine Partikelgrösse hat, die in die durchgehenden Kanäle einführbar ist. Die Partikelgrösse ist z. B. kleiner als ein halber Durchmesser des Kanals. In chemisch / physikalischer Hinsicht hat der Feststoff die Eigenschaft, dass er sich im Rahmen eines Mischungs- und Trocknungsverfahrens verdichten lässt.

d) Die Menge an Feststoff ist abhängig von der spezifischen Oberfläche und ist grösser als 0.05 Gew.-%, bevorzugt grösser als 0.075 Gew.-%, besonders bevorzugt grösser als 0.15 Gew.-%, häufig grösser als 0.2 Gew.-% und liegt in einem Einstellbereich von >0 Gew.-% bis zu 0.5 Gew.-% entsprechend einer zu erreichenden Temperaturabhängigkeit.

e) Im Kanal befindet sich ein verdichteter und verankerter Teil des nichtflüchtigen Feststoffs. Dieser bildet einen hauptsächlich aus dem verwendeten Feststoff und optional aus dem Moderator bestehenden Zapfen mit einer temperaturabhängigen Mobilität, derart dass der Zapfen einer Anzünddruckwelle in kontrollierter Weise standhalten kann.

f) Optional ist eine Flüssigkeit im Treibladungspulver vorhanden, welche das Grünkorn quellen kann und am Ende der Herstellung des Treibladungspulvers in homogener Verteilung im Treibladungspulver enthalten ist. Die chemische Zusammensetzung des Grünkorns und der Flüssigkeit sind also aufeinander abgestimmt, so dass das Grünkorn quellen kann. Die Flüssigkeit enthält nicht mehr als 0.5 Gew.-% (bezogen auf das Gewicht des Grünkorns) einer als Moderator dienenden oligomeren oder polymeren Substanz. Ein sonstiger Teil der Flüssigkeit kann ein niederviskoses Lösungsmittel sein.

g) Das Treibladungspulver besitzt einen Einstellbereich des Feststoffs von >0 bis 0.5 Gew.-% zur Einstellung der Temperaturabhängigkeit des Treibladungspulvers, wobei die Menge an Feststoff innerhalb des Einstellbereichs zur Bildung von Zapfen eingestellt ist. Der Einstellbereich ist dadurch charakterisiert, dass bei sonst gleichbleibenden Bedingungen zum Erreichen einer stärkeren Absenkung des Maximaldrucks in einem oberen Temperaturbereich und zum Erreichen einer stärkeren Anhebung des Maximaldrucks in einem unteren Temperaturbereich des Anwendungstemperaturbereichs eine grössere Feststoffmenge eingesetzt wird.

Das fertige Treibladungspulver hat einen bestimmten Feststoffanteil. Dieser liegt innerhalb des Einstellbereichs, der zum konkreten Treibladungspulver gehört. Das heisst, bei sonst gleichen Bedingungen lässt sich auch ein Treibladungspulver mit einem anderen (aber wiederum bestimmten) Feststoffanteil realisieren. Dieser andere Feststoffanteil ist ebenfalls im Einstellbereich. Charakteristisch für den erfindungsgemässen Einstellbereich ist, dass der Maximaldruck im oberen Temperaturbereich (in welchem das Pulver zur Anwendung kommen kann) abgesenkt wird, wenn die Feststoffmenge höher gewählt ist. Und im unteren Temperaturbereich wird der Maximaldruck angehoben, wenn die Feststoffmenge angehoben wird. Diese Eigenschaft, dass der Maximaldruck allein durch die Feststoffmenge eingestellt ist, ist bedingt durch die Struktur und Verankerung des erfindungsgemässen Zapfens im Kanal. Es lässt sich durch eine Analyse des Treibladungspulvers feststellen, welchen Einstellbereich es hat. Somit ist der Einstellbereich ein technisch feststellbares Merkmal des erfindungsgemässen Treibladungspulvers.

Vorzugsweise ist die Feststoffmenge des Treibladungspulvers (im Rahmen einer Mittelung) wie folgt gewählt:

$$M(\text{Feststoff}) = K\_max \times F(\text{spezifische Oberfläche}) + \text{Offset}$$

wobei

M(Feststoff) die Menge an Feststoff in Gew.-% bezogen auf das Gewicht des Grünkorns
F(spezifische Oberfläche) die spezifische Oberfläche des Grünkorns in $mm^2/g$
K_max = 0.0014 $[g/mm^2]$
Offset = - 0.14,

so dass der relative Maximaldruck ungefähr (d.h. im Rahmen einer Mittelung) proportional im oberen Temperaturbereich von 105 % bis 95% gesenkt ist, oder dass die Feststoffmenge (im Rahmen einer Mittelung) proportional von >0 auf M(Feststoff) = K_max x F(spezifische Oberfläche) + Offset gewählt ist, so dass der relative Maximaldruck im unteren Temperaturbereich ungefähr proportional von 87% bis 105% erhöht ist.

Ideal behandelte Treibladungspulver zeigen die bestmögliche Temperaturunabhängigkeit des Abbrandverhaltens. Sie finden sich im Schnittpunkt der oberen und unteren Temperaturgradientenkurven.

Es liegt auch im Rahmen der Erfindung, Treibladungspulver als Gemisch von mindestens zwei unterschiedlich behandelten Treibladungspulvern (TLPa, TLPb) bereit zu stellen. Jedes der unterschiedlichen Treibladungspulver ist durch das erfindungsgemässe Herstellungsverfahren produziert. Die mindestens zwei unterschiedlich behandelten Treibladungspulver werden in einem solchen Verhältnis gemischt, dass ihr Gemisch sich verhält wie ein optimales Treibladungspulver mit einem Feststoffanteil im Schnittbereich der oberen und unteren Temperaturgradientenkurve. Vorzugsweise basieren die unterschiedlich behandelten Treibladungspulver auf dem selben Grünkorn (Geometrie, chemische Zusammensetzung).

Es ist auch möglich, Treibladungspulver als Gemisch von unbehandeltem Grünkorn (GK) und mindestens einem stark behandelten Treibladungspulver (TLPb), welches durch das erfindungsgemässe Verfahren produziert ist. Die beiden Treibladungspulver werden in einem solchen Verhältnis gemischt, dass ihr Gemisch sich verhält wie ein optimales Treibladungspulver mit einem Feststoffanteil im Schnittbereich der oberen und unteren Temperaturgradientenkurve.

Vorzugsweise wird die Mischung auf der Basis der Annahme berechnet, dass die Temperaturgradientenkurve zwischen den beiden Treibladungspulvern eine Gerade ist, auf welcher die Punkte der Treibladungspulver liegen. Mit anderen Worten: Der Einfluss jedes der mindestens zwei Treibladungspulver auf den gemeinsamen Temperaturgradienten wird als linear angenommen, und die Mischung wird auf Basis der Formel "Menge TLPa" / "Menge TLPb" = $\Delta$b/$\Delta$a ermittelt, wobei $\Delta$a die Differenz zwischen dem relativen Maximaldruck Pmax/Pmax(23°) des TLPa und dem relativen Maximaldruck "Pmax/Pmax(23°) des Treibladungspulver im Schnittpunkt der S-/Z-Kurven ist (und $\Delta$b analog die relative Druckdifferenz für TLPb).

Vorzugsweise werden also unterschiedlich stark behandelte Treibladungspulver miteinander gemischt, um zu einem sich optimal verhaltenden Treibladungspulver zu gelangen.

Ein schwach behandeltes TLPa wird also mit einem stark behandelten TLPb gemischt. Ein schwach behandeltes TLPa weist weniger Feststoff auf, als ein ideal behandeltes TLP, sein Maximalgasdruck ist nur wenig abgesenkt. Dagegen weist ein stark behandeltes TLPb mehr Feststoff auf, als ein ideal behandeltes TLP. Sein Maximalgasdruck ist deutlich abgesenkt und liegt unterhalb des Schnittpunktes der oberen und unteren Temperaturgradientenkurve. TLPb zeigt ein inverses Temperaturverhalten. Eine im günstigen Verhältnis hergestellte Mischung von TLPa und TLPb liefert ein TLP mit einem temperaturunabhängigen Abbrandverhalten, das dem eines ideal behandelten TLP entspricht.

In einem einfachen Fall kann man den Einfluss des Feststoffs auf das Treibladungspulver zumindest im Einstellbereich als linear annehmen. Dazu wird die Differenz der Maximalgasdrucks vom Schnittpunkt der S-/Z-Kurven für das jeweils behandelte TLP bestimmt, also Δa für TLPa und Δb für TLPb. Für ein nahezu optimales Verhalten des Treibladungspulvers werden TLPa und TLPb in einem Mengenverhältnis (Gewicht) miteinander gemischt, das umgekehrt proportional zu den Differenzen im Maximaldruck ist:

$$\mathrm{Menge(TLPa)/Menge(TLPb)} = \Delta b/\Delta a$$

Es ist auch möglich, nach dem gleichen Prinzip ein unbehandeltes Grünkorn GK mit einem stark behandelten TLPb zu mischen.

Der lineare Zusammenhang gilt für einfache Beispiele und liefert gute Ergebnisse. Ist eine sehr genaue Einstellung erforderlich, kann es von Vorteil sein, auch nicht-lineares Verhalten zu berücksichtigen.

Ebenfalls ist es möglich, mehr als nur zwei unterschiedlich stark behandelte bzw. ein stark behandeltes und ein unbehandeltes Korn miteinander zu mischen, um zu einem Treibladungspulver mit temperaturunabhängigen Abbrandverhalten zu erhalten.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1      eine Darstellung der Temperaturgradientenkurven in Abhängigkeit von der verwendeten Menge an Feststoff für sechs verschiedene Treibladungspulver;

Fig. 2      eine Darstellung der optimalen Menge und der unteren und oberen Grenze an Feststoff in Abhängigkeit von der spezifischen Oberfläche des Treibladungspulvers bei einer Behandlung, die das Polieren der Oberfläche beinhaltet;

Fig. 3      eine Darstellung der unteren und oberen Grenze an Feststoff bei einer Behandlung des Treibladungspulvers, die getrennt zum Polieren der Oberfläche erfolgt;

Fig. 4      eine Darstellung der oberen Grenze an Feststoff in Abhängigkeit von der verwendeten Trommel mit unterschiedlich ausgeprägten Schikanen;

Fig. 5      eine auszugsweise Darstellung der Temperaturgradientenkurve in Abhängigkeit von der verwendeten Menge an Moderator bei konstanter Menge an Feststoff für ein Treibladungspulver vom Typ TLP2 mit einer spezifischen Rezeptur aus Fig. 1;

Fig. 6      eine auszugsweise Darstellung der Temperaturgradientenkurve in Abhängigkeit von der verwendeten Menge an Feststoff bei konstanter Menge des Moderators für ein Treibladungspulver vom Typ TLP2 mit einer spezifischen Rezeptur aus Fig. 1;

Fig. 7      eine Fotografie eines verfestigte Zapfens in einem Kanal eines Grünkorns;

Fig.8       eine schematische Darstellung des Verfahrens zur Bestimmung der optimalen Menge an Moderator und Feststoff;

Fig. 9a,b   schematische Darstellungen der Konzentration des Moderators in der Grünkornmatrix vor (a) und nach (b) dem Tempern;

Fig. 10a,b  Effekt der Grünkorn-Behandlung in der Waffe;

Fig. 11      eine Darstellung der Temperaturgradientenkurven in Abhängigkeit von der verwendeten Menge an Feststoff für TLP2 zur Herstellung realer Treibladungspulver durch Mischen.

Grundsätzlich sind in den Figuren gleiche Teile mit gleichen Bezugszeichen versehen.

**Wege zur Ausführung der Erfindung**

In Fig. 1 sind die Temperaturgradientenkurven für sechs verschiedene Treibladungspulver TLP1 - TLP6 dargestellt. Auf der Abszisse ist die gesamte Feststoffzugabe in Gew.-% bezogen auf die Menge des Grünkorns und auf der Ordinate der Temperaturgradient in Prozent aufgetragen. Die Feststoffmenge ist so bemessen, dass sie sowohl zum Erzeugen der erfindungsgemässen Zapfen als auch zum Polieren der Oberfläche dient.

Die in der Fig. 1 gezeigten Treibladungspulver sind wie folgt charakterisiert:

| Bezeichnung | TLP1 ♦ | TLP2 ▲ | TLP3 × | TLP4 ■ | TLP5 + | TLP6 ○ |
|---|---|---|---|---|---|---|
| Grünkorndurchmesser (mm) | 5.5 | 12.3 | 13.89 | 8.65 | 9.91 | 7.99 |
| Anzahl Kanäle | 19 | 19 | 19 | 19 | 19 | 19 |
| Kanaldurchmesser (mm) | 0.17 | 0.18 | 0.18 | 0.19 | 0.18 | 0.18 |
| Spezifische Oberfläche (mm$^2$/g) | 597.47 | 306.06 | 143.03 | 437.5 | 379.4 | 455.07 |

Für jedes der sechs Treibladungspulver TLP1 bis TLP6 sind die Temperaturgradientenkurven im unteren und im oberen Temperaturbereich des Anwendungstemperaturbereichs angegeben. Der Anwendungstemperaturbereich erstreckt sich in diesen Beispielen von -40 °C bis +63 °C. Als unterer Temperaturbereich wird der Bereich von -40 °C bis +21 °C und als oberer Temperaturbereich der Bereich von +21 °C bis +63 °C verstanden. (Die Grenzen der Temperaturbereiche können auch anders definiert werden. Die Erfindung hängt nicht direkt von der Definition der Bereiche ab.) Der Temperaturgradient im unteren Temperaturbereich ist so definiert, dass das Verhältnis des Maximaldrucks p_max(-40 °C) an der unteren Grenze (-40 °C) des unteren Temperaturbereichs zu Maximaldruck p_max(+21 °C) an der oberen Grenze (+21 °C) des unteren Temperaturbereichs gebildet wird. Sinngemäss ist der Temperaturgradient im oberen Temperaturbereich durch das Verhältnis des Maximaldrucks p_max(+63 °C) an der oberen Grenze (+63 °C) zu Maximaldruck p_max(+21 °C) an der unteren Grenze des oberen Temperaturbereichs definiert. Die Druckwerte werden in an sich bekannter Weise im Druckbombenversuch ermittelt. (Der Temperaturgradient braucht nicht auf die Grenzen der jeweiligen Temperaturbereiche bezogen zu sein. Es können auch Messtemperaturen verwendet werden, die zwar nahe an den Temperaturgrenzen sind, aber noch innerhalb des jeweiligen Temperaturbereichs liegen.)

Die Temperaturgradientenkurven entstehen dadurch, dass ein bestimmtes Treibladungspulver-Rezept mit bestimmten Herstellungsparametern verarbeitet wird, und dass nur der Feststoffgehalt für die Behandlung schrittweise verändert wird. Für jeden Feststoffgehalt ist der untere und der obere Temperaturgradient als Wert eingetragen.

Analog lässt sich aus Druckbombenversuchen das Verhältnis der Lebhaftigkeiten ermitteln. Die Kurven aus Beschussdaten einer Waffe und einer Druckbombe verlaufen sehr ähnlich; sie unterscheiden sich nicht in den x-Werten und sind lediglich um 2% kleiner in den y-Werten. Einige der Kurven auf Basis von Druckbombenergebnissen sind auf Waffenwerte mit ermittelten Korrelationsfaktoren umgerechnet worden.

Die beschriebenen Treibladungspulver sind zwei- oder dreibasig.

Bei zweibasigen Rezepturen liegt der Anteil an Nitrocellulose zwischen 50 und 65 Gew.-%, wobei der Stickstoffgehalt der Nitrocellulose zwischen 12.6 und 13.5% variiert. Der Anteil des energetischen Weichmachers wird dem Gehalt an Nitrocellulose angepasst und liegt bei 35 - 50 Gew.-%, d. h. je mehr Nitrocellulose enthalten ist, umso weniger des energetischen Weichmachers wird verwendet. Als energetische Weichmacher werden Nitroglycerin, DEGDN oder ihre Gemische verwendet. Ebenfalls als Weichmacher eingesetzt werden NENA-Derivate wie Me-NENA, Et-NENA, Bu-NENA und ihre Gemische. Weitere Zuschlagstoffe wie Stabilisatoren oder Flammschutzdämpfer liegen normalerweise zu Anteilen von weniger als 2 Gew.-% vor.

Der Nitrocellulose-Anteil bei dreibasigen Rezepturen liegt bei 40 bis 50 Gew.-%. Der Anteil der energetischen Weichmacher variiert zwischen 20 und 35 Gew.-%. Es können dieselben Weichmacher verwendet werden wie bei der Herstellung der zweibasigen Treibladungspulver. Zusätzlich werden kristalline Komponenten wie RDX oder Nitroguanidin oder eine Mischung aus beiden Komponenten verwendet. Ihr Anteil liegt bei 15 - 30 Gew.-%. Hinzu kommen Zuschlagstoffe wie Stabilisatoren und/oder Flammschutzdämpfer, die normalerweise einen Anteil von 2 Gew.-% nicht übersteigen.

TLP1 - TLP6 wurden nach einer zwei- oder dreibasigen Rezeptur hergestellt und folgendermassen weiterbehandelt:

TLP1: In einer Rotationstrommel wurden 55 kg Grünkorn in 19-Loch-Geometrie, mit einem Durchmesser von 5,5 mm, einem Lochdurchmesser von 0.17 mm und einer spezifischen Oberfläche von 597.47 mm$^2$/g vorgelegt und auf 30 °C erwärmt. Zum warmen Grünkorn wurde unter Drehen mit 13.5 U/min ein 50:50 Gemisch aus Talk und Graphit gegeben, wobei die gesamte Feststoffmenge zwischen 0.3 und 0.8 Gew.-% (165 - 440 g) variierte. Sobald die Feststoffe homogen auf dem Grünkorn verteilt waren, wurden 788 g Lösungsmittel (Ethanol:Wasser, 3:1; ca. 17 ml pro kg Grünkorn) und 55 g Polytetrahydrofuran (0.1 Gew.-%) dazugegeben und bei geschlossener Trommel bei 30 °C während 60 min gemischt. Danach wurde der Verschlussdeckel entfernt und das Lösungsmittel unter Drehen während 30 min abgedampft. Das behandelte Grünkorn wurde bei ca. 55 °C solange gelagert, bis der Konzentrationsgradient des Phlegmatisators geringer war als der ermittelte kritische Gradient (ca. 90 h).

TLP2: In einer Rotationstrommel wurden 55 kg Grünkorn in 19-Loch-Geometrie, mit einem Durchmesser von 12.3 mm, einem Lochdurchmesser von 0.18 mm und einer spezifischen Oberfläche von 306.06 mm$^2$/g vorgelegt und auf 30 °C erwärmt. Zum warmen Grünkorn wurden unter Drehen mit 13.5 U/min 50 g Talk (0.10 Gew.-%) gegeben und der Graphitanteil von 0 bis 0.2 Gew.-% (0 bis 16 g) variiert. Für die Proben mit weniger als 0.1 Gew.-% Gesamtfeststoffanteil wurde die zugegebene Talkmenge entsprechend reduziert. Sobald die Feststoffe homogen auf dem Grünkorn verteilt waren, wurden 695 g Lösungsmittel (Ethanol:Wasser, 3:1; 15 ml pro kg Grünkorn) und 55 g Polytetrahydrofuran (0,1 Gew-%) zugegeben und bei geschlossener Trommel bei 30 °C während 60 min gemischt. Danach wurde der Verschlussdeckel entfernt und das Lösungsmittel unter Drehen während 30 min abgedampft. Das behandelte Grünkorn wurde bei ca. 55 °C solange gelagert, bis der Konzentrationsgradient des Phlegmatisators geringer war als der ermittelte kritische Gradient (ca. 70 h).

TLP3: In einer Rotationstrommel wurden 55 kg Grünkorn in 19-Loch-Geometrie, mit einem Durchmesser von 13.89 mm, einem Lochdurchmesser von 0.18 mm und einer spezifischen Oberfläche von 143.03 mm$^2$/g vorgelegt und auf 30 °C erwärmt. Zum warmen Grünkorn wurde unter Drehen mit 13.5 U/min Graphit in einer Menge von 0.02 bis 0.125 Gew.-% (11 bis 69 g) gegeben. Sobald der Feststoff homogen auf dem Grünkorn verteilt war, wurden 512 g Lösungsmittel (Ethanol:Wasser, 3:1; 11 ml pro kg Grünkorn) und 55 g Polytetrahydrofuran (0,1 Gew.-%) zugegeben und bei geschlossener Trommel bei 30 °C während 60 min gemischt. Danach wurde der Verschlussdeckel entfernt und das Lösungsmittel unter Drehen während 30 min abgedampft. Das behandelte Grünkorn wurde während 70 h bei ca. 55 °C getrocknet.

TLP4: In einer Rotationstrommel wurden 20 kg Grünkorn in 19-Loch-Geometrie, mit einem Durchmesser von 8.65 mm, einem Lochdurchmesser von 0.19 mm und einer spezifischen Oberfläche von 437.5 mm$^2$/g vorgelegt und auf 30 °C erwärmt. Zum warmen Grünkorn wurde unter Drehen mit 13.5 U/min ein 50:50 Gemisch aus Talk und Graphit gegeben, wobei die gesamte Feststoffmenge zwischen 0.3 und 0.6 Gew.-% (60-120 g) variierte. Sobald der Feststoff homogen auf dem Grünkorn verteilt war, wurden 312 g Lösungsmittel (Ethanol:Wasser, 3:1; 18 ml pro kg Grünkorn) und 20 g Polytetrahydrofuran (0.1 Gew-%) zugegeben und bei geschlossener Trommel bei 30 °C während 60 min gemischt. Danach wurde der Verschlussdeckel entfernt und das Lösungsmittel unter Drehen während 30 min abgedampft. Das behandelte Grünkorn wurde während 70 h bei ca. 55 °C getrocknet.

Um den Zusammenhang zwischen Feststoffmenge und spezifischer Oberfläche ermitteln zu können muss die Menge an Treibladungspulver bei der Behandlung konstant gehalten werden, weil sie ebenfalls einen Einfluss auf die zu verwendende Feststoffmenge besitzt. Je mehr Treibladungspulver sich in der Trommel befindet, desto geringer ist die benötigte Feststoffmenge. Dies ist mit dem Massendruck und der dadurch verbesserten Verdichtung des Feststoffs in den Löchern zu erklären. Deshalb wurde ein Testversuch mit 55 kg Grünkorn der beschriebenen durchgeführt. Es wurde ermittelt, dass sich die Menge an Feststoff zur Einstellung des gleichen Effektes im Vergleich zum Einsatz von 20 kg Treibladungspulver um 12% verringert.

TLP5: In einer Rotationstrommel wurden 55 kg Grünkorn in 19-Loch-Geometrie, mit einem Durchmesser von 9.91 mm, einem Lochdurchmesser von 0.18 mm und einer spezifischen Oberfläche von 379.4 mm$^2$/g vorgelegt und auf 30 °C erwärmt. Zum warmen Grünkorn wurde unter Drehen mit 13.5 U/min ein 50:50 Gemisch aus Talk und Graphit gegeben, wobei die gesamte Feststoffmenge zwischen 0.15 und 0.37 Gew.-% (82,5-203,5 g) variierte. Sobald die Feststoffe homogen auf dem Grünkorn verteilt waren, wurden 670 g Lösungsmittel (Ethanol:Wasser, 3:1; 14 ml pro kg Grünkorn) und 77 g Polyterahydrofuran (0.14 Gew-%) zugegeben und bei geschlossener Trommel bei 30 °C während 60 min gemischt. Danach wurde der Verschlussdeckel entfernt und das Lösungsmittel unter Drehen während 30 min abgedampft. Das behandelte Grünkorn wurde während ca. 70 h bei 55 °C getrocknet.

TLP6: In einer Rotationstrommel wurden 55 kg Grünkorn in 19-Loch-Geometrie, mit einem Durchmesser von 7.99 mm, einem Lochdurchmesser von 0.18 mm und einer spezifischen Oberfläche von 455.7 mm$^2$/g vorgelegt und auf 30 °C erwärmt. Zum warmen Grünkorn wurde unter Drehen mit 13.5 U/min ein 50:50 Gemisch aus Graphit und Talk in einer Menge von 0.28 bis 0.52 Gew.-% (154 bis 286 g) gegeben. Sobald die Feststoffe homogen auf dem Grünkorn verteilt waren, wurden 927 g Lösungsmittel (Ethanol:Wasser, 3:1; 19.5 ml pro kg Grünkorn) und 55 g Polytetrahydrofuran zugegeben und bei geschlossener Trommel bei 30 °C während 60 min gemischt. Danach wurde der Verschlussdeckel entfernt und das Lösungsmittel unter Drehen während 30 min abgedampft. Das behandelte Grünkorn wurde während ca. 70 h bei 55 °C getrocknet.

Aus der Fig. 1 ist ersichtlich, dass für jedes Treibladungspulver-Rezept ein Konzentrationsbereich für den Feststoff existiert, in welchem sich die obere und die untere Temperaturgradientenkurve überschneiden bzw. kreuzen. Die obere Temperaturgradientenkurve (der "Heiss-Ast") verläuft mit zunehmendem Feststoffanteil von höheren zu tieferen Werten, dementsprechend verläuft die untere Temperaturgradientenkurve (der "Kalt-Ast") mit zunehmendem Feststoffanteil von tieferen zu höheren Werten. Für das TLP1 ist der Schnittpunkt bei rund 0.6 Gew.-% Feststoff, für das TLP2 bei rund 0.2 Gew.-% und für das TLP3 bei rund 0.08 Gew.-%. Der Schnittpunkt für das TLP4 liegt bei 0.45 Gew.-% und derjenige für das TLP5 bei 0.27 Gew.-%.

Zu beachten ist, dass für das TLP6 das Verhältnis der Lebhaftigkeiten bei 21 °C und -40 °C nicht so stark vom Feststoffanteil beeinflusst war. Die Lebhaftigkeit bei -40 °C stieg bei der Erhöhung der Feststoffmenge von 0.25 auf 0.85 Gew.-% lediglich von 89% auf 93% der Lebhaftigkeit bei 21 °C an. Der Schnittpunkt mit der erwartungsgemäss verlaufenden oberen Temperaturgradientenkurve liegt bei 0.42 Gew.-%.

Weiter ist aus Fig. 1 ersichtlich, dass sich in der Umgebung des Schnittpunkts die Temperaturgradienten bei einer Änderung der verwendeten Feststoffmenge stark ändern. Als starke Änderung gilt in diesem Zusammenhang eine Steigung, die vom Betrag her grösser ist als 20. Zudem gibt es stets Feststoffmengenbereiche, in denen sich der Temperaturgradient trotz Änderung der Feststoffmenge praktisch nicht ändert. In diesen Bereichen weisen die Kurven Steigungen auf, die vom Betrag her unter 20 liegen. Derjenige Bereich, in welchem eine Abhängigkeit des Temperaturgradienten von der Feststoffmenge besteht, wird im Rahmen der Erfindung als Einstellbereich bezeichnet. Mit anderen Worten: In dem Einstellbereich kann über die Veränderung der Menge an Feststoff auf den Temperaturgradienten Einfluss genommen werden. Der Temperaturgradient kann also allein durch den Feststoffgehalt gesteuert bzw. bestimmt werden (bei ansonsten gleichen Bedingungen).

Der Anfangswert des relativen Maximaldrucks des lediglich graphitierten Treibladungspulvers hängt vom Temperaturgradienten des unbehandelten Korns ab und ist rezepturspezifisch. Der Einstellbereich hängt von der spezifischen Oberfläche des Treibladungskorns ab. Die spezifische Oberfläche (Fläche pro Gewicht) ist durch die Geometrie (einschliesslich Anzahl Kanäle) und das Schüttgutvolumen bestimmt. Bei groben Körnern (mit geringer spezifischer Oberfläche z.B. im Bereich von 100 mm$^2$/g) ist der Einstellbereich relativ eng (z. B. 0.06 Gew.-% breit), während bei feinen Körner (mit grosser spezifischer Oberfläche von z. B. 1000 mm$^2$/g) der Einstellbereich durchaus eine Breite von 0.5 Gew.-% haben kann (nicht abgebildet). Zudem ist der Einstellbereich z. B. bei 19-Loch-Pulvern höher als bei 7-Loch-Pulvern, da bei einer grösseren Anzahl an Kanälen mehr Feststoff benötigt wird, um alle Kanäle zu füllen.

Die Temperaturgradienten im oberen Temperaturbereich nehmen mit zunehmender Menge an Feststoff ab. Bei den grössten Körnern (TLP3) beginnt der obere Temperaturgradient, also der "Heiss-Ast", bei ca. 107% und fällt dann in der Art einer "Z-Kurve" auf 85% ab. Der gleiche Temperaturgradient für die mittleren Körner (TLP2) fällt von ca. 111% (bei 0.1 Gew.-% Feststoff) auf 85% (bei 0.25 Gew.-% Feststoff) ab. Ähnlich verläuft "Heiss-Ast" für TLP5-Körner, die von 109% (bei 0.16 Gew.-% Feststoff) auf 85% (bei 0.32 Gew.-% Feststoff) fällt. Von vergleichbarer Grössenordnung ist auch der obere Temperaturgradient der TLP6-Körner, der von ca. 110% (bei 0.3 Gew.-% Feststoff) auf 85% bei 0.52 Gew.-% Feststoff abfällt. Für die TLP4-Körner verläuft die Kurve von 110% (bei 0.7 Gew.-% Feststoff) zu 85% (bei 0.55 Gew.-%). Beim kleinsten Treibladungspulver (TLP1) beginnt der "Heiss-Ast" bei ca. 108% (bei 0.4 Gew.-% Feststoff) und fällt auf 85% ab (bei 0.7 Gew.-% Feststoff).

Im unteren Temperaturbereich steigen die Temperaturgradientenkurven jeweils S-förmig an. Der "Kalt-Ast" für das TLP3 beginnt bei ca. 95% und steigt auf 105% an. Die Kurven für das TLP2 und das TLP5 steigen von 86% auf ebenfalls 105% an. Die entsprechenden Kurven für das TLP4 bzw. das TLP1 beginnen bei 93% bzw. 97% und steigen auf ebenfalls ca. 105%. Lediglich für das TLP 6 ist der "Kalt-Ast" auffällig flach. Er verläuft von 89% auf 93% und kann nicht durch weitere Zugabe an Feststoff weiter beeinflusst werden. Das abweichende Verhalten kann mit einer anderen Rezeptur des Grünkorns begründet werden. Während TLP1 - TLP5 Kombinationen von Nitroglyzerin (NGL) und Diethylenglykoldinitrat (DEGDN) bzw. NENA enthalten, liegt in der Matrix vom TLP6 lediglich DEGDN als einziger Weichmacher (Sprengöl) vor. Es ist bekannt, dass im Vergleich zu anderen Treibladungspulvern die DEGDN-Pulver auch bei -40 °C nicht spröde werden und eine gewisse Elastizität aufweisen. Somit liegt bei TLP 6 eine Grünkornrezeptur vor, die flexibel bleibt und nicht versprödet. TLP 6 zeigt ein Verhalten im unteren Temperaturbereich ("Kalt-Ast"), das auf einen signifikanten Einfluss der Rezeptur schliessen lässt.

Insgesamt kann man feststellen, dass je kleiner die Korngrösse, umso grösser die spezifische Oberfläche und umso breiter der Einstellungsbereich.

Allerdings ist der Einstellbereich bei Treibladungspulvern mit hoher spezifischer Oberfläche von der reinen Absättigung der Oberfläche des Treibladungspulvers nicht sauber zu trennen. Es stellt sich ein breiter Übergangsbereich ein, bei dem die Oberfläche noch nicht gesättigt ist, aber bereits Feststoff in die Kanäle eindringt. Dieser Effekt zeigt sich im vorliegenden Fall z. B. bei TLP4 und TLP1.

Dieser Zusammenhang kann dazu verwendet werden, gezielt zu optimalen Treibladungspulvern zu kommen. Die Temperaturabhängigkeit eines Treibladungspulvers ist am geringsten, wenn die Temperaturgradientenkurven sich schneiden. Dabei ist zu beachten, dass die angegebenen Kurven durch statistische Auswertung einer grossen Zahl von Druckbombenversuchen entstehen. Das heisst, der Temperaturgradient bei gegebener Feststoffmenge muss nicht exakt dem aus der Fig. 1 ablesbaren Wert entsprechen. Vielmehr streuen die einzelnen Temperaturgradienten in einem gewissen Mass. Ferner kann sich die Lage des Kreuzungspunktes innerhalb gewisser Grenzen verschieben, wenn die Herstellungsbedingungen wesentlich verändert werden. Entscheidend ist aber, dass bei sonst gleich bleibenden Bedingungen ein Optimum existiert und dass sich dieses Optimum durch ein weiter unten beschriebenes Testverfahren in jedem Einzelfall zuverlässig finden lässt.

Die Temperaturgradientenkurven können eine gewisse Veränderung erfahren, wenn vom Druckbombenversuch zum konkreten Waffensystem übergegangen wird. Mit den erfindungsgemässen Zusammenhängen kann aber auch bei diesem Übergang auf gezielte Weise das Optimum an Leistung erreicht werden. Mit einem ermittelten Korrelationsfaktor können die Kurven auf Basis von Druckbombenversuchen und diejenigen von Waffenversuchen ineinander umgerechnet werden. Wenn in einer bestimmten Produktionscharge der Temperaturgradient z. B. invers ist, dann kann durch eine reduzierte Menge an Feststoff bei der nächsten Charge ein gegenteiliger Temperaturgradient angestrebt werden, so dass sich beim Mischen der beiden Chargen die gewünschte minimale Temperaturabhängigkeit ergibt.

Fig. 2 zeigt den Zusammenhang zwischen der spezifischen Oberfläche (mm$^2$/g) und der gemittelten minimalen (Min.) und gemittelten maximalen (Max.) Menge an Feststoff (in Gew.-% bezogen auf das Grünkorn) im Bereich der spezifischen Oberfläche von ca. 150 - 600 mm$^2$/g, wenn zusammen mit der erfindungsgemässen Zapfengenerierung auch die Oberfläche poliert wird. Aus diesen Werten kann die optimale Menge (Opt.) an Feststoff ermittelt werden. Zudem wird der gesamte Einstellbereich E gezeigt.

Es ist klar erkennbar, dass die untere und obere Grenze des benötigten Feststoffs ungefähr proportional zur spezifischen Oberfläche sind. Daraus lässt sich ableiten, dass:

$$M(\text{Feststoff}) = K\_min \times F(\text{spezifische Oberfläche}) + Offset$$

$$M(\text{Feststoff}) = K\_max \times F(\text{spezifische Oberfläche}) + Offset$$

Die minimale Menge an Feststoff ergibt sich aus der spezifischen Oberfläche durch Multiplikation derselben mit dem Faktor K_min; analog dazu entspricht die maximale Feststoffmenge aus der spezifischen Oberfläche durch Multiplikation derselben mit dem Faktor K_max, wobei

K_min = 0.000'9 [g/mm$^2$],

K_max = 0.0014 [g/mm$^2$],

Offset = - 0.14

Für die optimale Feststoffmenge gilt:

$$M(\text{Feststoff}) = K\_opt \times F(\text{spezifische Oberfläche}) + Offset$$

mit K_opt = 0.0012 [g/mm$^2$]
Offset = -0.14

Mit den obigen Faktoren kann also ausgehend von der spezifischen Oberfläche des Grünkorns ermittelt werden, wie viel Feststoff zu verwenden ist, um in einem bevorzugten Verfahren, welches sowohl das Polieren der Körner als auch das Herstellen der verfestigten Zapfen zum Ziel hat, die Temperaturabhängigkeit einzustellen.

Der Einstellbereich ist insgesamt etwas grösser, als durch die Werte von K_min und K_max definiert, bei denen es sich um gemittelte Geraden handelt. Der Bereich liegt innerhalb der Grenzen E_min und E_max, mit

$$M(\text{Feststoff}) = E\_min \times F(\text{spezifische Oberfläche})$$

$$M(\text{Feststoff}) = E\_max \times F(\text{spezifische Oberfläche})$$

mit

E_min = 0.007 [g/mm$^2$] und
E_max = 0.0017 [g/mm2].

Der Einstellbereich entspricht bei der Auftragung der benötigten Feststoffmenge gegen die spezifische Oberfläche einem Kegelbereich, der sich mit zunehmender spezifischer Oberfläche verbreitert und zudem zu höheren Werten für die benötigte Feststoffmenge verschiebt. Der Einstellbereich ist für ein Korn mit einer bestimmten spezifischen Oberfläche charakteristisch.

Wenn das Polieren der Oberfläche in einem separaten, der Zapfenbildung vorgelagerten oder nachgelagerten Verfahrensschritt erfolgt, dann hängt die benötigte Menge an Feststoff nicht mehr von der spezifischen Oberfläche ab. Dies ist aus Fig. 3 ersichtlich. Die maximale Menge an Feststoff zur Behandlung der Oberfläche liegt bei: M_max = 0.14 Gew.-%.

Dementsprechend liegt die minimale Menge an Feststoff zur Behandlung der Oberfläche bei: M_min = 0.048 Gew.-%.

Die maximale Menge ist durch eine Obergrenze definiert, ab der sich trotz weiterer Zugabe der Temperaturgradient nicht mehr verändern lässt. Die minimale Feststoffmenge bewirkt eine Verringerung des Temperaturgradienten um 2%.

Soweit im Einzelfall nichts anderes gesagt ist, beziehen sich die Gew.-% auf die Menge des Grünkorns.

Generell kann das Polieren der Oberfläche in diesem Zusammenhang gleichgesetzt werden mit einer Graphitierung oder einer Absättigung der Oberfläche mit einem Gemisch aus Graphit und einem weiteren Feststoff.

Fig. 4 zeigt noch einmal den Zusammenhang zwischen der spezifischen Oberfläche des TLP-Korns und der benötigten Feststoffmenge zur Ausbildung von Zapfen (einschliesslich der Oberflächenbeschichtung mit Graphit). Dazu sind Feststoffmengen gegen die Schnittpunkte der oberen Temperaturgradienten aus Fig. 1 mit der 100%-Kurve für die einzelnen Korngrössen, repräsentiert durch ihre spezifische Oberfläche, aufgetragen. Die gestrichelte Kurve veranschaulicht wie die Feststoffmenge (beim Schnittpunkt mit der 100%-Kurve) von der spezifischen Oberfläche abhängt, wenn Trommel-Einbauten (Schikane) verwendet werden, die auf eine Minimierung der Graphitmenge optimiert sind. Wie die Grafik veranschaulicht, lassen sich Graphit-Mengen-Reduktionen im Bereich von bis zu 20% erreichen.

Für das optimierte Verfahren ergeben sich z. B. folgende reduzierte Feststoffmengen:

$$M(\text{Feststoff}) = K\_min \times F(\text{spezifische Oberfläche})$$

$$M(\text{Feststoff}) = K\_max \times F(\text{spezifische Oberfläche})$$

mit K_min = 3/4000 [g/mm$^2$]

und K_max = 6/5000 [g/mm2]

Die optimale Feststoffmenge liegt z. B. bei:

$$M(\text{Feststoff}) = K\_opt \times F(\text{spezifische Oberfläche})$$

mit

$$K\_opt = 1/1000 \ [g/mm^2].$$

Werden in einer Trommel von bestimmter Bauart (und mit bestimmten Schikanen) verschiedene Grünkorn-Proben behandelt, so steigt der Gewichtsanteil des notwendigen Feststoffs linear an (durchgehende Linie). Wird eine andere Trommel mit (anderen) optimierten Schikanen verwendet, so kann sich die notwendige Feststoffmenge für eine bestimmte Grünkorn-Probe proportional reduzieren (gestrichelte Linie). Die lineare Abhängigkeit der Graphitmenge von der spezifischen Oberfläche ist dabei weiterhin gegeben. Unterschiedlich optimal ausgeprägte Schikanen bzw. Inlets können die Menge an benötigtem Feststoff also beeinflussen. Dagegen ist der Einfluss des verwendeten Volumens und der verwendeten Füllmenge der Trommel, oder auch der Oberflächenrauhigkeit des Grünkorns auf die Graphit-Menge relativ gering.

Zu beachten ist aber auch der Einfluss der Umfangsgeschwindigkeit der Trommel auf den Effekt der Behandlung des Grünkorns mit Feststoff.

Ein weiterer Parameter ist die Umfangsgeschwindigkeit der Trommel. Somit muss je nach Radius bzw. Durchmesser der Trommel die Rotationsgeschwindigkeit angepasst werden, um eine konstante Umfangsgeschwindigkeit zu erhalten. Bei grösseren Trommeln muss also die Rotationsgeschwindigkeit, die in der Praxis die Einstellgrösse ist, verringert werden, um die gleiche Umfangsgeschwindigkeit einzustellen. Es wurden zwei Versuche mit TLP2 in einer 220 kg Trommel durchgeführt. Bei ansonsten gleichen Parametern betrug die Umfangsgeschwindigkeit im ersten Versuch 380 m/min. Beim zweiten Versuch war sie um 10% erhöht.

Es wurden 220 kg TLP2 mit insgesamt 0,1 Gew.-% Polytetrahydrofuran, 0,1 Gew.-% Talk, 0,095 Gew.-% Graphit und 15 ml/kg ethanolische Lösung (75% Ethanol in Wasser) mit Polytetrahydrofuran bei 30 °C behandelt.

Versuche in der 120 mm Waffe ergeben für das behandelte Pulver gemäss Versuch 1 einen Druckanstieg von 180 bar bzw. ein Verhältnis von p_max 63 °C zu p_max 21 °C von 103,2%. Für das Pulver aus dem Versuch 2, das bei höheren Umfangsgeschwindigkeiten behandelt wurde, ergibt sich ein Druckanstieg von 20 bar oder ein Verhältnis von p_max(63 °C) zu p_max(21 °C) von 100,3 %. Der gleiche Effekt kann auch durch Erhöhung der Feststoffmenge um 0,02% bei unveränderter Umfangsgeschwindigkeit erreicht werden. Vermutlich führt eine weitere Erhöhung der Umfangsgeschwindigkeit zu einer weiteren Verstärkung des Effekts.

Grundsätzlich stellten sich bei einer gleichen Umfangsgeschwindigkeit annähernd gleiche Resultate ein, wenn ansonsten alle Parameter der Behandlung des Grünkorns konstant gehalten werden.

Idealerweise ist das Verhältnis von Kornlänge zu Korndurchmesser 1:1 oder weicht nicht mehr als 20% davon ab. Ist die Kornlänge grösser als der Durchmesser, so wird in der Regel eine etwas höhere Menge an Feststoff einzusetzen sein, um einen vergleichbaren Effekt zu erzielen, wie bei einem Korn mit gleicher spezifischer Oberfläche, aber einem Verhältnis von Kornlänge zu Durchmesser von 1:1.

Versuche haben gezeigt, dass ein Verhältnis von Kornlänge zu Durchmesser kleiner als 1 die Abbrandcharakteristik nachteilig beeinflussen kann. Deshalb wird das Länge-zu-Durchmesser-Verhältnis vorzugsweise 1:1 oder grösser gewählt.

Es wurde eine kritische spezifische Oberfläche ermittelt, oberhalb welcher eine erfindungsgemässe Behandlung nicht erfolgreich ist. Sind nämlich die Körner oder die Kanäle in den Körnern zu klein, können keine Zapfen in den Lochkanälen gebildet werden. Bei Körnern mit einer spezifischen Oberfläche von ca. 1150 mm$^2$/g werden nachweislich keine Zapfen mehr gebildet.

Bereits bei spezifischen Oberflächen von 600 mm$^2$/g können substanzielle Abweichungen von der optimalen Schnittlänge die Folge haben, dass keine Zapfen ausgebildet werden. So kann z.B. eine Änderung des Verhältnisses von Länge zu Durchmesser von 1:1 auf 1:2 bei spezifischen Oberflächen über 600 mm$^2$/g dazu führen, dass die Zapfen nicht mehr mit der gewünschten Zuverlässigkeit gebildet werden.

Fig. 5 zeigt den Einfluss des Moderators auf die Temperaturabhängigkeit bei konstanter Feststoffmenge. Der Feststoffanteil ist dabei innerhalb des Einstellbereichs gewählt. Bemerkenswerterweise gibt es hier keinen Kreuzungspunkt zwischen den Temperaturgradientenkurven des oberen und des unteren Temperaturbereichs. Im unteren Temperaturbereich fällt die Temperaturgradientenkurve im Wesentlichen linear ab von 97.5% (bei 0 Gew.-% Moderator) auf 89% (bei 0.4 Gew.-% Moderator). Demgegenüber hat die obere Temperaturgradientenkurve ein Minimum von 100% im Bereich von 0.1 bis 0.15 Gew.-% Moderator. Bei Reduktion der Moderatormenge auf 0 Gew.-% erhöht sich der Temperaturgradient auf 105% und bei Erhöhung der Moderator auf 0.4 Gew.-% steigt der Temperaturgradient auf 112%.

Gemäss einem vorteilhaften Aspekt der Erfindung wird die Moderatormenge so gering wie möglich gewählt. Dies kann z.B. dann erreicht werden, wenn der Moderator in einer Menge von weniger als 0.1 Gew.-% eingesetzt wird. Die Menge von 0.1 Gew.-% ist dabei besonders bevorzugt, weil sie am unteren Ende des Minimalbereichs (0.1 - 0.15 Gew.-%) liegt, und weil hier der Temperaturgradient bei 100% liegt.

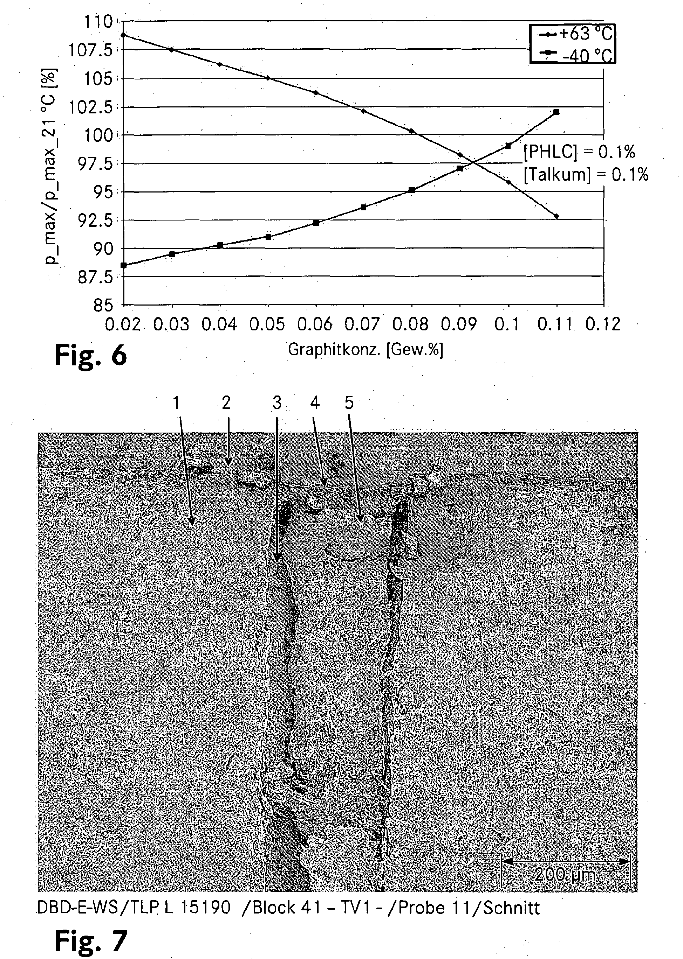

Fig. 6 zeigt einen Ausschnitt der Temperaturgradientenkurven für das TLP2. Als Feststoff wurden 0.1 Gew.-% Talkum mit unterschiedlichen Mengen (0.02 - 0.11 Gew.-%) an Graphit kombiniert. Der Moderator war konstant bei 0.1 Gew.-% (was am unteren Ende des Minimalbereichs gemäss Fig. 5 liegt). Der Schnittpunkt der oberen und der unteren Temperaturgradientenkurve liegt bei insgesamt rund 0.2 Gew.-% Feststoff (vgl. Fig. 1). Die aus der Fig. 6 ersichtlichen Messwerte sind mit einer statistischen Schwankungsbreite von 2% (bezüglich des Temperaturgradienten) zu verstehen. Die Stützpunkte der Temperaturgradientenkurven können als empirische Bemessungsregel benutzt werden und sind als konkrete quantitative Aussagen einsetzbar. Die ermittelte Kurve ist für die Treibladungspulverrezeptur, in diesem Fall ein dreibasiges Pulver mit NC/ DEGN/ NGL spezifisch. Bei geänderter Rezeptur kann sich ein anderer Verlauf ergeben.

Fig. 7 zeigt eine Fotografie eines aufgeschnittenen Treibladungskorns. Der Körper 1 hat z. B. eine kreiszylindrische Aussenform mit einem Durchmesser von z. B. 5.5 mm und einer Länge von z. B. 5-7 mm. Auf der Oberfläche 2 befindet sich eine Graphitschicht, welche für eine ausreichende elektrische Leitfähigkeit und für eine glatte Oberfläche sorgt. Der Körper 1 besitzt einen Kanal 3, welcher sich in axialer Richtung des Körpers 1 erstreckt und einen Durchmesser von z. B. 0.17 mm besitzt. In Fig. 5 ist nur einer von mehreren gleichartigen Kanälen sichtbar. Die Mündung des Kanals 3 ist mit einem Deckel 4 aus verfestigtem und ev. mit Moderator verklebtem Feststoff verschlossen. Der Deckel 4 ist dicht und verhindert den Flammeneintritt. In dem Kanal 3 sitzt ein Zapfen 5. Dieser ist mit dem Deckel 4 fest verbunden und bildet ein formstabiles Teil aus verdichtetem (ursprünglich körnigem) Feststoff.

Der Deckel 4 mit dem angeformten Zapfen 5 hat eine temperaturabhängige Mobilität. Das heisst, er hält dem Anzünddruck in einem bestimmten Bereich der Anwendungstemperatur stand. Damit der Abbrand bei hohen Temperaturen zu einem flacheren Verlauf des Gasdrucks führt, hält der Deckel 4 zusammen mit dem angeformten Zapfen 5 dem Anzünddruck stand z. B. ab einer Anwendungstemperatur von 35 °C, so dass die Zahl der brennenden Kanäle oberhalb dieser Anwendungstemperatur geringer ist als unterhalb. Da die temperaturabhängige Mobilität eine statistische Grösse ist (d. h. nicht alle Zapfen eines Korns haben genau die gleiche Mobilität), kann das Mehrlochpulver bei hoher Anwendungstemperatur im Durchschnitt mit weniger Löchern brennen als bei niedriger Temperatur.

Dieser Effekt ist an sich aus der US 7,051,658 (Nitrochemie Wimmis, Nitrochemie Aschau) bekannt. Neu ist im vorliegenden Zusammenhang, dass die Temperaturabhängigkeit im Grundsatz nur durch die geeignete Wahl der Feststoffmenge eingestellt wird, und dass sich dieser Effekt gezielter optimieren lässt.

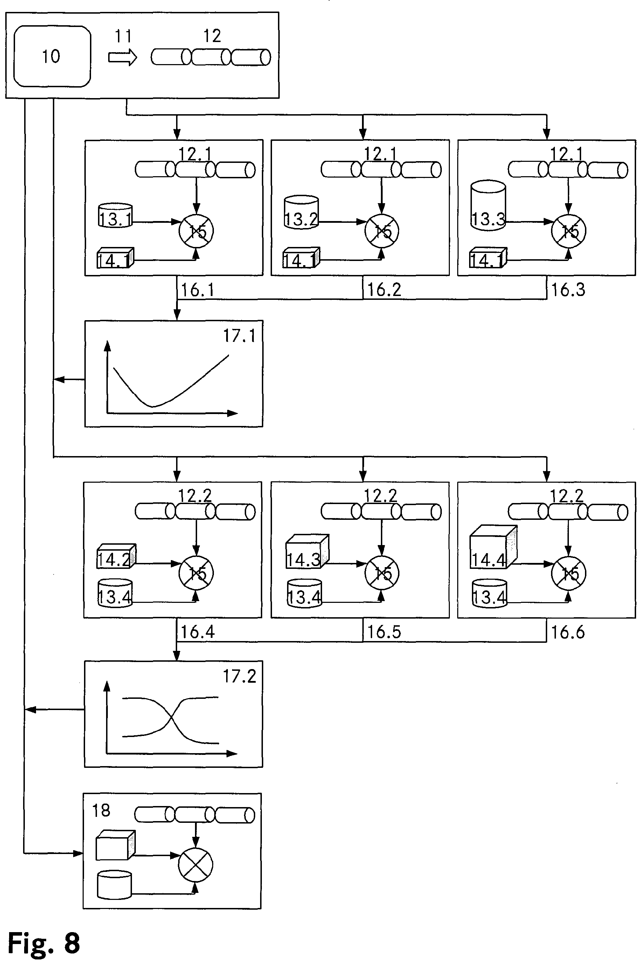

Anhand der Fig. 8 wird nun das besonders bevorzugte Verfahren zur Optimierung des temperaturabhängigen Verhaltens des Treibladungspulvers erläutert.

Generell wird wie folgt vorgegangen:

1. Die Geometrie des Treibladungskorns (Form, Anzahl Kanäle, Abmessungen) ist durch die beabsichtigte Anwendung bestimmt.

2. Aufgrund dieser vorgegebenen Ausgestaltung und der damit definierten spezifischen Oberfläche wird der Mindestwert an Feststoff gewählt. Dieser liegt bei einer kombinierten Behandlung (Graphitierung + Zapfenbildung) über der Menge, die man konventionellerweise zum Polieren des konkret vorliegenden Grünkorns benötigt.

3. Dann werden Testbehandlungen mit verschiedenen Moderatormengen (ganz niedrig, mittel, relativ hoch) durchgeführt, um den flachen Bereich der Temperaturgradientenkurve zu ermitteln.

4. Die Lösungsmittelmenge wird so angepasst, dass das Grünkorn die Lösungsmittelmenge während der Behandlung aufnehmen kann.

5. Dann wird zur Bestimmung der Graphitmenge gegangen. Die Testbehandlungen müssen so ausgelegt sein, dass die Abhängigkeit des Temperaturgradienten von der Feststoffmenge in den Tests feststellbar ist. Sollte kein Temperatureffekt feststellbar sein, ist die Feststoffmenge zu niedrig. Ist man im inversen Bereich, ist die Feststoffmenge zu hoch.

In an sich bekannter Weise wird ein Pulverteig 10 zubereitet z. B. durch Kneten von 58 Gew.-% Nitrocellulose, 26 Gew.-% Nitroglycerin und 16 Gew.-% Diethylenglykoldinitrat. Als Stabilisator kann z. B. Akardit II verwendet werden. Die Menge an Pulverteig beträgt z. B. 8000 kg. Diese sogenannte Losgrösse kann je nach Anwendung auch anders gewählt sein und dient im Folgenden nur als erläuterndes Zahlenbeispiel für die Mengenverhältnisse.

Aus dem Pulverteig 10 wird durch Strangextrusion 11 das Grünkorn 12 hergestellt. Die Extrusionsmatrize erzeugt z. B. 19 Löcher mit einem Innendurchmesser im Bereich von 0.15 - 0.20 mm. Die Löcher müssen nicht alle gleich gross sein, es kann z. B. von Vorteil sein, zwei verschiedene Lochdurchmesser vorzusehen. Der Einfachheit halber wird im vorliegenden Beispiel aber von im Wesentlichen gleich grossen Löchern ausgegangen.

Aus dem so hergestellten Los des Grünkorns 12 werden drei gleiche Teilmengen 12.1 von beispielsweise 10 kg entnommen. In der ersten Testbehandlung 16.1 wird die erste Teilmenge 12.1 mit einer ersten Moderator-Testmenge 13.1 und einer Feststoff-Testmenge 14.1 in einer Mischapparatur 15 (z. B. eine rotierende Behandlungstrommel) im Sinne der Erfindung verarbeitet, so dass verfestigte Zapfen (wie in Fig. 6 gezeigt) entstehen. In der zweiten Testbehandlung 16.2 werden in der gleichen Mischapparatur 15 die zweite Teilmenge 12.1, die zweite Moderator-Testmenge 13.2 und die Feststoff-Testmenge 14.1 mit den ansonsten gleichen Verfahrensbedingungen wie die erste Testmenge 12.1 verarbeitet. Sinngemäss werden bei der dritten Testbehandlung 16.3 die Teilmenge 12.1, die Moderator-Testmenge 13.3 und die Feststoff-Testmenge 14.1 verarbeitet. Bei diesen drei Testbehandlungen 16.1 - 16.3 unterscheiden sich nur die Moderator-Testmengen 13.1 - 13.3. Sie werden z. B. auf 0.05, 0.15 und 0.25 Gew.-% festgelegt. Die Feststoff-Testmengen 14.1 sind gleich gross und liegen z. B. in der Mitte des Einstellbereichs für die spezifische Oberfläche des Grünkorns (Fig. 2 und Fig. 3).

Die aus den drei Testbehandlungen 16.1, 16.2, 16.3 gewonnenen Treibladungspulver werden in der Druckbombe hinsichtlich ihrer Temperaturabhängigkeit untersucht, und es wird der anhand Fig. 4 erläuterte Minimalbereich der Temperaturabhängigkeit bezüglich der Moderatormenge ermittelt. Aufgrund dieser Untersuchung 17.1 kann der Benutzer einen passenden Wert für die Moderatormenge wählen. Dabei wird die Moderatormenge vorzugsweise am unteren Ende des Minimalbereichs gewählt. Die gewählte Moderatormenge 13.4 (z. B. 0.08 Gew.-% bei einem Treibladungspulver gemäss Fig. 4) wird für die nächste Teststufe (und die später folgende Produktionsstufe) beibehalten.

In der nächsten Stufe werden aus dem Los des Grünkorns 12 drei weitere, gleiche Teilmengen 12.2 von wiederum je 10 kg abgezweigt. Die erste Teilmenge 12.2 wird mit der aufgrund der ersten Testbehandlungsstufe gewählten Moderator-Testmenge 13.4 (welche in der Regel nicht einer der Moderator-Testmengen 13.1 - 13.3 entspricht) und einer ersten Feststoff-Testmenge 14.2 in einer Mischapparatur 15 im Sinne der Erfindung verarbeitet (Testbehandlung 16.4), so dass verfestigte Zapfen entstehen. In der gleichen Mischapparatur 15 werden die zweite Teilmenge 12.2, die Moderator-Testmenge 13.4 und die Feststoff-Testmenge 14.3 mit den ansonsten gleichen Verfahrensbedingungen wie die erste Testmenge 12.2 verarbeitet (Testbehandlung 16.5). Sinngemäss wird bei der dritten Teilmenge 12.2 die Moderator-Testmenge 13.4 mit der Feststoff-Testmenge 14.4 verarbeitet (Testbehandlung 16.6). Bei diesen drei Testbehandlungen 16.4 - 16.6 unterscheiden sich nur die Feststoff-Testmengen 14.2 - 14.4. Sie werden z. B. auf 0.5, 0.6 und 0.7 Gew.-% festgelegt bei einem Grünkorn vom Typ TLP1 in Fig. 1. Die Moderator-Testmengen 13.4 sind gleich gross. Generell kann die Feststoff-Testmenge auf den minimalen, den optimalen und den maximalen Wert an Feststoff gemäss Fig. 2 bzw. Fig. 3 festgelegt werden. Vorzugsweise sind die drei Feststoff-Testmengen um weniger als die Hälfte des Einstellbereichs verschieden, damit der Verlauf der Temperaturgradientenkurven sicher ermittelt werden kann, und man sich nicht beidseitig im flachen Bereich der S- oder Z-Charakteristika befindet.

Die aus den drei Testbehandlungen 16.4, 16.5, 16.6 gewonnenen Treibladungspulver werden in der Druckbombe hinsichtlich ihrer Temperaturabhängigkeit untersucht, und es wird der anhand Fig. 1 erläuterte Kreuzungsbereich der Temperaturabhängigkeit bezüglich der Feststoffmenge ermittelt. Aufgrund dieser Untersuchung 17.2 kann der Benutzer einen passenden Wert für die Feststoffmenge wählen. Dabei wird die Feststoffmenge vorzugsweise ungefähr im Kreuzungspunkt der Temperaturgradientenkurven gewählt. Bei einem Treibladungspulver gemäss Fig. 5 wäre die optimale Feststoffmenge bei ungefähr 0.09 Gew.-% Graphit plus 0.1 Gew.-% Talkum. Beim Beispiel der Fig. 5 könnte die Feststoffmenge durchaus auch bei ca. 0.08 Gew.-% Graphit und 0.1 Gew.-% Talkum (also insgesamt 0.18 Gew.-% Feststoff) liegen, weil dies immer noch ausreichend nahe beim Kreuzungspunkt ist (d. h. weniger als 10% Abweichung an Feststoff) und gleichzeitig einen Temperaturgradient im oberen Temperaturbereich (21-63 °C) nahe bei 100% hat.

Die gewählten Moderator- und Feststoffmengen werden in der Produktion 18 eingesetzt, welche typischerweise mit Chargen von 200 kg oder mehr arbeiten. In der Praxis wird in gewissen Abständen (d. h. für gewisse Produktionschargen) geprüft, ob das Treibladungspulver nach wie vor die angestrebten Eigenschaften besitzt. Sofern die Temperaturabhängigkeit sich verändert, kann mit gezielten Anpassungen der Feststoffmenge eine Korrektur vorgenommen werden. Der Moderatorgehalt muss nicht und soll nicht verändert werden. Ob die Feststoffmenge eher etwas erhöht oder erniedrigt werden soll, lässt sich anhand des Ergebnisses der Untersuchung 17.2 bestimmen. Weil der Feststoff inert gegenüber dem Treibladungspulver ist, ist sichergestellt, dass die Veränderung der Herstellungsparameter (Feststoffmenge) keine unerwünschten Nebeneffekte zeigen. Es kann gezielt nur auf die Temperaturabhängigkeit Einfluss genommen werden.

Die Verträglichkeit der verwendeten Substanzen (Feststoff, Moderator) mit dem Grünkorn kann von Fall zu Fall mit geeigneten Messmethoden festgestellt werden. So werden z. B. intensive Mischungen von Grünkorn und von Oberflächenbehandlungsmaterialien bei 80 °C im Wärmeflusskalorimeter (WFK) auf extensive Wärmeentwicklung hin untersucht, oder das Oberflächenbehandlungsmaterial wird in überschüssigen Mengen auf das Grünkorn aufgetragen oder ins Grünkorn eindiffundiert. Diese Proben werden dem 90 °C-Gewichtsverlusttest unterzogen oder im WFK untersucht. Ein weiterer Test zur Bestimmung der Verträglichkeit ist die Bestimmung der Verpuffungstemperatur solcher Oberflächenbehandlungsmaterialien/ Grünkornmischungen.

Die Flüssigkeit und der Feststoff sowie das Verhältnis Feststoff/Flüssigkeit sind so zu wählen, dass die Feststoffpartikel nicht agglomerieren, sondern ihre volle Beweglichkeit behalten. Dies ist wichtig für die Bildung der Zapfen in den Mündungen der Kanäle.

Grundsätzlich kann jeder Feststoff oder jede Feststoffmischung verwendet werden, die innerhalb des Anwendungstemperaturbereichs des Treibladungspulvers chemisch stabil und mit der Treibladungspulver-Rezeptur verträglich ist und somit die chemische Lebensdauer nicht negativ beeinflusst. Zudem darf der Feststoff im gesamten Herstellungs-, Beschuss- und Lagerungstemperaturbereich nicht schmelzen und während der gesamten Lebensdauer nicht zu wesentlichen Anteilen vom Treibladungspulver-Korn wegsublimieren und/oder hineindiffundieren. Bevorzugt werden Substanzen gewählt, deren Schmelzpunkt mindestens 10 °C, insbesondere 20 °C oberhalb der maximalen Einsatztemperatur liegen. Bevorzugt sind Substanzen, die einen Schmelzpunkt oberhalb von 90 °C besitzen und in der Treibladungspulver-Rezeptur unlöslich sind oder allenfalls eine nur sehr geringe Löslichkeit darin aufweisen.

Bevorzugt werden zudem Feststoffe oder Feststoffmischungen, welche einen positiven Einfluss auf das Treibladungspulver ausüben (LOVA-Eigenschaften = Low Vulnerability Ammunition, hohe Schüttdichte, gute Rieselfähigkeit, erosionsmindernd, feuerscheindämpfend, hoher Energieinhalt, elektrische Leitfähigkeit und gute Anzündbarkeit).

Bei den Feststoffen oder deren Mischungen handelt es sich vor allem um inerte Stoffe.

Aus Gründen der Anzündbarkeit des Treibladungspulvers müssen von inerten Feststoffen oder deren Mischungen möglichst geringe Mengen verwendet werden.

Als Moderatoren werden feste oder flüssige Stoffe eingesetzt. Dabei müssen sich die festen Moderatoren in der niederviskosen Flüssigkeit, die als dritte Komponente eingesetzt wird, lösen. Flüssige Moderatoren oder Moderatorlösungen können in der niederviskosen Flüssigkeit auch emulgiert vorliegen.

Als Moderatoren eignen sich im Prinzip alle festen und flüssigen Substanzen, die eine gute chemische Verträglichkeit mit der Grundrezeptur des Grünkorns und eine geringe Flüchtigkeit aufweisen (z. B. Dampfdruck bei 21 °C von < $10^{-2}$ bar). Dabei kann der Moderator als Reinsubstanz oder als Substanzmischung eingesetzt werden.

Die eingesetzten Moderatoren sind im Allgemeinen inerte Stoffe. Es ist aber durchaus möglich, dass energetische "Moderatoren" eingesetzt werden können: Diese müssen allerdings unempfindlich sein gegenüber der mechanischen Belastung während des Oberflächenbehandlungsprozesses, bei der späteren Munitionslaborierung bzw. beim Munitionstransport und -einsatz.

Der Moderator kann in der Treibladungspulver-Matrix entweder löslich oder unlöslich sein. Ist der Moderator löslich, so wird er auch als Phlegmatisator bezeichnet und kann auch entsprechend dieser an sich bekannten Funktion eingesetzt werden.

Beim Einsatz eines in der Treibladungspulver-Matrix löslichen Moderators bildet sich bei der Oberflächenbehandlung in der äussersten Treibladungspulver-Schicht ein Konzentrationsgradient aus. Dieser Konzentrationsgradient kann sich während der Treibladungspulver-Lebensdauer durch Diffusion abbauen, was zwangsläufig die Abbrandeigenschaften des Treibladungspulvers ändert. Dies äussert sich meistens in höheren Lebhaftigkeiten und Spitzengasdrücken, was die ballistischen Eigenschaften ungünstig beeinflusst und im Extremfall die Waffe zerstören kann.

Diese (durch Diffusionsprozesse verursachte) ballistische Instabilität des Treibladungspulvers darf nicht auftreten. Daher hat das Problem der Moderatordiffusion eine zentrale Bedeutung in der Oberflächenbehandlung von Treibladungspulvern. Die Diffusionsphänomene sind von der Zusammensetzung des Treibladungspulvers, von der Art des eingesetzten Moderators und von der Temperatur abhängig.

Werden zwei- oder mehrbasige Treibladungspulver mit hohen Sprengölkonzentrationen verwendet, so ist die Diffusion von Moderatoren relativ stark begünstigt. Deshalb muss die erfindungsgemässe Oberflächenbehandlung so ausgelegt werden, dass während der Treibladungspulver-Lagerung keine oder nur eine geringe diffusionsbedingte Veränderung der innenballistischen Eigenschaften auftreten. Werden leicht diffundierende Moderatoren eingesetzt, so müssen entweder genügend kleine Mengen verwendet werden, oder es muss sichergestellt sein, dass der Diffusionsprozess vor der Laborierung in die Munition praktisch abgeschlossen ist.

Beispiele für besonders gut geeignete niederviskose Flüssigkeiten sind Wasser, Gemische aus Wasser und Methanol, Gemische aus Wasser und Ethanol, Gemische aus Wasser und Propanol, Gemische aus Wasser und Aceton, Gemische aus Wasser und Tetrahydrofuran, sowie Pentan, Hexan, Heptan, Cyclohexan, Toluol, Methylenchlorid und deren Mischungen.

Mit den oben erwähnten Substanzen werden perforierte Treibladungspulver in einer Poliertrommel behandelt. Das Volumen einer beliebig grossen Poliertrommel aus Stahl oder Kupfer, wobei das Minimalvolumen auf etwa 10 Liter beschränkt ist, wird dazu teilweise mit einem perforierten Treibladungspulver gefüllt. Der angestrebte Füllgrad liegt dabei zwischen 5 und 50%, bevorzugt zwischen 10 und 40%. Das Treibladungspulver kann ungraphitiert oder graphitiert sein. Dazu wird unter Drehen zuerst der Feststoff oder die Feststoffmischung aufgetragen und homogen auf die gesamte Treibladungspulver-Oberfläche verteilt. Ist das eingesetzte Treibladungspulver schon genügend graphitiert, so kann gegebenenfalls auf ein weiteres Einbringen von Feststoff verzichtet werden, oder es kann zusätzlich ein anderer Feststoff dazu gegeben werden. Dann wird eine Lösung aus der niederviskosen Flüssigkeit und dem Moderator oder der Moderatormischung zugegeben. Im Falle einer gewünschten Vernetzung von polymerisierbaren Moderatoren enthält diese Lösung zusätzlich noch den Polymerisationsinitiator.

Da aus sicherheitstechnischen Überlegungen (elektrostatische Aufladungen beim Transport von Treibladungspulver) das Pulver immer mit einem elektrisch leitenden Material überdeckt sein muss, sollte bei der kombinierten Behandlung mindestens eine der Feststoffkomponenten entweder Graphitstaub oder Acetylenruss sein.

Bei der erfindungsgemässen Behandlung lässt man unter möglichst optimalen Fliessbewegungen der Treibladungspulver-Körner und bei Temperaturen zwischen 0 °C und 90 °C, bevorzugt zwischen 20 °C und 70 °C während einer bestimmten Zeit die zugefügten Substanzen auf die Treibladungspulver-Oberfläche einwirken. Dabei dauert der Einwirkprozess zwischen 5 Minuten und 4 Stunden, bevorzugt zwischen 15 Minuten und 120 Minuten. Die Poliertrommel muss während der Einwirkzeit (je nach Dampfdruck der verwendeten Flüssigkeit) gasdicht geschlossen sein.

Nach der Einwirkzeit wird bei gasdichter Behandlungseinrichtung normalerweise der Deckel des Einfülllochs entfernt, so dass sich die niederviskose Flüssigkeit grösstenteils verflüchtigen kann. Auch dieser Abdampfprozess muss zeitlich genau kontrolliert werden. Dabei kann die Zeitspanne zwischen 5 Minuten und 4 Stunden liegen, bevorzugt wird zwischen 10 Minuten und 120 Minuten abgedampft. Das Abdampfen kann durch weitere Massnahmen noch zusätzlich unterstützt bzw. gefördert werden. So kann z. B. ein Luft- oder Inertgasstrom über das feuchte Treibladungspulver geleitet werden. Es darf jedoch kein Waschen mit einer Flüssigkeit erfolgen, da sonst die Zapfen ausgeschwemmt werden.

Im Falle von nichtpolymerisierenden Moderatoren wird das behandelte Treibladungspulver anschliessend einem Trocknungsprozess unterzogen. Dabei werden letzte Spuren von Lösungsmitteln entfernt und die Behandlungsschicht stabilisiert. So wird das Treibladungspulver typischerweise bei 60 °C während ca. 3 Tagen im Umluftofen belassen. Damit lässt sich z. B. Ethanol komplett (< 0.01%) entfernen. Die Trocknung des fertigen Pulvers dauert länger als bei den Prozessen, die keine verfestigten Zapfen aus Feststoff hervor zu bringen haben.

Wenn ein radikalisch polymerisierbarer Moderator eingesetzt wird, und eine Polymerisationsreaktion durchgeführt werden soll, wird zusätzlich ein entsprechender Polymerisationsinitiator zugegeben. Die Behandlung des Treibladungspulvers wird bei möglichst tiefer Temperatur durchgeführt und die niederviskose Flüssigkeit bei derselben Temperatur entfernt. Bevorzugt wird die Behandlung bei Raumtemperatur durchgeführt. Anschliessend wird das Treibladungspulver im Vakuum von Lösungsmittelresten und vom Luftsauerstoff befreit und unter Inertgas gesetzt. Alternativ kann das Treibladungspulver auch nur mit dem Inertgas gespült werden, um den Luftsauerstoff zu verdrängen. Als Inertgas kann z. B. Argon oder Stickstoff verwendet werden. Erst dann wird die Treibladungspulver-Masse unter Inertgas auf die erforderliche Polymerisationstemperatur erwärmt, welche normalerweise um 30 °C bis 60 °C oberhalb der Behandlungstemperatur liegt.

Wird z. B. bei Raumtemperatur behandelt, so wird ein Polymerisationsinitiator eingesetzt, der bei der Raumtemperatur thermisch stabil ist, jedoch bei 50 °C bis 80 °C sehr schnell in die entsprechenden Radikale zerfällt.

Die Zerfallshalbwertszeit eines Polymerisationsinitiators ist die Zeit, in der die Hälfte des Initiators bei einer bestimmten Temperatur in Radikale zerfallen ist. Diese Zerfallshalbwertszeit ist wegen ihrer zentralen Bedeutung bei allen kommerziell erhältlichen thermischen Initiatoren bekannt. Damit nun die Polymerisationsreaktionen möglichst vollständig ablaufen, wird zur Sicherheit die Polymerisationsdauer bei einer bestimmten Temperatur auf das Vier- bis Sechsfache der Zerfallshalbwertszeit des eingesetzten Initiators bei dieser Temperatur angesetzt. Dann wird das Treibladungspulver direkt an der Luft oder unter dem Inertgas auf Raumtemperatur abgekühlt. Da für das Auftragen des polymerisierbaren Moderators bevorzugt niedrig siedende, apolare Lösungsmittel verwendet werden, ist das Treibladungspulver nach der Evakuation und Polymerisation praktisch lösungsmittelfrei.

Die oben dargestellten Prozesse bewirken, dass die Lochkanäle im Eingangsbereich mit kompakten, verdichteten Zapfen, bestehend hauptsächlich aus den verwendeten Feststoffen oder Feststoffgemischen, verschlossen werden (Fig. 6).

Dabei bewirken die niederviskose Flüssigkeit und/oder der im Treibladungspulver lösliche Moderator (Phlegmatisator), dass der Zapfen zusätzlich verfestigt und im Lochkanal verankert wird.

Es wurde beobachtet, dass bei der Anfeuerung bei hohen Pulvertemperaturen die Zapfen in den Lochkanälen praktisch stabil verankert sind und an Ort bleiben. Dadurch ist in der ersten Abbrandphase der Anbrennvorgang des Treibladungspulver durch die veränderte Formfunktion anders als beim klassischen Verhalten, und der inhärent schnelle Pulverabbrand bei hohen Temperaturen wird daher stark kompensiert. Wird dasselbe Treibladungspulver bei Raumtemperatur angefeuert, so verändert sich die Formfunktion in dem Sinne, dass eine schnellere Oberflächenvergrösserung stattfindet, und damit die Gasbildungsrate an diejenige bei hohen Einsatztemperaturen angeglichen werden kann. Schliesslich beobachtete man bei sehr tiefen Treibladungspulver-Temperaturen, dass sich die Gasbildungsrate auf Grund des Erreichens eines klassischen Verhaltens bezüglich Formfunktion bei perforierten Treibladungspulvern derjenigen eines Grünkorns angleicht.

Der Abbrand in den Perforationen des Treibladungspulvers wird also durch den behandlungsbedingten Einfluss auf die Formfunktion bei steigenden Pulvertemperaturen verlangsamt. Dies wirkt der, mit steigender Temperatur schneller werdenden Brenngeschwindigkeit des Treibladungspulvers entgegen. Im Idealfall kompensieren sich die beiden Effekte, so dass das oberflächenbehandelte Treibladungspulver ein temperaturunabhängiges Abbrandverhalten aufweist.

Bei der richtigen Wahl der Oberflächenbehandlungskomponenten bleibt dieser Effekt auch erhalten, wenn das behandelte Treibladungspulver einer beschleunigten Alterung (z. B. 4 Wochen Lagerung bei 63 °C) unterzogen wird bzw. sehr lange bei Raumtemperatur gelagert wird. Somit weist das oberflächenbehandelte Treibladungspulver eine gute ballistische Stabilität auf, d. h. die mit diesem Treibladungspulver gefüllte Munition kann sicher und mit gleichbleibender Leistung verschossen werden.

Fig. 9a,b zeigt schematisch die Verteilung des Moderators in der Grünkornmatrix vor (a) und nach (b) dem Tempern. Die Abszisse entspricht einem Querschnitt durch ein Grünkorn senkrecht zur den Kanälen. Auf der Ordinate ist die Konzentration des Moderators aufgetragen.

Während der Oberflächenbehandlung diffundiert der Moderator etwas in die Matrix des Grünkorns 1 hinein. Seine Konzentration ist dann somit in der Nähe der Oberfläche 2 und von den Kanälen 3 aus am grössten (Fig. 9a).

Durch das Tempern wird eine gleichmässige Verteilung des Moderators in der Grünkornmatrix 1 erzielt (Fig. 9b). Dadurch liegt kein Gradient des Moderators vor, so dass dieser nicht weiter diffundieren kann. So wird eine ballistische Veränderung des Treibladungspulvers mit der Zeit vermieden. Alternativ kann eine Migration des Moderators während der Lagerung durch Fixierung des Moderators verhindert werden, z.B. durch Polymerisation.

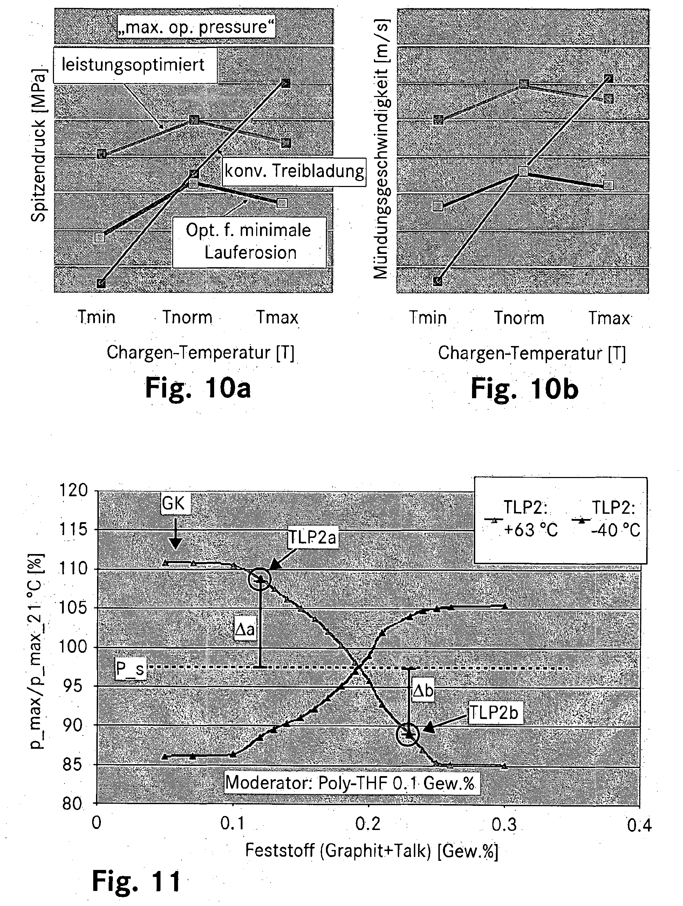

Fig. 10a, b zeigt schematisch den vorteilhaften Effekt der Grünkorn-Behandlung beim Beschuss in der Waffe. In Fig. 10a ist der Spitzendruck in Abhängigkeit von der Temperatur gezeigt. Als Temperaturwerte können z. B. $T_{min}$ = -40°C, $T_{norm}$ = +21°C und $T_{max}$ = +63 °C angenommen werden. Es sind aber auch andere Werte möglich. Fig. 10b zeigt die Abhängigkeit der Mündungsgeschwindigkeit von der Temperatur. Ein unbehandeltes Korn (Grünkorn) zeigt ein lineares Verhalten, d. h. dass sein Druck bzw. seine Mündungsgeschwindigkeit mit zunehmender Temperatur steigt.

Dagegen zeigen die behandelten Treibladungspulver einen deutlich flacheren Verlauf. Insbesondere liegen die Druckwerte oder auch analog dazu die Werte der Mündungsgeschwindigkeit bei hohen Temperaturen unter denen der normalen Temperaturen.

Eine Munition kann zum einen hinsichtlich ihrer Leistung optimiert werden. Das entsprechende Treibladungspulver zeigt im Vergleich zum unbehandelten Grünkorn ein flacheres Temperaturverhalten. Dabei ist jedoch der Maximaldruck im unteren Temperaturbereich T_min stark angehoben. Das bedingt eine gesteigerte Mündungsgeschwindigkeit und somit eine Leistungssteigerung.

Eine Munition kann aber auch bezüglich minimaler Rohrerrosion verbessert sein. Sie weist insgesamt niedrigere Drücke auf im Vergleich mit einem leistungsoptimierten Treibladungspulver. Entscheidend ist, dass der Maximaldruck im oberen Temperaturbereich T_max stark abgesenkt ist, was den Schutz vor Rohrerrosion verbessert.

Aus Fig. 11 lässt sich ein reales Gemisch aus unterschiedlich stark behandelten Treibladungspulvern ableiten. Durch Mischen von nicht ideal behandeltem Korn oder durch Mischen von unbehandelten Korn (Grünkorn) mit zu stark behandelten Korn mit inversem Temperaturverhalten (d. h. dass der Gasdruck bei -40 °C höher ist als bei 63 °C), können Treibladungspulver erzeugt werden, die einen sehr flachen, nahezu optimalen Temperaturverlauf zeigen.

Fig. 11 zeigt die Temperaturgradientenkurve für TLP2 in Abhängigkeit von der verwendeten Menge an Feststoff. Zwei Punkte (a und b) sind markiert. Im Fall von TLP2a (oberer Punkt) ist der Effekt der Behandlung sehr schwach und der Maximalgasdruck bei 63 °C nur um 2,1% abgesenkt. Das Verhältnis des Maximalgasdruck bei 63 °C im Verhältnis zu dem bei 21 °C ($\Delta a$) beträgt immer noch 108.8% (ursprünglich 110.9%). Dagegen ist der Effekt der Behandlung für das TLP2b (unterer Punkt) sehr stark. Das Verhältnis des Maximalgasdrucks bei 63 °C zu dem bei 21 °C ($\Delta b$) beträgt nur noch 89.0%.

$$\text{Menge(TLPa)}/\text{Menge(TLPb)} = \Delta b/\Delta a$$

Die beiden unterschiedlich behandelten Treibladungspulver können nun zu einem Treibladungspulver mit optimalem Temperaturgradienten gemischt werden. Im vorliegenden Fall liefert ein Gemisch von TLP2a und TLP2b im Verhältnis von ca. 54 : 46 ein optimales Verhalten. Es kann in besonderen Fällen von Vorteil sein, nicht-lineare Effekte zu berücksichtigen.

Alternativ ist es auch möglich, Grünkorn GK mit TLP2b zu mischen, um ein Treibladungspulver mit optimalem Temperaturgradienten zu erhalten.

Zu den nachfolgend beschriebenen Beispielen ist Folgendes zu sagen:

- Die Treibladungspulver-Rohmasse wurde aus 58% Nitrocellulose, 26% Nitroglycerin und 16% Diethylenglykoldinitrat gefertigt. Als Stabilisator wurde Akardit II verwendet.

- Das perforierte Grünkorn wurde in einer Strangenpresse mit einer 19-Loch Matrize hergestellt. Die Matrizendimension ist bei den Beispielen jeweils angegeben.

- Das oberflächenbehandelte Grünkorn mit einem praktisch temperaturunabhängigen Abbrandverhalten wird auch als **SCDB** (**S**urface **C**oated **D**ouble **B**ase) Treibladungskorn bezeichnet.

**Beispiel 1**

Ausgegangen wird von einem Grünkorn mit einem Aussendurchmesser von 12.3 mm und mit 19 durchgehenden Kanälen mit einem Innendurchmesser von 0.18 mm. In einer Rotationstrommel werden 220 kg Grünkorn mit 187 g Graphit (0.085 Gew.-%) und 220 g Talkum (0.16 Gew.-%) während 10 min behandelt. Dabei wird der Feststoff gleichmässig auf der Oberfläche des Grünkorns verteilt. Danach wird als Flüssigkeit 2780 g Ethanol (75 Vol.-%, 15 ml pro kg Grünkorn)und 220g Polytetrahydrofuran (0.16 Gew.-%) zugegeben und eine Behandlung bei gasdicht verschlossener Trommel während 1 h durchgeführt. Im nächsten Schritt wird die Trommel geöffnet und das Lösungsmittel bei laufender Trommel während 30 min abgedampft. Die Behandlungstemperatur beträgt 30 °C. Danach wird das behandelte Grünkorn während 70 h bei 55 °C getrocknet.

**Beispiel 2**

In einem weiteren Beispiel werden 55 kg eines Grünkorns gleicher Geometrie wie in Bsp. 1 (Aussendurchmesser 12.3 mm, 19-Loch-Pulver, 0.18 mm Innendurchmesser der Kanäle) auf 30 °C vorgewärmt und mit 90.75 g Graphit (0.165 Gew.-%) gemischt. Sobald der Feststoff gleichmässig auf der Oberfläche verteilt ist, werden 2780 g Ethanol (75 Vol.-%, 15 ml pro kg Grünkorn) und 165 g Polytetrahydrofuran (0.3 Gew.-%) zugegeben. Es wird während 60 min bei 30 °C bei geschlossener Trommel gerührt und anschliessend bei offener laufender Trommel während 30 min abgedampft. Das behandelte Grünkorn wird während 140 h bei 60 °C getrocknet.

**Beispiel 3**

220 kg eines 19-Loch-Grünkorns mit einem Durchmesser von 12 mm und einem Innendurchmesser der Kanäle von 0.20 mm werden bei 30 °C mit 0.40 Gew.-% Graphit während 10 min behandelt. Dann werden Ethanol (75 Vol.-%, 10.6 ml pro kg Grünkorn) und 0.08 Gew.-% Polytetrahydrofuran zugegeben. Das Gemisch wird bei bei geschlossener Trommel während 60 min bei 30 °C gerührt, anschliessend wird das Lösungsmittel bei offener laufender Trommel während 30 min abgedampft. Das behandelte Grünkorn wird während 72 h bei 60 °C getrocknet.

Zusammenfassend ist festzuhalten, dass die Erfindung ein Verfahren zum Einstellen der Temperaturabhängigkeit schafft, welches auf einer gezielten Variation der Feststoffmenge basiert. Das Verfahren beeinflusst die Formfunktion des Abbrandverhaltens, indem Zapfen aus verfestigtem inerten Material in den Kanälen des Treibladungspulvers gebildet werden, welche eine durch die Feststoffmenge kontrollierte temperaturabhängige Mobilität haben.

**Patentansprüche**

1. Verwendung eines Feststoffs zur Herstellung eines Treibladungspulvers, insbesondere für Mittel- und Grosskaliber, in einem Verfahren, bei welchem der Feststoff zusammen mit einer Flüssigkeit in einem Mischungs- und Trocknungsverfahren in Kanäle eines Grünkorns eingearbeitet und dort zu einem Zapfen verfestigt wird, wobei der Feststoff eine Substanz ist, deren Schmelzpunkt mindestens 10 °C, insbesondere mindestens 20 °C oberhalb einer maximalen Einsatztemperatur des Treibladungspulvers liegt und die dem Grünkorn gegenüber inert ist, **dadurch gekennzeichnet, dass** der Feststoff bei sonst gleich bleibenden Bedingungen des Verfahrens innerhalb eines Einstellbereichs von >0 - 0.5 Gew.-% bezogen auf das Gewicht des Grünkorns eingestellt wird, indem für eine stärkere Absenkung des Maximaldrucks in einem oberen Temperaturbereich und für eine stärkere Anhebung des Maximaldrucks in einem unteren Temperaturbereich eines Anwendungstemperaturbereichs eine grössere Feststoffmenge eingesetzt wird, **dadurch gekennzeichnet, dass** die Feststoffmenge in einem Schnittbereich der Temperaturgradientenkurven, welche eine Darstellung des unteren und oberen Temperaturgradienten für Treibpulver mit unterschiedlichem Feststoffgehalt darstellen, gewählt wird, wobei der untere Temperaturgradient durch das Verhältnis des Maximaldrucks bei der unteren Grenze des unteren Temperaturbereichs bei -40°C zum Maximaldruck bei 21°C, $p\_max(-40°C)/p\_max(21°C)$ definiert ist und der obere Temperaturgradient durch das Verhältnis des Maximaldrucks bei der oberen Grenze des oberen Temperaturbereichs bei 63°C zum Maximaldruck bei 21°C, $p\_max(63°C)/p\_max(21°C)$ gegeben ist.

2. Verwendung nach Anspruch 1, **dadurch gekennzeichnet, dass** für ein kombiniertes Verfahren, bei welchem sowohl eine Graphitierung als auch eine Zapfenbildung durchgeführt wird, der Feststoff in einer Menge verwendet wird, die der Summe aus einem für die Graphitierung erforderlichen Mengenwert des Treibladungspulvers und aus einem innerhalb des Einstellbereichs liegenden Mengenwert entspricht.

3. Verwendung nach Anspruch 2, **dadurch gekennzeichnet, dass** der Feststoff in einer Menge innerhalb eines durch K_min und K_max definierten Bereichs nach folgender Formel:

$$M(Feststoff) = K\_min \times F(spezifische\ Oberfläche) + Offset$$

$$M(\text{Feststoff}) = K\_max \times F(\text{spezifische Oberfläche}) + \text{Offset}$$

gewählt wird, wobei

M(Feststoff) die Menge an Feststoff in Gew.-% bezogen auf das Gewicht des Grünkorns
F(spezifische Oberfläche) die spezifische Oberfläche des Grünkorns in $mm^2/g$ und
K_min = 0.000'9 $[g/mm^2]$
K_max = 0.0014 $[g/mm^2]$
Offset = -0.14.

4. Verfahren zur Herstellung eines Treibladungspulvers mit reduzierter Temperaturabhängigkeit innerhalb eines vorgegebenen Anwendungstemperaturbereichs, mit folgenden Schritten:

a) Bereitstellen eines quellfähigen Grünkorns mit einer vorgegebenen geometrischen Ausgestaltung mit mindestens einem durchgehenden Kanal, der eine charakteristische Querabmessung von maximal 0.3 mm hat und der an einer Aussenoberfläche des Grünkorns mündet,
b) Bereitstellen eines Feststoffs, der im Anwendungstemperaturbereich stabil und gegenüber dem Grünkorn inert ist, der eine Partikelgrösse hat, die in die durchgehenden Kanäle einführbar ist, und der sich im Rahmen eines Mischungs- und Trocknungsverfahrens verdichten lässt,
c) Bereitstellen einer Flüssigkeit, welche das Grünkorn quellen kann und am Ende der Herstellung des Treibladungspulvers entweder vollständig entfernt werden kann oder in homogener Verteilung im Treibladungspulver enthalten ist,
d) wobei die Flüssigkeit nicht mehr als 0.5 Gew.-% - bezogen auf das Gewicht des Grünkorns - einer als Moderator dienenden oligomeren oder polymeren Substanz enthält, und wobei ein sonstiger Teil der Flüssigkeit ein niederviskoses Lösungsmittel ist,
e) Behandeln des Grünkorns mit der Flüssigkeit und dem Feststoff in einer Mischapparatur während einer vorgegebenen Zeitdauer,
f) Trocknen des behandelten Grünkorns während einer vorgegebenen Zeitdauer,
g) zur Einstellung der Temperaturabhängigkeit des Treibladungspulvers die Menge an Feststoff innerhalb eines Einstellbereichs von >0 bis 0.5 Gew.-% zur Bildung von Zapfen eingestellt wird, indem bei sonst gleich bleibenden Bedingungen des Verfahrens für eine stärkere Absenkung des Maximaldrucks in einem oberen Temperaturbereich und für eine stärkere Anhebung des Maximaldrucks in einem unteren Temperaturbereich des Anwendungstemperaturbereichs eine grössere Feststoffmenge eingesetzt wird
**dadurch gekennzeichnet, dass**
h) die Feststoffmenge in einem Schnittbereich von Temperaturgradientenkurven, welche eine Darstellung des unteren und oberen Temperaturgradienten für Treibpulver mit unterschiedlichem Feststoffgehalt darstellen, gewählt wird, wobei der untere Temperaturgradient durch das Verhältnis des Maximaldrucks bei der unteren Grenze des unteren Temperaturbereichs bei -40°C zum Maximaldruck bei 21°C, p_max(-40°C)/p_max(21°C) definiert ist und der obere Temperaturgradient durch das Verhältnis des Maximaldrucks bei der oberen Grenze des oberen Temperaturbereichs bei 63°C zum Maximaldruck bei 21°C, p_max(63°C)/p_max(21°C) gegeben ist.

5. Verfahren nach Anspruch 4, **dadurch gekennzeichnet, dass** das Grünkorn im Rahmen einer Graphitierung, welche zur Erhöhung einer Leitfähigkeit und zur Vermeidung eines Zusammenklebens des Grünkorns dient, vorgängig zu deren Behandlung in der Mischapparatur mit Graphit in einer auf die spezifische Oberfläche des Grünkorns abgestimmten Menge M(Feststoff) beschichtet wird, und dass die Feststoffmenge zur Bildung der Zapfen innerhalb des Bereichs

$$0 < M(\text{Feststoff}) \leq M\_max$$

gewählt wird, wobei

M(Feststoff) die Menge an Feststoff in Gew.-% bezogen auf das Gewicht des Grünkorns
M_max = 0.14 Gew.-%.

6. Verfahren nach Anspruch 4, **dadurch gekennzeichnet, dass** der Feststoff Graphit umfasst, und dass die Menge an Feststoff eine Summe aus der im Rahmen einer Graphitierung, welche zur Erhöhung einer Leitfähigkeit und zur Vermeidung eines Zusammenklebens des Grünkorns dient, erforderlichen Menge an Graphit plus der innerhalb des Einstellbereichs gewählten Menge an Feststoff ergibt, so dass die Menge an Feststoff innerhalb des Bereichs

$$K\_min \times F(\text{spezifische Oberfläche}) + Offset \leq M(\text{Feststoff}) \leq K\_max \times F(\text{spezifische Oberfläche}) + Offset$$

gewählt ist, wobei

K_min = 0.000'9 [g/mm$^2$],
K_max = 0.0014 [g/mm$^2$],
Offset = -0.14,

insbesondere dass die Menge an Feststoff gegeben ist durch

$$M(\text{Feststoff}) = K\_opt \times F(\text{spezifische Oberfläche}) + Offset$$

K_opt = 0.0012 [g/mm$^2$],
Offset = -0.14.

7. Verfahren nach einem der Ansprüche 4 bis 6, **dadurch gekennzeichnet, dass** das quellfähige Grünkorn eine spezifische Oberfläche von nicht mehr als 600 mm2/g aufweist.

8. Verfahren nach einem der Ansprüche 4 bis 7, **dadurch gekennzeichnet, dass** das quellfähige Grünkorn ein Verhältnis von Länge zu Durchmesser von mindestens 1:1 aufweist.

9. Verfahren nach einem der Ansprüche 4 bis 8, **dadurch gekennzeichnet, dass** die Menge an Moderator in einem Bereich gewählt wird, in welchem eine obere Temperaturgradientenkurve, welche eine Darstellung des oberen Temperaturgradienten für Treibpulver mit unterschiedlichem Moderatorgehalt und konstantem Feststoffgehalt darstellt, ein Minimum aufweist.

10. Verfahren nach einem der Ansprüche 4 bis 9, **dadurch gekennzeichnet, dass** das Lösungsmittel in einer Menge bereitgestellt wird, welche innerhalb der vorgegebenen Zeitdauer des Behandelns des Grünkorns mit der Flüssigkeit und dem Feststoff in einer Mischapparatur vollständig aufgenommen werden kann.

11. Verfahren nach einem der Ansprüche 4 bis 10, **dadurch gekennzeichnet, dass** zur Ermittlung der Feststoffmenge mindestens drei Chargen mit unterschiedlichen Feststoffmengen behandelt werden, wobei die Feststoffmengen sich um maximal 0.2 Gew.-% bezogen auf das Grünkorn unterscheiden.

12. Verfahren nach Anspruch 11, **dadurch gekennzeichnet, dass** die Feststoffmengen der Chargen sich um ungefähr 0.1 Gew.-% unterscheiden.

13. Verfahren nach einem der Ansprüche 4 bis 12, **dadurch gekennzeichnet, dass** die Menge an Feststoff im Einstellbereich so gewählt wird, dass der Temperaturkoeffizient im unteren und im oberen Temperaturbereich zwischen 95% und 105% insbesondere zwischen 97% und 103% liegt.

14. Verfahren nach einem der Ansprüche 4 bis 13, **dadurch gekennzeichnet, dass** die Feststoffmenge ungefähr proportional von >0 auf M(Feststoff) erhöht wird; wobei

$$M(\text{Feststoff}) = K\_max \times F(\text{spezifische Oberfläche}) + Offset$$

wobei

M(Feststoff) die Menge an Feststoff in Gew.-% bezogen auf das Gewicht des Grünkorns

F(spezifische Oberfläche) die spezifische Oberfläche des Grünkorns in mm$^2$/g und
K_max = 0.0014 [g/mm$^2$]
Offset = -0.14.

um den relativen Maximaldruck ungefähr proportional im oberen Temperaturbereich von 105 % bis 95% zu senken oder dass die Feststoffmenge ungefähr proportional von >0 auf M(Feststoff) = K_max x F(spezifische Oberfläche) + Offset erhöht wird, um den relativen Maximaldruck im unteren Temperaturbereich ungefähr proportional von 87% bis 105% zu erhöhen.

15. Verfahren nach einem der Ansprüche 4 bis 14, **dadurch gekennzeichnet, dass** die Kanäle eine charakteristische Querabmessung von 0.1 - 0.2 mm aufweisen.

16. Verfahren nach einem der Ansprüche 4 bis 15, **dadurch gekennzeichnet, dass** eine Menge des Moderators im Bereich zwischen 0 auf 0.4 Gew.-% erhöht wird, um im unteren Temperaturbereich den relativen Maximaldruck von 97% auf 88% zu erniedrigen oder dass die Moderatormenge von 0 auf 0.15 Gew.-% erhöht wird, um im oberen Temperaturbereich den relativen Maximaldruck von 105% auf 100% zu erniedrigen.

17. Verfahren nach einem der Ansprüche 4 bis 16, **dadurch gekennzeichnet, dass** der Moderator in einer Menge von 0.05 - 0.2 Gew.-% insbesondere von 0.1 - 0.15 Gew.-% eingesetzt wird.

18. Verfahren nach einem der Ansprüche 4 bis 17, **dadurch gekennzeichnet, dass**

a) aus einer Charge vom extrudierten Grünkorn mindestens eine erste und eine zweite Teilmenge in einem bestimmten Mischungs- und Trocknungsverfahren mit einer bestimmten Testmenge an Feststoff und mindestens zwei verschiedenen Testmengen an Moderator verarbeitet werden und daraus ein Minimalbereich für einen Temperaturgradienten im oberen Temperaturbereich ermittelt und eine im Minimalbereich liegender Moderatormenge gewählt wird,
b) aus der genannten Charge an Grünkorn mindestens zwei weitere Teilmengen in dem bestimmten Mischungs- und Trocknungsverfahren mit der gewählten Moderatormenge und mindestens zwei verschiedenen Testmengen an Feststoff verarbeitet werden und daraus ein Schnittbereich des oberen und unteren Temperaturgradienten ermittelt und eine Feststoffmenge gewählt wird, und dass
c) eine Produktionsmenge der genannten Charge in dem bestimmten Mischungs- und Trocknungsverfahren mit der gewählten Moderatormenge und der gewählten Feststoffmenge verarbeitet wird.

19. Verfahren nach Anspruch 18, **dadurch gekennzeichnet, dass** das Mischungs- und Trocknungsverfahren folgende Schritte umfasst:

a) Grünkorn, Feststoff und eine niederviskose Flüssigkeit werden in eine Mischapparatur gegeben,
b) wobei der Feststoff eine Substanz ist, deren Schmelzpunkt mindestens 10 °C, insbesondere 20 °C oberhalb einer maximalen Einsatztemperatur des Treibladungspulvers liegt und die dem Grünkorn gegenüber inert ist,
c) der Moderator eine Substanz ist, die eine gute chemische Verträglichkeit mit der Grundrezeptur des Grünkorns und eine geringe Flüchtigkeit d. h. Dampfdruck bei 21°C von < 10-2 bar hat,
d) die niederviskose Flüssigkeit ein Lösungsmittel oder Lösungsmittelgemisch ist, das den festen oder flüssigen zapfenstabilisierenden Moderator sehr gut lösen oder fein emulgieren kann, das jedoch das Grünkorn nicht oder nur sehr wenig zu quellen vermag, und in einer Menge von 0.1 Gew.-% bis 5 Gew.-% bezogen auf ein Gewicht des Grünkorns eingesetzt wird,
e) wobei in der Mischapparatur unter Rotation der Feststoff unter Wirkung eines von der Mischung ausgeübten Pulvermassedrucks sukzessive in die Kanäle des Grünkorns eingearbeitet wird,
f) und danach die Flüssigkeit unter fortgesetztem Verarbeiten durch die Mischapparatur durch Abdampfen aus dem Grünkorn entfernt wird,
g) und das derart behandelte Grünkorn bei erhöhter Temperatur getrocknet wird,
h) derart, dass ein verdichteter und verankerter Teil des nichtflüchtigen Feststoffs im Kanal hergestellt ist, der einen hauptsächlich aus dem verwendeten Feststoff und aus dem optionalen Moderator bestehenden Zapfen mit einer temperaturabhängigen Mobilität bildet, indem der Zapfen einer Anzünddruckwelle in kontrollierter Weise standhalten kann, wobei eine Stärke des Zapfens durch eine Behandlungsdauer in der Mischapparatur eingestellt wird in dem Sinn, dass eine längere Behandlungsdauer zu einem stärkeren Zapfen führt,
i) derart, dass bei niedrigerer Anwendungstemperatur eine höhere Mobilität gegeben ist, als bei höherer Anwendungstemperatur, so dass der Zapfen bei niedrigerer Anwendungstemperatur einen stärkeren Lochabbrand zulässt als bei höherer Anwendungstemperatur, so dass eine reduzierte Temperaturunabhängigkeit eines Treibladungspulver-Abbrandes resultiert.

20. Verfahren nach einem der Ansprüche 4 bis 19, **dadurch gekennzeichnet, dass** der Feststoff eine oder mehrere der folgenden Substanzen umfasst: Graphit, Talkum, Titanoxid, Russ, Kaliumsulfat, Kaliumkryolith, Natriumkryolith, Calciumcarbonat, Wolframtrioxid, Molybdäntrioxid, Magnesiumoxid, Bornitrid, Akardit, Centralit, Calciumcarbonat, Oxalamid, Ammoniumcarbamat, Ammoniumoxalat, Celluloseacetatbutyrat, Kaliumperchlorat, Kaliumnitrat, Bariumnitrat, Nariumoxalat, Fullerene, oder Polymere und Copolymere mit oder ohne funktionelle Gruppen, linear, verzweigt oder vernetzt.

21. Verfahren nach einem der Ansprüche 4 bis 20, **dadurch gekennzeichnet, dass** die Trocknung des Treibladungspulvers während mindestens 60 Stunden, insbesondere während 3 Tagen und insbesondere bei 60 °C erfolgt.

22. Verfahren nach einem der Ansprüche 4 bis 21, **dadurch gekennzeichnet, dass** als Moderator ein Polyether mit Molekulargewichten von 500 bis 3000 Dalton, insbesondere Polytetrahydrofuran verwendet wird.

23. Verfahren nach einem der Ansprüche 4 bis 22, **dadurch gekennzeichnet, dass** die Mischapparatur während einer Einwirkzeit gasdicht geschlossen bleibt, und dass sie nachfolgend zum Abdampfen der Flüssigkeit während einer bestimmten Zeitspanne im Bereich von 5 Minuten bis 4 Stunden offen ist.

24. Treibladungspulver als Gemisch von mindestens zwei unterschiedlich behandelten Treibladungspulvern (TLPa, TLPb), jeweils erhältlich durch das Verfahren nach Anspruch 4, **dadurch gekennzeichnet, dass** die mindestens zwei unterschiedlich behandelten Treibladungspulver in einem Verhältnis gemischt werden, so dass ihr Gemisch sich verhält wie ein optimales Treibladungspulver mit einer Feststoffanteil im Schnittbereich der oberen und unteren Temperaturgradientenkurve, wobei die Temperaturgradientenkurven die Darstellung des oberen beziehungsweise unteren Temperaturgradienten bei unterschiedlichem Feststoffgehalt des Treibladungspulvers darstellen, und wobei der untere Temperaturgradient durch das Verhältnis des Maximaldrucks bei der unteren Grenze des unteren Temperaturbereichs bei -40°C zum Maximaldruck bei 21°C, p_max(-40°C)/p_max(21°C) definiert ist und der obere Temperaturgradient durch das Verhältnis des Maximaldrucks bei der oberen Grenze des oberen Temperaturbereichs bei 63°C zum Maximaldruck bei 21°C, p_max(63°C)/p_max(21°C) gegeben ist.

25. Treibladungspulver nach Anspruch 24, **dadurch gekennzeichnet, dass** der Einfluss jedes der mindestens zwei Treibladungspulver auf den gemeinsamen Temperaturgradienten linear ist und der Formel TLPa/TLPb = Δb/Δa entspricht, also das Mengenverhältnis von TLPa zu TLPb umgekehrt proportional zu den Differenzen im Maximaldruck ist, wobei Δa die Differenz zwischen dem relativen Maximaldruck p_max/p_max(23°) des TLPa und dem relativen Maximaldruck p_max/p_max(23°) des Treibladungspulvers im Schnittpunkt der oberen und unteren Temperaturgradientenkurven ist, und Δb die Differenz zwischen dem relativen Maximaldruck p_max/p_max(23°) des TLPb und dem relativen Maximaldruck p_max/p_max(23°) des Treibladungspulvers im Schnittpunkt der oberen und unteren Temperaturgradientenkurven ist.

## Claims

1. Use of a solid for production of a propellant charge powder, especially for medium and large calibres, in a process in which the solid is incorporated together with a liquid in a mixing and drying process into channels of a granular green material and compacted therein to form a plug, the solid being a substance whose melting point is at least 10°C, especially at least 20°C, above a maximum use temperature of the propellant charge powder and which is inert toward the granular green material, **characterized in that** the solid, under otherwise identical process conditions, is set within a setting range of > 0-0.5% by weight based on the weight of the granular green material, by using a greater amount of solid for more significant lowering of the maximum pressure within an upper temperature range and for more significant raising of the maximum pressure within a lower temperature range of an application temperature range, **characterized in that** the amount of solid is selected within a range of intersection of the temperature gradient curves which constitute a representation of the lower and upper temperature gradients, where the lower temperature gradient is defined by the ratio of the maximum pressure at the lower limit of the lower temperature range at -40°C to the maximum pressure at 21°C, p_max(-40°C)/p_max(21°C) and the upper temperature gradient is given by the ratio of the maximum pressure at the upper limit of the above temperature range at 63°C to the maximum pressure at 21°C, p_max(63°C)/p_max(21°C).

2. Use according to Claim 1, **characterized in that**, for a combined process in which both graphitization and plug formation are conducted, the solid is used in an amount corresponding to the sum of a quantity of the propellant charge powder required for the graphitization and of a quantity within the setting range.

3. Use according to Claim 2, **characterized in that** the solid is chosen in an amount within a range defined by K_min and K_max according to the following formula:

$$M(solid) = K\_min \times F(specific\ surface\ area) + offset$$

$$M(solid) = K\_max \times F(specific\ surface\ area) + offset$$

where

M(solid) is the amount of solid in % by weight based on the weight of the granular green material
F(specific surface area) is the specific surface area of the granular green material in $mm^2/g$ and K_min = 0.0009 $[g/mm^2]$
K_max = 0.0014 $[g/mm^2]$
offset = -0.14.

4. Process for producing a propellant charge powder having reduced temperature dependence within a given application temperature range, having the following steps:

a) providing a swellable granular green material having a given geometric configuration with at least one continuous channel having a characteristic transverse dimension of not more than 0.3 mm and opening at an outer surface of the granular green material,
b) providing a solid which is stable within the application temperature range and is inert toward the granular green material and which has a particle size which can be introduced into the continuous channels, and which can be compacted in the course of a mixing and drying process,
c) providing a liquid which can swell the granular green material and can either be completely removed or is present in homogeneous distribution in the propellant charge powder at the end of the production of the propellant charge powder,
d) where the liquid contains not more than 0.5% by weight - based on the weight of the granular green material - of an oligomeric or polymeric substance which serves as a moderator, and where another portion of the liquid is a low-viscosity solvent,
e) treating the granular green material with the liquid and the solid in a mixing apparatus over a given duration,
f) drying the treated granular green material over a given duration,
g) the temperature dependence of the propellant charge powder is established by adjusting the amount of solid within a setting range from >0 to 0.5% by weight for formation of plugs, by, under otherwise identical process conditions, using a greater amount of solid for more significant lowering of the maximum pressure within an upper temperature range and for more significant raising of the maximum pressure within a lower temperature range of the application temperature range,
**characterized in that**
h) the amount of solid selected within a range of intersection of the temperature gradient curves which constitute a representation of the lower and upper temperature gradients, where the lower temperature gradient is defined by the ratio of the maximum pressure at the lower limit of the lower temperature range at -40°C to the maximum pressure at 21°C, p_max(-40°C)/p_max(21°C) and the upper temperature gradient is given by the ratio of the maximum pressure at the upper limit of the above temperature range at 63°C to the maximum pressure at 21°C, p_max(63°C)/p_max(21°C).

5. Process according to Claim 4, **characterized in that** the granular green material, in the course of a graphitization which serves to increase a conductivity and to avoid any conglutination of the granular green material, prior to the treatment thereof in the mixing apparatus, is coated with graphite in an amount M(solid) matched to the specific surface area of the granular green material, and **in that** the amount of solid for formation of the plugs is selected within the range of

$$0 < M(solid) \leq M\_max$$

where

M(solid) is the amount of solid in % by weight based on the weight of the granular green material
M_max = 0.14% by weight.

6. Process according to Claim 4, **characterized in that** the solid comprises graphite, and **in that** the amount of solid is a sum of the amount of graphite required in the course of a graphitization which serves to increase a conductivity and to avoid any conglutination of the granular green material plus the amount of solid selected within the setting range, such that the amount of solid is selected within the range of

$$K\_min \times F(specific\ surface\ area) + offset \leq M(solid)$$
$$\leq K\_max \times F(specific\ surface\ area) + offset$$

where

K_min = 0.0009 [g/mm$^2$]
K_max = 0.0014 [g/mm$^2$]
offset = -0.14,
especially **in that** the amount of solid is given by

$$M(solid) = K\_opt \times F(specific\ surface\ area) + offset$$

K_opt = 0.0012 [g/mm$^2$]
offset = -0.14.

7. Process according to any of Claims 4 to 6, **characterized in that** the swellable granular green material has a specific surface area of not more than 600 mm$^2$/g.

8. Process according to any of Claims 4 to 7, **characterized in that** the swellable granular green material has a ratio of length to diameter of at least 1:1.

9. Process according to any of Claims 4 to 8, **characterized in that** the amount of moderator is selected within a range in which an upper temperature gradient curve which constitutes a representation of the upper temperature gradients for propellant powder with different moderator content and constant solids content has a minimum.

10. Process according to any of Claims 4 to 9, **characterized in that** the solvent is provided in an amount which can be taken up completely within the given duration of treatment of the granular green material with the liquid and the solid in a mixing apparatus.

11. Process according to any of Claims 4 to 10, **characterized in that** the amount of solid is determined by treating at least three batches having different amounts of solid, the amounts of solid differing by not more than 0.2% by weight based on the granular green material.

12. Process according to Claim 11, **characterized in that** the amounts of solid in the batches differ by about 0.1% by weight.

13. Process according to any of Claims 4 to 12, **characterized in that** the amount of solid is selected within the setting range such that the temperature coefficient in the lower and upper temperature ranges is between 95% and 105%, especially between 97% and 103%.

14. Process according to any of Claims 4 to 13, **characterized in that** the amount of solid is increased roughly proportionally from > 0 to M(solid); where

```
M(solid) = K_max × F(specific surface area) +
offset
```

where

M(solid) is the amount of solid in % by weight based on the weight of the granular green material F(specific surface area) is the specific surface area of the granular green material in mm$^2$/g and K_max = 0.0014 [g/mm$^2$] offset = -0.14,

in order to lower the relative maximum pressure roughly proportionally within the upper temperature range from 105% to 95%, or **in that** the amount of solid is increased roughly proportionally from >0 to M(solid) = K_max × F(specific surface area) + offset, in order to increase the relative maximum pressure within the lower temperature range roughly proportionally from 87% to 105%.

15. Process according to any of Claims 4 to 14, **characterized in that** the channels have a characteristic transverse dimension of 0.1-0.2 mm.

16. Process according to any of Claims 4 to 15, **characterized in that** an amount of the moderator within the range between 0 is increased to 0.4% by weight, in order to lower the relative maximum pressure from 97% to 88% within the lower temperature range, or **in that** the amount of moderator is increased from 0 to 0.15% by weight, in order to lower the relative maximum pressure from 105% to 100% within the upper temperature range.

17. Process according to any of Claims 4 to 16, **characterized in that** the moderator is used in an amount of 0.05-0.2% by weight, especially of 0.1-0.15% by weight.

18. Process according to any of Claims 4 to 17, **characterized in that**

a) at least one first and one second portion from a batch of extruded granular green material are processed in a particular mixing and drying process with a particular test amount of solid and at least two different test amounts of moderator, and this is used to find a minimal range for a temperature gradient within the upper temperature range and to choose an amount of moderator within the minimal range,
b) at least two further portions from said batch of granular green material are processed in the particular mixing and drying process with the selected amount of moderator and at least two different test amounts of solid, and this is used to find a range of intersection of the upper and lower temperature gradients and to choose an amount of solid, and **in that**
c) a production amount of said batch is processed in the particular mixing and drying process with the chosen amount of moderator and the chosen amount of solid.

19. Process according to Claim 18, **characterized in that** the mixing and drying process comprises the following steps:

a) introducing granular green material, solid and a low-viscosity liquid into a mixing apparatus,
b) where the solid is a substance whose melting point is at least 10°C, especially 20°C, above a maximum use temperature of the propellant charge powder and which is inert toward the granular green material,
c) the moderator is a substance which has good chemical compatibility with the base formulation of the granular green material and has a low volatility, i.e. vapour pressure, at 21°C of < 10-2 bar,
d) the low-viscosity liquid is a solvent or solvent mixture which can very efficiently dissolve or finely emulsify the solid or liquid plug-stabilizing moderator, but which is able to swell the granular green material only to a very slight degree, if at all, and is used in an amount of 0.1% by weight to 5% by weight, based on a weight of the granular green material,
e) where the solid is incorporated gradually into the channels of the granular green material under the action of a powder material pressure exerted by the mixture with rotation in the mixing apparatus,
f) and then removing the liquid by vaporization out of the granular green material with continued processing by the mixing apparatus,
g) and drying the granular green material thus treated at elevated temperature,
h) in such a way that a compacted and anchored portion of the nonvolatile solid in the channel is produced, which forms a plug consisting principally of the solid used and of the optional moderator and having a temperature-dependent mobility, **in that** the plug can withstand an ignition pressure wave in a controlled manner, a strength of the plug being established by a treatment period in the mixing apparatus in the sense that a longer treatment period leads to a stronger plug,

i) in such a way that a higher mobility exists at lower application temperature than at higher application temperature, such that the plug permits stronger hole burnoff at lower application temperature than at higher application temperature, so as to result in a reduced temperature independence of a propellant charge powder burnoff.

20. Process according to any of Claims 4 to 19, **characterized in that** the solid comprises one or more of the following substances: graphite, talc, titanium oxide, carbon black, potassium sulfate, potassium cryolite, sodium cryolite, calcium carbonate, tungsten trioxide, molybdenum trioxide, magnesium oxide, boron nitride, acardite, centralite, calcium carbonate, oxalamide, ammonium carbamate, ammonium oxalate, cellulose acetate butyrate, potassium perchlorate, potassium nitrate, barium nitrate, sodium oxalate, fullerenes, or polymers and copolymers with or without functional groups, linear, branched or crosslinked.

21. Process according to any of Claims 4 to 20, **characterized in that** the propellant charge powder is dried over at least 60 hours, especially over 3 days and especially at 60°C.

22. Process according to any of Claims 4 to 21, **characterized in that** the moderator used is a polyether having molecular weights of 500 to 3000 daltons, especially polytetrahydrofuran.

23. Process according to any of Claims 4 to 22, **characterized in that** the mixing apparatus remains closed in a gas-tight manner during a contact time, and **in that** it is subsequently open for vaporization of the liquid over a particular duration within the range from 5 minutes to 4 hours.

24. Propellant charge powder as a mixture of at least two differently treated propellant charge powders (PCPa, PCPb), each obtainable by the process according to Claim 4, **characterized in that** the at least two differently treated propellant charge powders are mixed in a ratio such that the mixture thereof behaves like an optimal propellant charge powder having a solids content within the range of intersection of the upper and lower temperature gradient curves, where the temperature gradient curves constitute the representation of the upper and lower temperature gradients and different solids content of the propellant charge powder, and where the lower temperature gradient is defined by the ratio of the maximum pressure at the lower limit of the lower temperature range at -40°C to the maximum pressure at 21°C, p_max(-40°C)/p_max(21°C) and the upper temperature gradient is given by the ratio of the maximum pressure at the upper limit of the above temperature range at 63°C to the maximum pressure at 21°C, p_max(63°C)/p_max(21°C) .

25. Propellant charge powder according to Claim 24, **characterized in that** the influence of each of the at least two propellant charge powders on the common temperature gradients is linear and conforms to the formula PCPa/PCPb = $\Delta b/\Delta a$, i.e. the ratio of PCPa to PCPb is inversely proportional to the differences in the maximum pressure, where $\Delta a$ is the difference between the relative maximum pressure p_max/p_max(23°) for PCPa and the relative maximum pressure p_max/p_max(23°) for the propellant charge powder at the point of intersection of the upper and lower temperature gradient curves, and $\Delta b$ is the difference between the relative maximum pressure p_max/p_max(23°) for PCPb and the relative maximum pressure p_max/p_max(23°) for the propellant charge powder at the point of intersection of the upper and lower temperature gradient curves.

**Revendications**

1. Utilisation d'un solide pour la fabrication d'une poudre de charge propulsive, notamment pour moyen et gros calibre, dans un procédé, selon lequel le solide est incorporé conjointement avec un liquide dans un procédé de mélange et de séchage dans des canaux d'un grain vert et y est durci en un tourillon, le solide étant une substance dont le point de fusion est situé au moins 10 °C, notamment au moins 20 °C, au-dessus d'une température d'utilisation maximale de la poudre de charge propulsive et qui est inerte vis-à-vis du grain vert, **caractérisée en ce que** le solide est ajusté, à des conditions sinon constantes du procédé, dans une plage d'ajustement allant de > 0 à 0,5 % en poids par rapport au poids du grain vert, en utilisant une quantité de solide plus grande pour abaisser plus fortement la pression maximale dans une plage de température supérieure et pour augmenter plus fortement la pression maximale dans une plage de température inférieure d'une plage de température d'utilisation, **caractérisée en ce que** la quantité de solide est choisie dans une plage d'intersection des courbes de gradient de température, qui représentent le gradient de température inférieur et supérieur pour des poudres propulsives ayant une teneur en solide différente, le gradient de température inférieur étant défini par le rapport entre la pression maximale à la limite inférieure de la plage de température inférieure à - 40 °C et la pression maximale à 21 °C, p_max(-40 °C)/p_max(21 °C) et le gradient de température supérieur étant donné par le rapport entre la pression maximale à la limite supérieure de la plage de température supérieure à 63 °C et la pression maximale à 21 °C, p_max(63 °C)/p_max(21 °C).

2. Utilisation selon la revendication 1, **caractérisée en ce que**, pour un procédé combiné, selon lequel aussi bien une graphitisation qu'une formation de tourillon est réalisée, le solide est utilisé en une quantité qui correspond à la somme d'une valeur de quantité de la poudre de charge propulsive nécessaire pour la graphitisation et d'une valeur de quantité située dans la plage d'ajustement.

3. Utilisation selon la revendication 2, **caractérisée en ce que** le solide est choisi en une quantité dans une plage définie par K_min et K_max selon les formules suivantes :

```
M(solide) = K_min x F(surface spécifique) + décalage


M(solide) = K_max x F(surface spécifique) + décalage
```

où

M(solide) est la quantité de solide en % en poids par rapport au poids du grain vert,
F(surface spécifique) est la surface spécifique du grain vert en mm$^2$/g, et
K_min = 0,0009 [g/mm$^2$],
K_max = 0,0014 [g/mm$^2$],
décalage = -0,14.

4. Procédé de fabrication d'une poudre de charge propulsive ayant une dépendance à la température réduite dans une plage de température d'utilisation prédéterminée, comprenant les étapes suivantes :

a) la préparation d'un grain vert gonflable ayant une configuration géométrique prédéterminée, muni d'au moins un canal traversant, qui a une dimension transversale caractéristique d'au plus 0,3 mm et qui débouche sur une surface extérieure du grain vert,
b) la fourniture d'un solide, qui est stable dans la plage de température d'utilisation et inerte vis-à-vis du grain vert, qui a une taille de particule qui peut être insérée dans les canaux traversants, et qui peut être compacté dans le cadre d'un procédé de mélange et de séchage,
c) la fourniture d'un liquide, qui peut faire gonfler le grain vert et qui, à la fin de la fabrication de la poudre de charge propulsive, soit peut être éliminé en totalité, soit est contenu en distribution homogène dans la poudre de charge propulsive,
d) le liquide ne contenant pas plus de 0,5 % en poids, par rapport au poids du grain vert, d'une substance oligomère ou polymère servant de modérateur, et une autre partie du liquide étant un solvant faiblement visqueux,
e) le traitement du grain vert avec le liquide et le solide dans un appareil de mélange pendant une durée prédéterminée,
f) le séchage du grain vert traité pendant une durée prédéterminée,
g) pour l'ajustement de la dépendance à la température de la poudre de charge propulsive, la quantité de solide est ajustée dans une plage d'ajustement allant de > 0 à 0,5 % en poids pour la formation de tourillons, en utilisant une quantité de solide plus grande, à des conditions sinon constantes du procédé, pour abaisser plus fortement la pression maximale dans une plage de température supérieure et pour augmenter plus fortement la pression maximale dans une plage de température inférieure de la plage de température d'utilisation,
**caractérisé en ce que**
h) la quantité de solide est choisie dans une plage d'intersection de courbes de gradient de température, qui représentent le gradient de température inférieur et supérieur pour des poudres propulsives ayant une teneur en solide différente, le gradient de température inférieur étant défini par le rapport entre la pression maximale à la limite inférieure de la plage de température inférieure à -40 °C et la pression maximale à 21 °C, p_max(-40 °C)/p_max(21 °C) et le gradient de température supérieur étant donné par le rapport entre la pression maximale à la limite supérieure de la plage de température supérieure à 63 °C et la pression maximale à 21 °C, p_max(63 °C)/p_max(21 °C).

**5.** Procédé selon la revendication 4, **caractérisé en ce que** le grain vert est revêtu, dans le cadre d'une graphitisation, qui sert à augmenter une conductivité et à éviter une agglutination du grain vert, préalablement à son traitement dans l'appareil de mélange, avec du graphite en une quantité M(solide) accordée à la surface spécifique du grain vert, et **en ce que** la quantité de solide pour la formation des tourillons est choisie dans la plage

$$0 < M(solide) \leq M\_max,$$

où

M(solide) est la quantité de solide en % en poids par rapport au poids du grain vert,
M_max = 0,14 % en poids.

**6.** Procédé selon la revendication 4, **caractérisé en ce que** le solide comprend du graphite, et **en ce que** la quantité de solide donne une somme de la quantité de graphite nécessaire dans le cadre d'une graphitisation, qui sert à augmenter une conductivité et à éviter une agglutination du grain vert, plus la quantité de solide choisie dans la plage d'ajustement, de telle sorte que la quantité de solide soit choisie dans la plage

$$K\_min \times F(surface \; spécifique) + décalage \leq M(solide) \leq$$
$$K\_max \times F(surface \; spécifique) + décalage$$

où

K_min = 0,0009 [g/mm$^2$],
K_max = 0,0014 [g/mm$^2$],
décalage = -0,14,
notamment **en ce que** la quantité de solide est donnée par

$$M(solide) = K\_opt \times F(surface \; spécifique) + décalage$$

K_opt = 0,0012 [g/mm$^2$],
décalage = -0,14.

**7.** Procédé selon l'une quelconque des revendications 4 à 6, **caractérisé en ce que** le grain vert gonflable présente une surface spécifique inférieure ou égale à 600 mm$^2$/g.

**8.** Procédé selon l'une quelconque des revendications 4 à 7, **caractérisé en ce que** le grain vert gonflable présente un rapport entre la longueur et le diamètre d'au moins 1:1.

**9.** Procédé selon l'une quelconque des revendications 4 à 8, **caractérisé en ce que** la quantité de modérateur est choisie dans une plage dans laquelle une courbe de gradient de température supérieur, qui représente le gradient de température supérieur pour des poudres propulsives ayant une teneur en modérateur différente et une teneur en solide constante, présente un minimum.

**10.** Procédé selon l'une quelconque des revendications 4 à 9, **caractérisé en ce que** le solvant est fourni en une quantité qui peut être entièrement absorbée pendant la durée prédéterminée du traitement du grain vert avec le liquide et le solide dans un appareil de mélange.

**11.** Procédé selon l'une quelconque des revendications 4 à 10, **caractérisé en ce que**, pour la détermination de la quantité de solide, au moins trois charges ayant différentes quantités de solide sont traitées, les quantités de solide différant d'au plus 0,2 % en poids par rapport au grain vert.

**12.** Procédé selon la revendication 11, **caractérisé en ce que** les quantités de solide des charges diffèrent d'approximativement 0,1 % en poids.

**13.** Procédé selon l'une quelconque des revendications 4 à 12, **caractérisé en ce que** la quantité de solide est choisie dans la plage d'ajustement de telle sorte que le coefficient de température dans la plage de température inférieure et supérieure soit compris entre 95 % et 105 %, notamment entre 97 % et 103 %.

**14.** Procédé selon l'une quelconque des revendications 4 à 13, **caractérisé en ce que** la quantité de solide est augmentée approximativement proportionnellement de > 0 à M(solide) ; où

$$M(solide) = K\_max \times F(surface\ spécifique) + décalage$$

où

M(solide) est la quantité de solide en % en poids par rapport au poids du grain vert,
F(surface spécifique) est la surface spécifique du grain vert en mm$^2$/g et
K_max = 0,0014 [g/mm$^2$],
décalage = -0,14,
afin d'abaisser la pression maximale relative approximativement proportionnellement dans la plage de température supérieure de 105 % à 95 %, ou **en ce que** la quantité de solide est augmentée approximativement proportionnellement de > 0 à M(solide) = K_max x F(surface spécifique) + décalage, afin d'augmenter la pression maximale relative dans la plage de température inférieure approximativement proportionnellement de 87 % à 105 %.

**15.** Procédé selon l'une quelconque des revendications 4 à 14, **caractérisé en ce que** les canaux présentent une dimension transversale caractéristique de 0,1 à 0,2 mm.

**16.** Procédé selon l'une quelconque des revendications 4 à 15, **caractérisé en ce qu'**une quantité du modérateur est augmentée dans la plage comprise entre 0 et 0,4 % en poids, afin de réduire dans la plage de température inférieure la pression maximale relative de 97 % à 88 %, ou **en ce que** la quantité de modérateur est augmentée de 0 à 0,15 % en poids, afin de réduire dans la plage de température supérieure la pression maximale relative de 105 % à 100 %.

**17.** Procédé selon l'une quelconque des revendications 4 à 16, **caractérisé en ce que** le modérateur est utilisé en une quantité allant de 0,05 à 0,2 % en poids, notamment de 0,1 à 0,15 % en poids.

**18.** Procédé selon l'une quelconque des revendications 4 à 17, **caractérisé en ce que**

a) à partir d'une charge de grain vert extrudé, au moins une première et une deuxième quantité partielle sont traitées dans un procédé de mélange et de séchage déterminé avec une quantité d'essai déterminée de solide et au moins deux quantités d'essai différentes de modérateur, et une plage minimale pour un gradient de température dans la plage de température supérieure est déterminée à partir de cela, et une quantité de modérateur située dans la plage minimale est choisie,
b) à partir de la charge mentionnée de grain vert, au moins deux quantités partielles supplémentaires sont traitées dans le procédé de mélange et de séchage déterminé avec la quantité de modérateur choisie et au moins deux quantités d'essai différentes de solide, et une plage d'intersection des gradients de température supérieur et inférieur est déterminée à partir de cela, et une quantité de solide est choisie, et **en ce que**
c) une quantité de production de la charge mentionnée est traitée dans le procédé de mélange et de séchage déterminé avec la quantité de modérateur choisie et la quantité de solide choisie.

**19.** Procédé selon la revendication 18, **caractérisé en ce que** le procédé de mélange et de séchage comprend les étapes suivantes :

a) le grain vert, le solide et un liquide faiblement visqueux sont ajoutés dans un appareil de mélange,
b) le solide étant une substance dont le point de fusion est situé au moins 10 °C, notamment 20 °C, au-dessus d'une température d'utilisation maximale de la poudre de charge propulsive et qui est inerte vis-à-vis du grain vert,
c) le modérateur étant une substance qui a une bonne compatibilité chimique avec la formulation de base du grain vert et une faible volatilité, c.-à-d. une pression de vapeur à 21 °C de < 10-2 bar,
d) le liquide faiblement visqueux étant un solvant ou mélange de solvants, qui peut dissoudre très bien ou émulsifier finement le modérateur solide ou liquide stabilisant les tourillons, mais qui ne peut toutefois pas ou uniquement très peu faire gonfler le grain vert, et étant utilisé en une quantité de 0,1 % en poids à 5 % en poids, par rapport à un poids du grain vert,

e) le solide étant incorporé successivement dans les canaux du grain vert dans l'appareil de mélange sous rotation sous l'effet d'une pression de masse de poudre exercée par le mélange,

f) et le liquide étant ensuite éliminé du grain vert par évaporation avec traitement continu par l'appareil de mélange,

g) et le grain vert ainsi traité étant séché à température élevée,

h) de telle sorte qu'une partie compactée et ancrée du solide non volatil soit fabriquée dans le canal, qui forme un tourillon principalement constitué par le solide utilisé et le modérateur optionnel, ayant une mobilité dépendante de la température, **en ce que** le tourillon peut résister de manière contrôlée à une onde de pression d'allumage, une épaisseur du tourillon étant ajustée par une durée de traitement dans l'appareil de mélange au sens qu'une durée de traitement plus longue conduit à un tourillon plus épais,

i) de telle sorte qu'à une température d'utilisation plus basse, une mobilité plus élevée soit obtenue qu'à une température d'utilisation plus élevée, de telle sorte que le tourillon permette à une température d'utilisation plus basse une combustion de trou plus importante qu'à une température d'utilisation plus élevée, de manière à obtenir une dépendance à la température réduite d'une combustion de la poudre de charge propulsive.

20. Procédé selon l'une quelconque des revendications 4 à 19, **caractérisé en ce que** le solide comprend une ou plusieurs des substances suivantes : graphite, talc, oxyde de titane, noir de carbone, sulfate de potassium, cryolite de potassium, cryolite de sodium, carbonate de calcium, trioxyde de tungstène, trioxyde de molybdène, oxyde de magnésium, nitrure de bore, acardite, centralite, carbonate de calcium, oxalamide, carbamate d'ammonium, oxalate d'ammonium, acétate-butyrate de cellulose, perchlorate de potassium, nitrate de potassium, nitrate de baryum, oxalate de sodium, fullerènes, ou polymères et copolymères avec ou sans groupes fonctionnels, linéaires, ramifiés ou réticulés.

21. Procédé selon l'une quelconque des revendications 4 à 20, **caractérisé en ce que** le séchage de la poudre de charge propulsive a lieu pendant au moins 60 heures, notamment pendant 3 jours et notamment à 60 °C.

22. Procédé selon l'une quelconque des revendications 4 à 21, **caractérisé en ce qu'**un polyéther ayant des poids moléculaires de 500 à 3 000 Daltons, notamment du polytétrahydrofurane, est utilisé en tant que modérateur.

23. Procédé selon l'une quelconque des revendications 4 à 22, **caractérisé en ce que** l'appareil de mélange reste fermé de manière étanche aux gaz pendant un temps d'action, et **en ce qu'**il est ensuite ouvert pour l'évaporation du liquide pendant un intervalle de temps déterminé dans la plage allant de 5 minutes à 4 heures.

24. Poudre de charge propulsive sous la forme d'un mélange d'au moins deux poudres de charge propulsive traitées différemment (TLPa, TLPb), pouvant respectivement être obtenues par le procédé selon la revendication 4, **caractérisée en ce que** lesdites au moins deux poudres de charge propulsive traitées différemment sont mélangées en un rapport tel que leur mélange se comporte comme une poudre de charge propulsive optimale ayant une proportion de solide dans la plage d'intersection de la courbe de gradient de température supérieur et inférieur, les courbes de gradient de température représentant le gradient de température supérieur ou inférieur à une teneur en solide différente de la poudre de charge propulsive, et le gradient de température inférieur étant défini par le rapport entre la pression maximale à la limite inférieure de la plage de température inférieure à - 40 °C et la pression maximale à 21 °C, $p\_max(-40\,°C)/p\_max(21\,°C)$ et le gradient de température supérieur étant donné par le rapport entre la pression maximale à la limite supérieure de la plage de température supérieure à 63 °C et la pression maximale à 21 °C, $p\_max(63\,°C)/p\_max(21\,°C)$.

25. Poudre de charge propulsive selon la revendication 24, **caractérisée en ce que** l'effet de chacune desdites au moins deux poudres de charge propulsive sur les gradients de température communs est linéaire et correspond à la formule $TLPa/TLPb = \Delta b/\Delta a$, c'est-à-dire que le rapport entre les quantités de TLPa et TLPb est inversement proportionnel aux différences de pression maximale, $\Delta a$ étant la différence entre la pression maximale relative $p\_max/p\_max(23\,°C)$ de TLPa et la pression maximale relative $p\_max/p\_max(23\,°C)$ de la poudre de charge propulsive au point d'intersection des courbes de gradient de température supérieur et inférieur, et $\Delta b$ étant la différence entre la pression maximale relative $p\_max/p\_max(23\,°C)$ de TLPb et la pression maximale relative $p\_max/p\_max(23\,°C)$ de la poudre de charge propulsive au point d'intersection des courbes de gradient de température supérieur et inférieur.

**Fig. 1**

**Fig. 2**

Fig. 3

Fig. 5

Fig. 6

DBD-E-WS/TLP L 15190 /Block 41 – TV1 - /Probe 11/Schnitt

Fig. 7

**Fig. 8**

# Fig. 9a

# Fig. 9b

# Fig. 4

**Fig. 10a**

**Fig. 10b**

**Fig. 11**

EP 2 723 700 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0290718 A1
- DE 2520882 C1
- FR 1300941
- US 3506505 A
- FR 1205433
- EP 1031548 A1
- US 7051658 B

47